# EUROPEAN PATENT SPECIFICATION

(11) **EP 0 481 784 B1**
(45) Date of publication and mention of the grant of the patent: **28.05.1997**
(21) Application number: 91309579.0
(22) Date of filing: 17.10.1991
(51) Int. Cl.: G06F 17/24, G06F 17/22

(54) **Form automation system**
Automatisierungssystem von Formularen
Système d'automatisation de formulaires

(30) Priority: 19.10.1990 US 599224; 19.10.1990 US 598883
(43) Date of publication of application: 22.04.1992
(73) Proprietor: MOORE BUSINESS FORMS, INC., Grand Island New York 14072-1697 (US)
(72) Inventor: Yaksich, Mary Jo, Grand Island NY 14072 (US); Sprague, Darlene R., Grand Island NY 14072 (US); Bevilacqua, Samuel D., Tonawanda NY 14150 (US); Andersen, Andrew C., Williamsville NY 14221 (US); Hoellig, Susan M., Cheektowaga, NY 14227 (US); Carr, Donald S., Kenmore, NY 14223 (US); Yarwood, Donna L., Amherst NY 14228 (US); Hoholik, Anthony P., Garnee, Illinois 60031 (US)
(74) Representative: Spence, Anne

(56) References cited:
- EP-A- 0 388 579
- GB-A- 2 202 064
- BUSINESS FORMS & SYSTEMS vol. 26, no. 10, May 1988, page 42 D. KERRIGAN 'Electronic Form Systems Replacing Paper Forms'
- PROCEEDINGS OF THE 14TH INTERNATIONAL COMPUTER SOFTWARE AND APPLICATIONS CONFERENCE 1990, pages 255 - 260 , XP0223616 T.J. FAN ET AL. 'FormPlus: A Form Authoring Toolkit'
- PATENT ABSTRACTS OF JAPAN vol. 12, no. 290 (P-742)August 1988 & JP-A-63 066 632

## Description

### BACKGROUND AND SUMMARY OF THE INVENTION

Conventionally, large organizations that use large volumes of many different types of business forms have the forms printed in paper form internally or by a manufacturer of business forms, and then store the forms in one or more warehouses for distribution to each of the geographically remote user locations of that organization. Distribution costs can be significant, especially if the locations are widely disseminated, and there can be significant costs associated with the warehousing, inventory and obsolescence of preprinted paper forms. If attempts are made to do away with inventorying of preprinted forms, electronic forms may be stored for printing of paper forms on demand, however typically systems capable of electronic storage and retrieval are marketed by vendors supplying only one type of equipment, so that the systems are not versatile enough to be utilized even within a single location of the organization unless all printers and related equipment at that location are compatible. Further, such systems do not have conventional preprinted forms manufacture integrated therewith, and are therefore limited.

Also, when new forms are required, they are typically designed at a location where the need for the form is first recognized. The newly designed form may, or may not, become part of the forms package available to other interested parts of the organization, and even if it ultimately becomes available, may go through a redundant design sequence before being adopted by the organization headquarters. Usually, no centralized forms facility is provided, requiring redundant entry and processing of information in electronic or hard copy format.

According to the present invention, a system and method are provided which overcome the major elements of the problems identified above. According to the present invention, it is possible for a large consumer of forms, having numerous geographically remote user locations with varying needs for many different types of forms, to eliminate or minimize the warehousing, inventory, and obsolescence costs associated with preprinted forms, to minimize the number of preprinted forms utilized, to minimize redundant entry and processing of information, and to provide centralized design, control and management of electronic forms. According to the invention, the same form may be printed at a number of geographically remote locations on different types of printers, the forms can be distributed and updated automatically and efficiently, and if a form is needed but not readily reproducible on in house equipment, an order for the form may be transmitted to a vendor's manufacturing facility or facilities (e.g. located geographically proximate the remote user locations to be served) for production and distribution.

The system according to the invention comprises as basic components first and second computer means, which comprise a central library facility (CLF), and a forms automation platform (FAP). Two way communication is provided between the CLF and FAP by appropriate communications software and protocol modules. The CLF is typically located at a centralized facility of the forms consumer (customer), while the FAP is typically located at a centralized facility of the vendor (forms manufacturer), although it may be located wherever convenient for performing the desired tasks to a particular customer's satisfaction. A third computer means, typically a PC, is located at end user sites to communicate with the CLF and receive distributed forms therefrom.

The primary functions that take place at the FAP are: electronic forms design (at a centralized location), using one or more conventional design packages such as PERFORM, F3, JETFORM, or MECA III; creating, maintaining, updating, and ensuring the integrity of a display image library; logically associating print formats and distribution profile information received for each form within the display image library; converting display images to print formats based on the distribution profile specified for each form; downloading the print images to the CLF; executing electronic forms update processing; communication with the CLF; and communication with other print facilities (e.g. a manufacturer of business forms, and internal print shop, or the like). A release date is entered at the FAP, and managed at the CLF.

A FAP may service multiple CLFs and must then associate specific forms with specific CLFs. The FAP will generate print formats based on those printers supported by the customer to which the forms will be distributed.

The major functions of the CLF are file management and distribution, including the collection, assimilation and output of management information. The CLF also logically associates formats (print formats) and distribution profile information received for each form. The CLF electronically stores all of the forms previously supplied by the FAP, and effects transmission thereof to remote locations having use for them (the end user interface software), and the CLF, or the end user interface under control of the CLf, effects display or printing of forms -- regardless of exact terminal printer configuration -- at the remote user locations. The CLF collects and downloads the form images to the end users (ie the third computer means) on a release date, after polling of the computer (eg within the CLF) in which the images are located. This may be done completely automatically, or after manual verification.

The document "Electronic Form Systems Replacing Paper Forms" by D Kerrigan, published in Business Forms & Systems vol 42, number 10, May 1988, page 42 describes an electronic forms system that allows a form to be set up electronically, stored and printed. This type of system is similar to those mentioned as conventional design packages at page 3, second paragraph above. This document also mentions the need for a forms management system, which includes storage, inventory, control and distribution.

GB-A-2202064 also describes a similar electronic form system. Patent abstracts of Japan, volume 12, number 290, (P-742), August 1988 describes a system that controls the form production process meant for a single printing process.

Each document essentially describes the means by which an electronic form image may be created and stored on a computer.

The present invention is set out in the attached claims. Thus, the invention provides a method of handling business forms, comprising the steps of:
(a) creating a plurality of business forms in electronic format;
(b) maintaining the business forms created in step (a) in a display image format to which variables may be added for variable image data;
(c) electronically transmitting the display image formats to a remote site;
(d) merging the display image format with the variable image data and converting the display image formats to desired printer formats;
(e) simultaneously transmitting the printer formats to each of a plurality of compatible printers; and
(f) printing out forms on the compatible printers.

The present invention also relates to an apparatus for the production of business forms, comprising:
first computer means comprising a forms automation platform means, for establishing each of a plurality of business forms in electronic format, for determining print format information for said forms, and for converting said electronic format to appropriate print formats;
second computer means at each of a plurality of end user sites, including means for inputting variable information to be contained in the business forms to be produced;
third computer means comprising a central library means for processing requests for distribution to effect electronic distribution of forms and for providing information about print formats and distribution profiles to said second computer means which includes a display and an inputting means for inputting commands regarding the specific business form or forms requested, and communication means for providing communication between certain forms automation platform means and central library means, and between said central library means and said end user sites.

More preferred features of the invention are set out in the dependent claims.

It is a primary object of the present invention to provide for the effective and efficient creation and production of electronic and preprinted business forms for large consumers of forms having multiple locations. This and other objects of the invention will become clear from an inspection of the detailed description of the invention, and from the appended claims.

### BRIEF DESCRIPTION OF THE DRAWINGS

FIGURE 1 is a schematic block diagram comprising a high level functional overview of an exemplary system which is implemented according to the invention;
FIGURE 2 is a block diagram showing one embodiment of a more detailed interrelationship between the components of the FIGURE 1 system;
FIGURE 3 is a block diagram showing an overview of the interconnections between the central library facility (CLF), forms automation platform (FAP), and end users;
FIGURE 4 is a schematic view of the FAP;
FIGURE 5 is a schematic like that of FIGURE 4 for a host computer utilizable with the CLF and the FAP;
FIGURE 6 is a data model diagram for data structures provided by the FAP, for detailed implementation according to the invention;
FIGURE 7 is a data flow diagram of exemplary program control processes performed by the FAP, for detailed implementation according to the invention;
FIGURES 8a-8e are schematics giving lower level breakdowns of the major elements of FIGURE 7;
FIGURE 9 is a flow diagram illustrating access to the CLF from the FAP;
FIGURE 10 is a schematic diagram illustrating exemplary components of the CLF of the system of FIGURES 1 and 2;
FIGURE 11 is a CLF data model diagram, for detailed implementation according to the invention;
FIGURE 12 is a schematic showing the CLF data base relationships, for detailed implementation according to the invention;
FIGURES 13a-13i provide a schematic structure chart for the CLF, for detailed implementation according to the invention;
FIGURE 14 is an exemplary flow diagram for releasing forms from the CLF to end user sites based upon a distribution profile;
FIGURE 15 is an exemplary flow diagram for transmitting an electronic form, initiated at the CLF; and
FIGURE 16 is an exemplary flow diagram for transmitting a print request, initiated at the CLF.

### DETAILED DESCRIPTION OF THE DRAWINGS

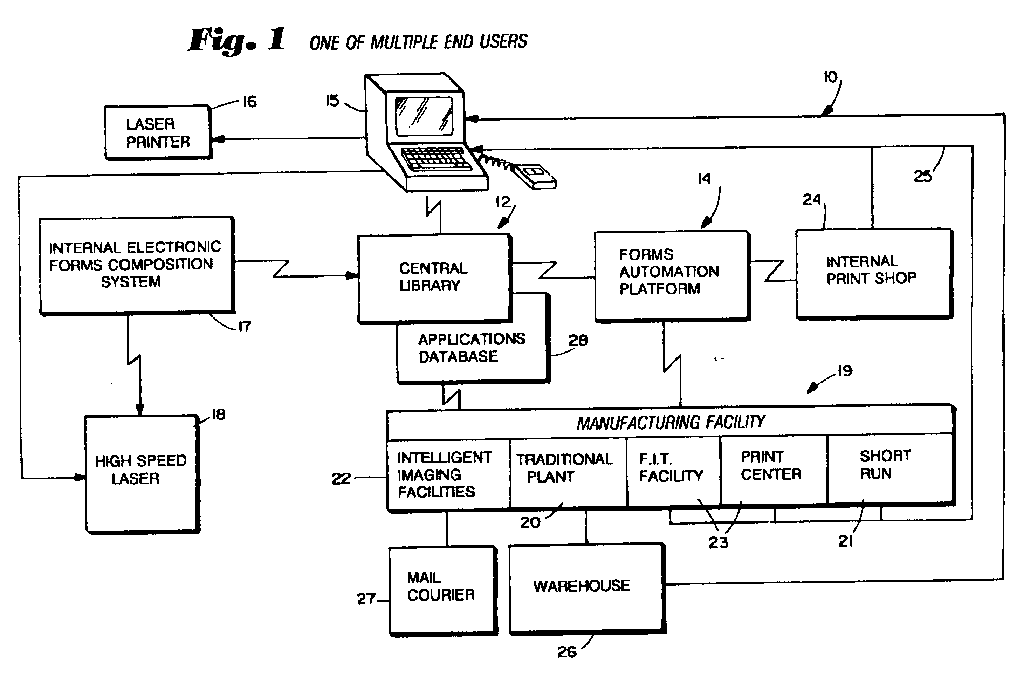

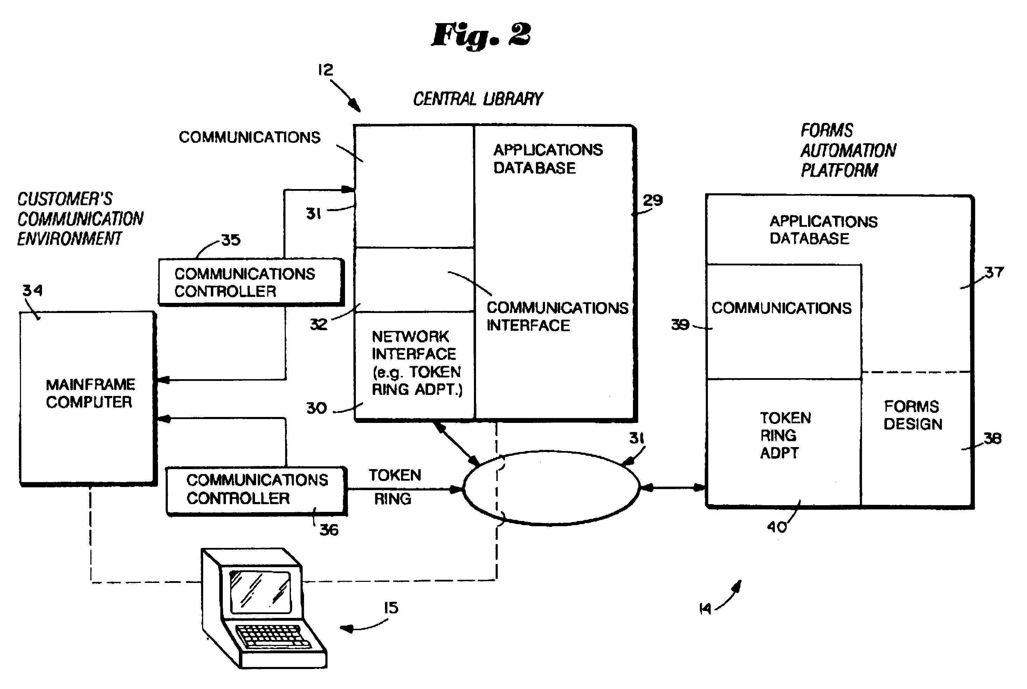

The forms automation system according to the present invention is illustrated generally by reference numeral 10 in FIGURES 1 and 2. The forms automation system 10 will be utilized by those consumers of business forms who have large numbers of business forms (both type and amount) that will be utilized at a number of geographically remote use locations. The system 10 is designed to be marketed by a business forms manufacturing company that has conventional forms production facilities, although it could be marketed by a wide variety of different types of companies. The system 10 is particularly useful when it it implemented in such a way that forms may be produced directly at the use locations, or in a conventional manufacturing facility, depending upon the construction of that particular form, the extent of its distribution, the quantity of forms utilized, and the like.

In this description, the term "vendor" or "manufacturer" when utilized refers to the entity providing the forms automation system according to the invention, typically a conventional business forms manufacturer. The term "customer" or "user" refers to the vendor's customer, namely the organization that has a plurality of geographically remote use locations, and consumes the business forms (also encompassing multiple departments that are remote within the same building, for example).

The major objectives of the system 10 are to provide for the centralized design of business forms, the centralized management and distribution of electronic and pre-printed (paper) forms, the co-existence of the same form in both paper and electronic formats, and the flexibility to meet the user's requirements. The major components of the system 10 comprise computer means providing the central library facility (hereinafter denoted by the acronym "CLF") 12, and computer means providing the forms automation platform (hereinafter denoted by the acronym "FAP") 14. The CLF 12 is preferably located in one of the customer's facilities (e.g. the same facility that has the main frame computer 34). This also typically is one of the use locations. The FAP 14 may, under some circumstances, be located at a customer's facility, but more typically is located at one of the vendor's facilities. In any case, the CLF 12 and FAP 14 provide for centralized design, management, and distribution of business forms. Appropriate conventional communications components are provided to inter-relate the CLF 12 and FAP 14, and to communicate with a variety of other stations.

In the schematic illustration in FIGURE 1, the end user station 15 comprises a plurality of geographically remote use locations, each of which may have a printer -- such as a laser printer 16 -- associated therewith. A computer, such as a PC, is provided at each of the use stations 15, as schematically illustrated in FIGURES 1 and 2, interfaced (two way communication) with the CLF 12. The PC and CLF may utilize IBM's OS/2 (version 1.2), or an equivalent multi-tasking operating system.

The CLF 12 may also control an internal electronic forms composition system 17 maintained by the organization having the geographically remote use locations 15, which may in turn control a high speed printing device, such as a high speed laser printer 18, or other non-impact printer. Both the CLF 12 and FAP 14 may also provide information to a standard business forms manufacturing facility, shown generally by reference numeral 19, for producing business forms. For example, the CLF 12 could access facility 19 through an external applications data base 28. Different types of manufacturing facilities encompassed by facility 19 may -- for a large conventional business forms manufacturer such as Moore Business Forms, Inc. -- include a traditional plant 20, a short run facility 21, an intelligent imaging facility 22, or other types of facilities 23. Also, the FAP 14 may control an internal print shop 24 at the FAP 14 location, for providing camera ready copy. The printing facilities 21, 23, and 24 deliver printed forms -- as indicated by line 25 -- to the use locations 15 via a motor vehicle or the like (e.g. a common carrier), while the traditional plant 20 supplies paper forms to the use locations 15 through a warehouse 26 run by the forms manufacturer, a contractor, or another. The imaging facilities 22 typically provide paper forms to the use locations 15 via mail or a courier service 27 or the like.

As illustrated schematically in FIGURE 2, the CLF 12 includes an internal applications data base 29 (and associated database access mechanisms), and includes as part of the preferred embodiment communication facilitating components thereof, such as a vendor supplied token ring (or other network adapter) 30 communicating with an (e.g. token ring) electronic data network 31. The applications data base 29 may have as its data model "SQL", a commercially available package, such as that sold by IBM with its OS/2 (version 1.2) system. A conventional communications interface component 32, such as an IBM 3270 standard protocol interface, is also preferably provided, as is the communications protocol module 33. The CLF 12 may be provided on main frame computer 34 directly at a customer (user's) location, with a front end processor 35 -- such as an IBM 3745/3720 -- interconnected between the module 33 and the computer 34, and a front end processor 36 -- e.g. an IBM 3745/3720 -- connected between the main frame computer 34 and the token ring network 31.

The forms automation platform 14 includes a commercially available applications database 37 (such as that sold by Oracle Systems Corp. under the trademark "Oracle"), with a component thereof 38 providing custom design of the forms. The forms design function is preferably accomplished utilizing a compatible commercially available primary design software package, such as Perform, sold by Delrina Technology, JETFORM, sold by Indigo, or MECCA III ("DOCS"), sold by Amgraph. A communications protocol module 39 is also utilized (such as an IBM SDLC), while the token ring adapter 40 is provided for optional communications over token ring network 31.

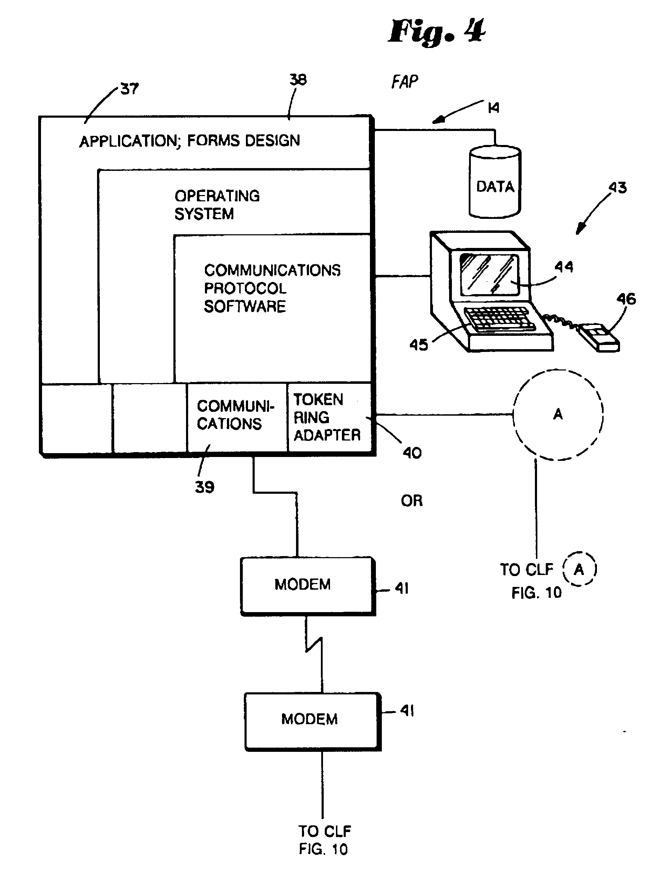

One of the primary functions of the FAP 14 is to provide for the centralized design of business forms. It is the entry point into the system 10, and contains software that controls the execution of the other processes within the system 10. As earlier indicated, forms design packages are associated therewith, such as the DOCS, or PERFORM, packages. The forms may be designed elsewhere and downloaded to the FAP 14 prior to transmission to the CLF 12. The FAP 14 communicates with the CLF (preferably two way) by modems 41, or a token ring, or networked protocols defined by the IEEE 802.5 or 802.2 standards. A terminal 43 (see FIGURE 4), including a display screen 44, and inputting means such as a keyboard 45 and/or mouse 46, are provided as a human interface to the FAP 14. Other technologies could also be utilized, such as scanners and digitalization apparatus.

In addition to the forms design packages, the FAP 14 contains application software for a number of other functions. A file management function manages display (source) images for all released forms and forms that are scheduled for up-date/release. This software creates, maintains, up-dates and ensures the integrity of the display image library.

A user friendly interface function is provided by software that allows the operator to be queried for information regarding print formats and distribution profiles for each form. This information is logically associated with the display image within the file management system function so that whenever an electronic form is created or up-dated, it will have the necessary components. The forms administrator at the FAP 14 will obtain the following information for each electronic form created or up-dated: form identification; form description; form processing (e.g. new/update); the design software used to design the form; the release date; the security level; the distribution profile (user sites, output devices/sites, generic customer environment information); the paper base production requirements (e.g. manufacturing facilities, or internal print shops for camera ready copy); and variable data field encoding.

The FAP 14 also converts the display images to appropriate print formats based upon the distribution profile specified for each form. This is typically done right in the forms design package 38 itself (e.g. in PERFORM). The operator inputs what printer formats the form is to be provided in, and the package 38 does the necessary formatting (either single or multiple). That is, if a form is to be distributed at a first location having a first printer with a first printer format, and to a second geographically remote user location, having a second printer with a second printer format (e.g. a different manufacturer for the second printer than the first printer), the display images must be converted to print formats for both the first and second printers. That is, the same electronic business form will exist in different formats. The print image files will be validated for existence, having been previously formatted based upon the customer profile, and downloaded to the CLF 12. The CLF 12 may effect distribution on a scheduled release date. Of course this is practiced with any number of printers.

The system 10 may have any one of the following output formats: display image; encoded display image; print format; and production output. The display image format may require no conversion, and -- for example -- can be used to merely display the form on a screen (e.g. the screen 44 of the CLF 12). For the encoded display image format, the operator at the FAP 14 has encoded the variable data fields, and this format is used for merging variable data with the electronic form in a conventional manner via a batch process at the user site. This format, too, can be sent to a display terminal (e.g. 44). Print formats should be able to support output to postscript printers, as well as for printers for all other major manufacturers such as IBM, Hewlett Packard, Xerox, etc. The production output formats will support an output for a manufacturing production facility 19, via a PC to PC (eg DOCS to DOCS) transmission. This output may be used to produce camera ready copy. This will insure the most updated form at all times. It also will provide an output to control an internal print shop 24 for producing camera ready copy.

As earlier indicated, the FAP 14 communicates with the CLF 12 via modems 41, token ring 31, or the like. Print images and form profiles are transferred to the CLF 12, and update processing within the CLF 12 is scheduled. Display and print images for updated forms will be downloaded to the CLF 12, and appropriate file management functions, such as archiving, will be scheduled and performed.

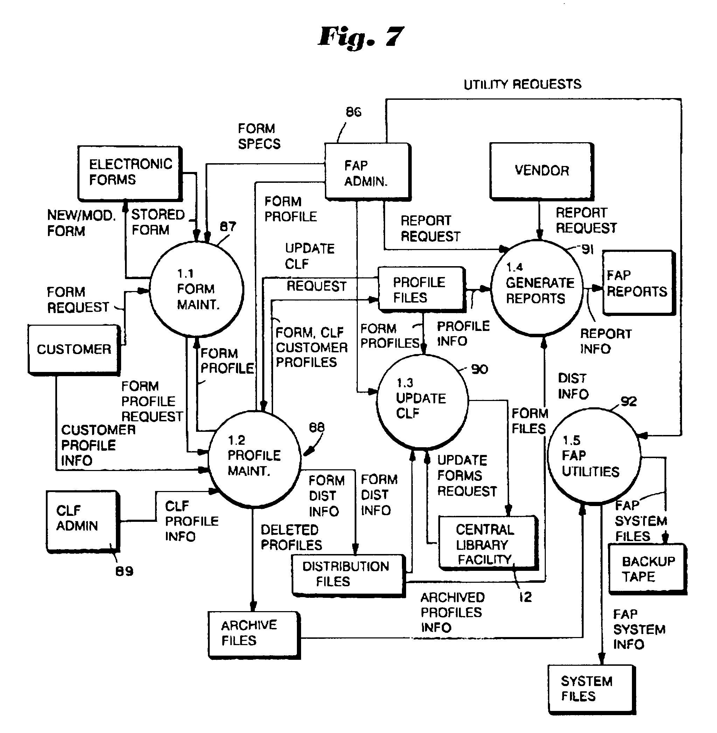

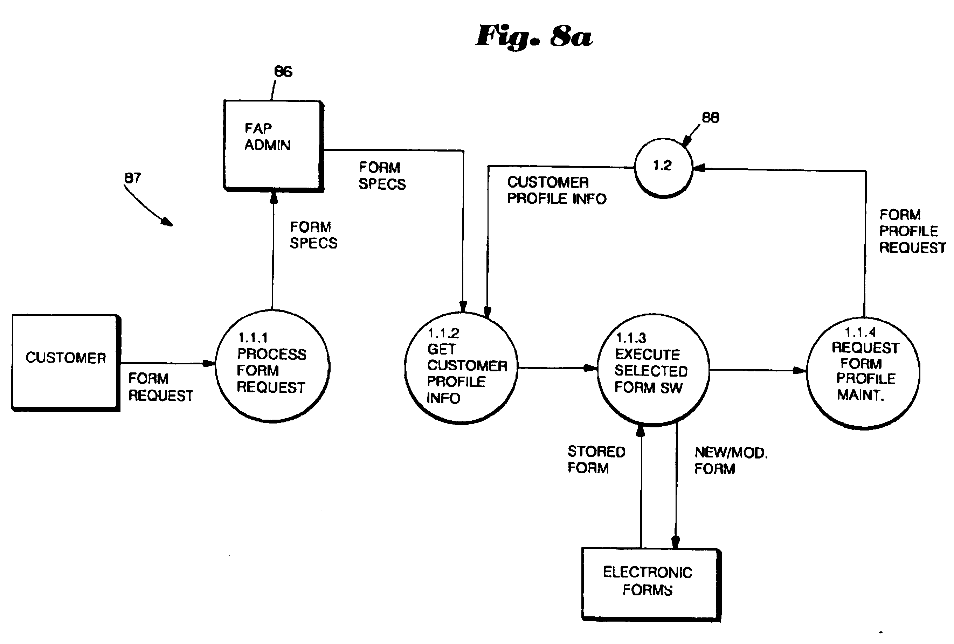

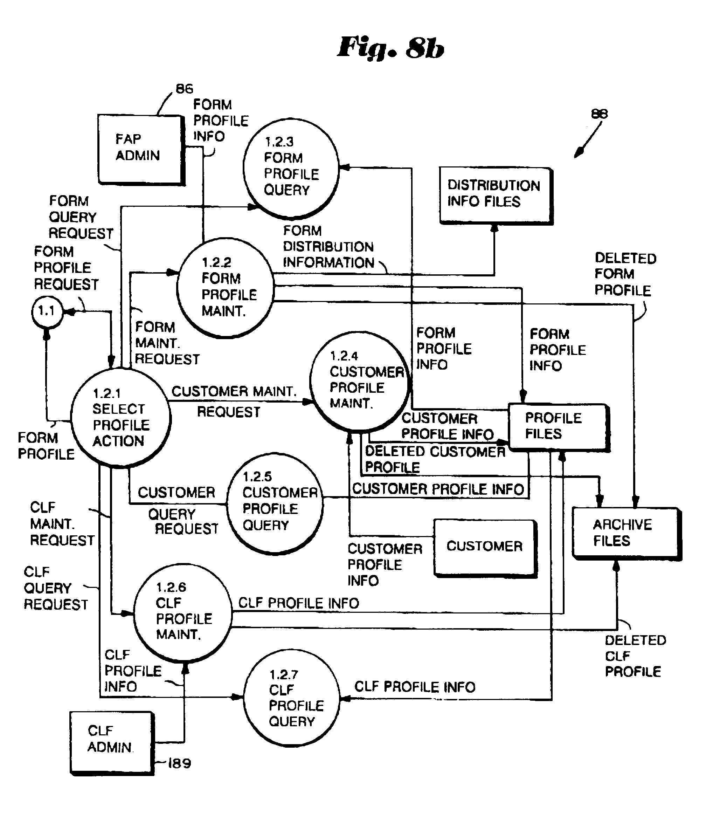

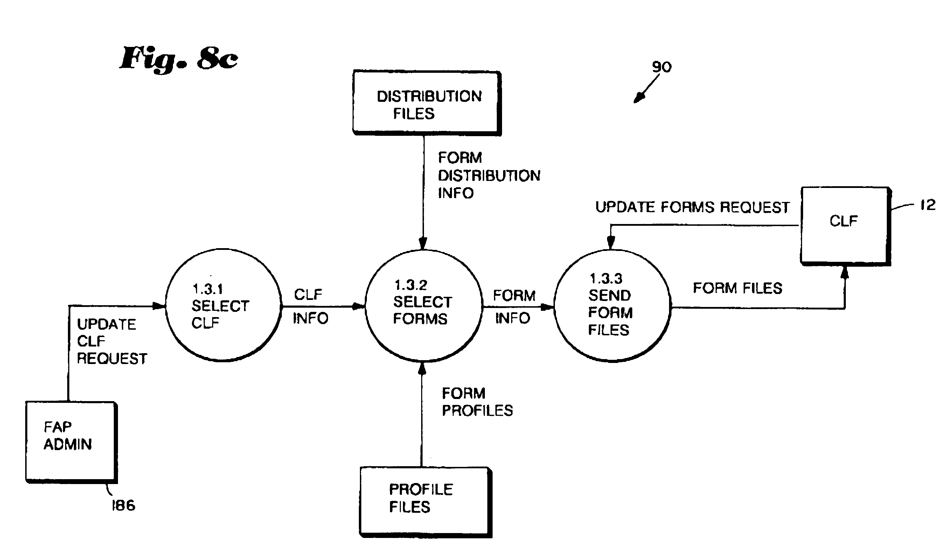

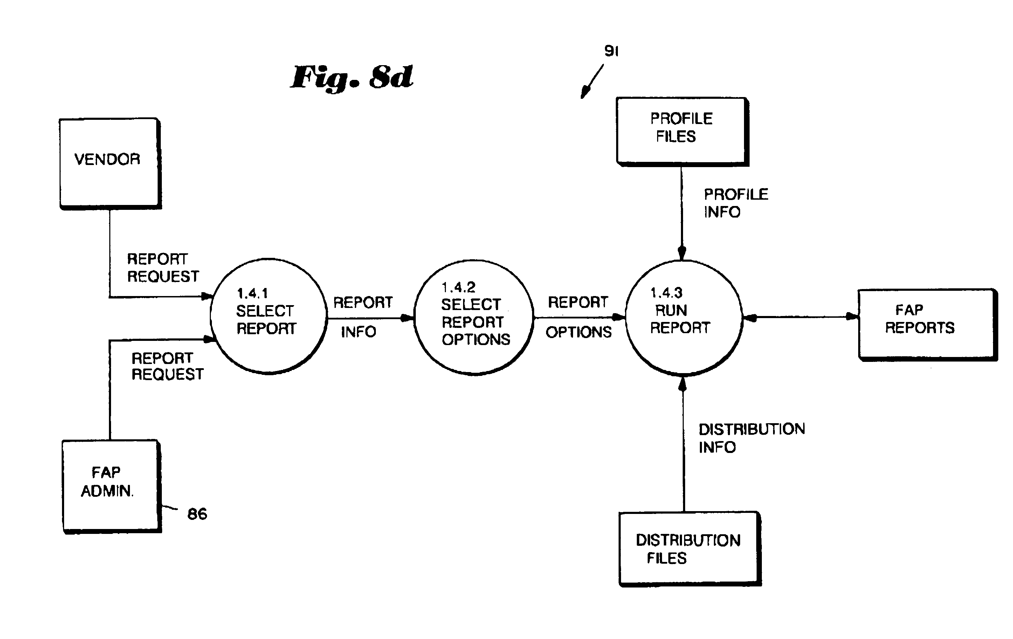

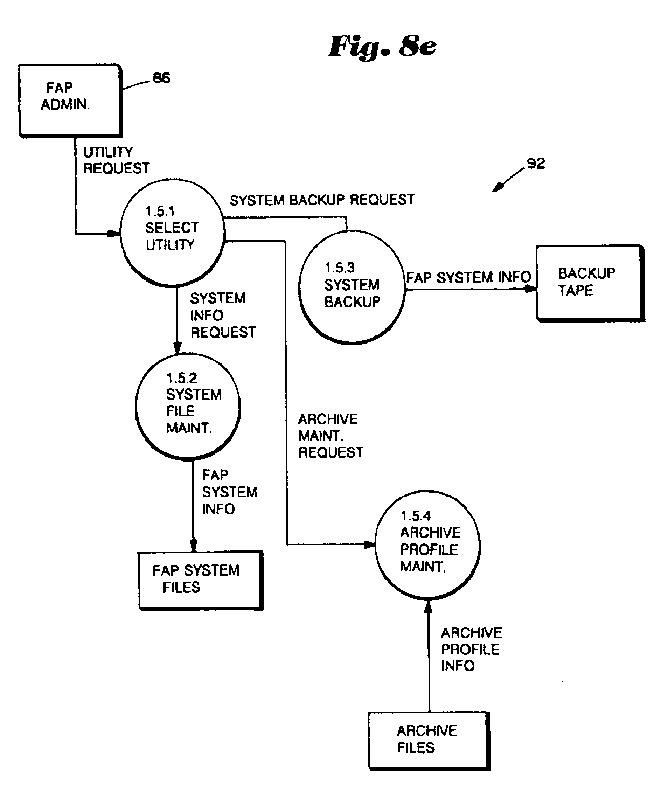

Major components of the data flow diagram of FIGURE 7 include the FAP administrator software 86, form maintenance process 87, profile maintenance process 88, CLF administrative software 89, CLF update process 90, a report generation process 91, and the FAP utility process 92. FIGURE 8a illustrates a detail data flow diagram for the form maintenance process 87. FIGURE 8b illustrates a detail data flow diagram for the profile maintenance process 88. FIGURE 8c illustrates detail data flow diagram for the CLF update process 90. FIGURE 8d illustrates a detail data flow diagram for the report generation process 91; and FIGURE 8e illustrates a detail data flow diagram for the FAP utility process 92.

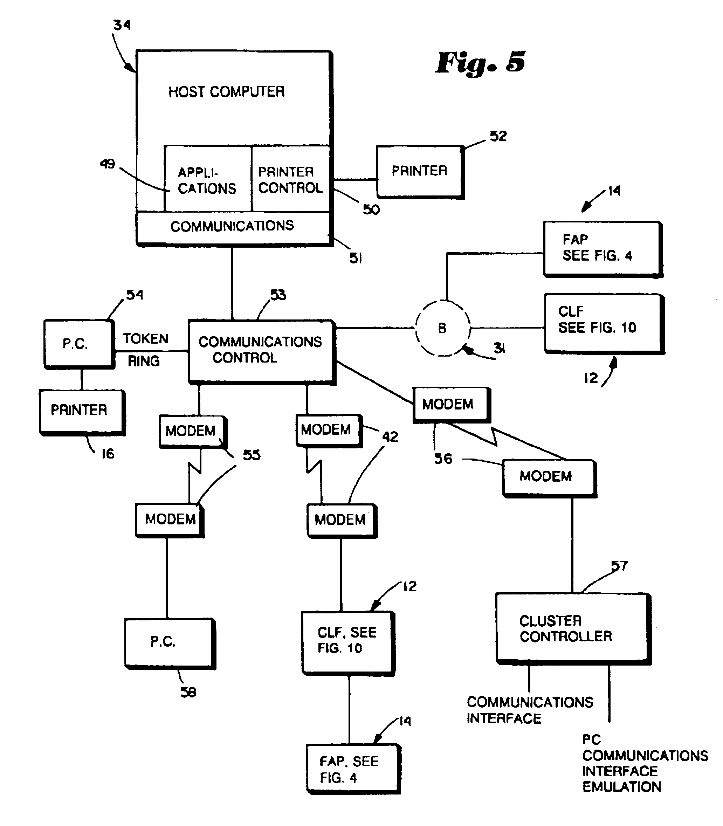

FIGURE 5 provides a schematic of a conventional host computer 34 and its interrelationship to other components in a typical configuration. The computer 34 may include applications software 49, a printer control 50, and a communications module 51. A printer 52, such as an IBM 3800, is controlled by the printer controller 50 software, e.g. JES AND AFP, both by IBM. Other printers 52, such as the Xerox 9700, of course may also be utilized. The communications module 51, such as an IBM SNA, is interconnected with a communications controller 53, such an an IBM 37XX FEP. A personal computer 54 may be interconnected to the controller 53 via a token ring or other link, and control a locally attached printer 16, or access other printers in the network. The controller 53 is connected through modems 55 to other PCs 54 (at sites 15). Controller 53 can communicate through the token ring 31 with the CLF 12 and FAP 14, or through modems 42 with the CLF 12. Communications may also be provided optionally through modems 56 with a cluster controller 57 -- such as an IBM 3174/3274 -- which in turn is interconnected with a communications interface (such as an IBM 3270) and a PC (such as a 3270 emulation PC). PC 58 may function as a print/file server to support multiple devices.

The controller 53 (typically located on host 34) will run a version of a network control program (e.g. OS/2 version 1.2 from IBM) that supports peer to peer networking. The PC 54 has a Moore Forms Print Server. Therefore, CLF 12 communicates directly with PC 54 through controller 53 automatically, without "bothering" host 34.

The major menu items provided to the user of the FAP 14 are provided on menu screens. The main menu will allow selection of the forms design program, updating the central library with selected forms, defining a form profile for a current form, defining form fields for a current form, customer profile information, CLF profile information, and a customer profile query. Many others may also be provided. Typical screens for each of these above specific menu items are as follows:

For forms design, a list of the design software defined for a particular customer will be displayed, e.g.:

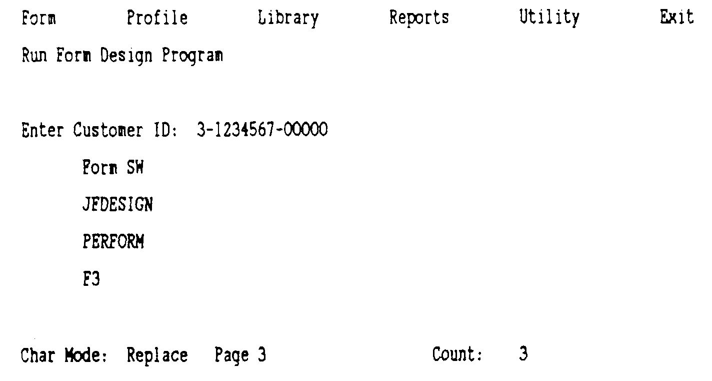

For downloading information (e.g. forms and release dates) to the CLF 12:

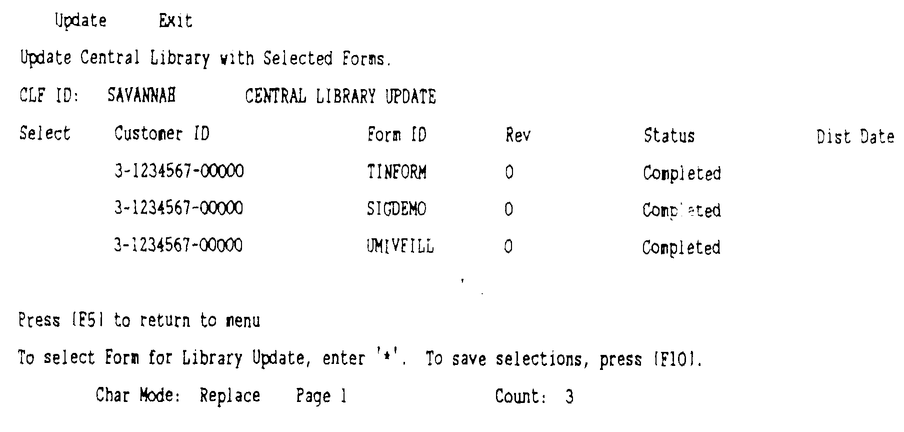

For encoding a variable data information field, which is sent to the CLF 12 and verified there:

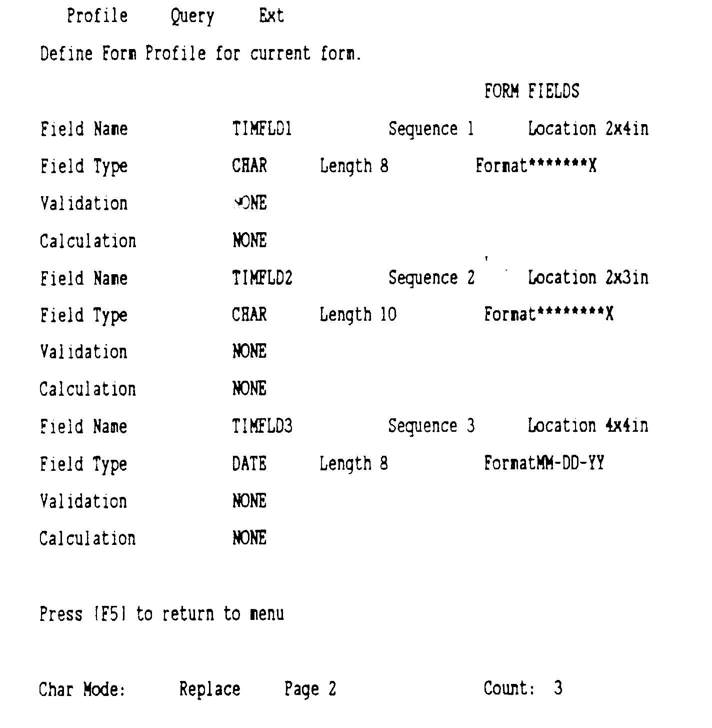

For illustrating form profile information for a form which has been created:

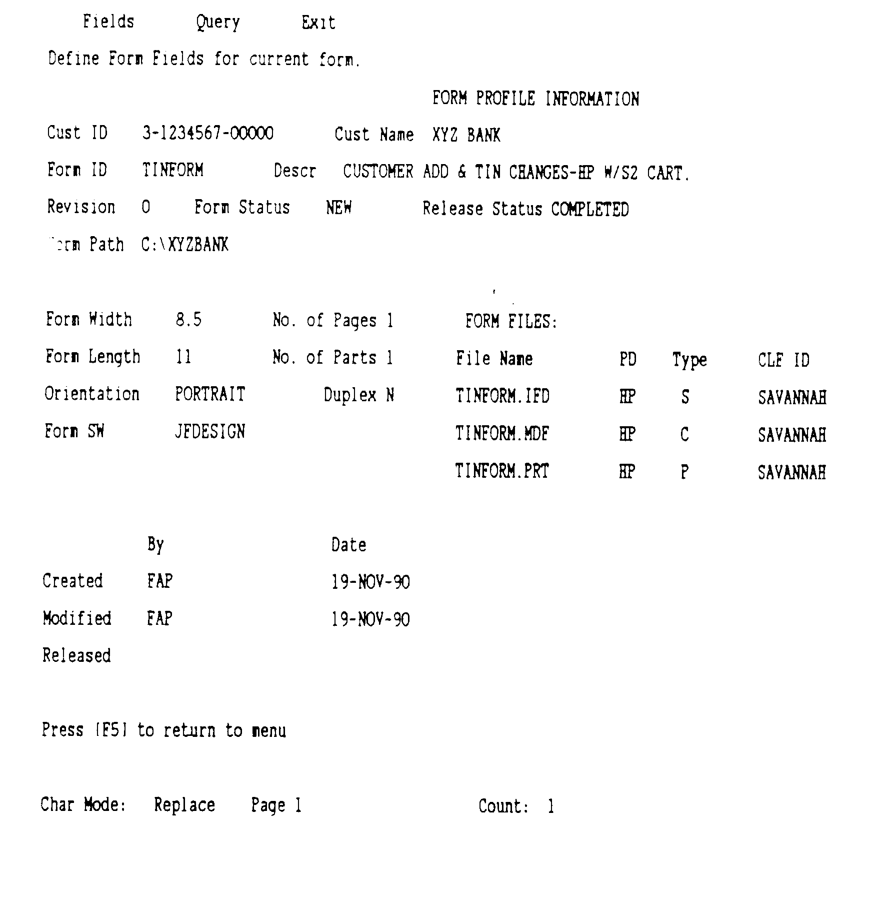

An exemplary screen for inputting data, e.g. customer profiles, is:

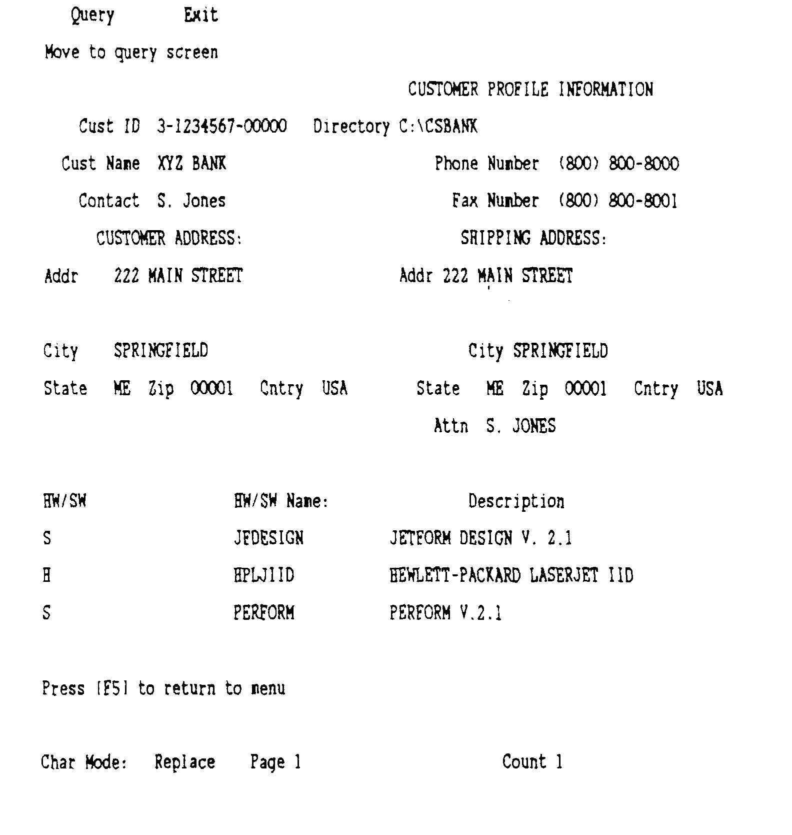

An exemplary screen for inputting CLF profile information is:

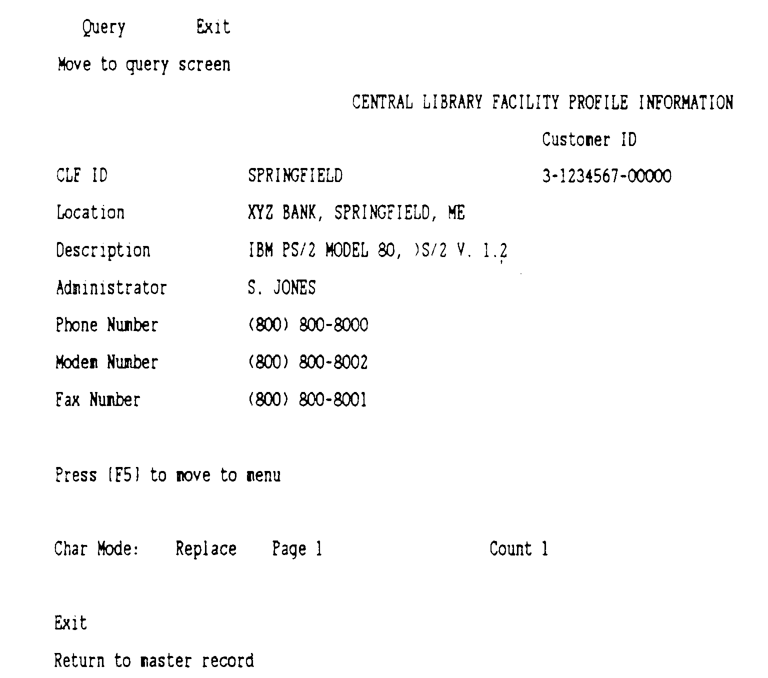

An exemplary customer profile query screen is:

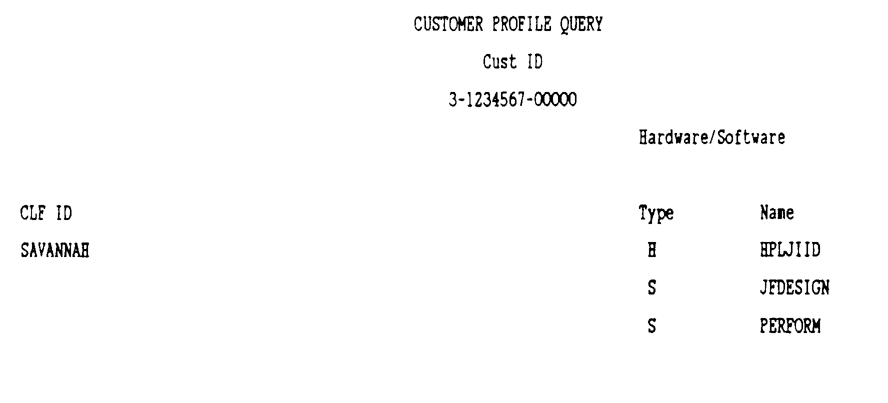

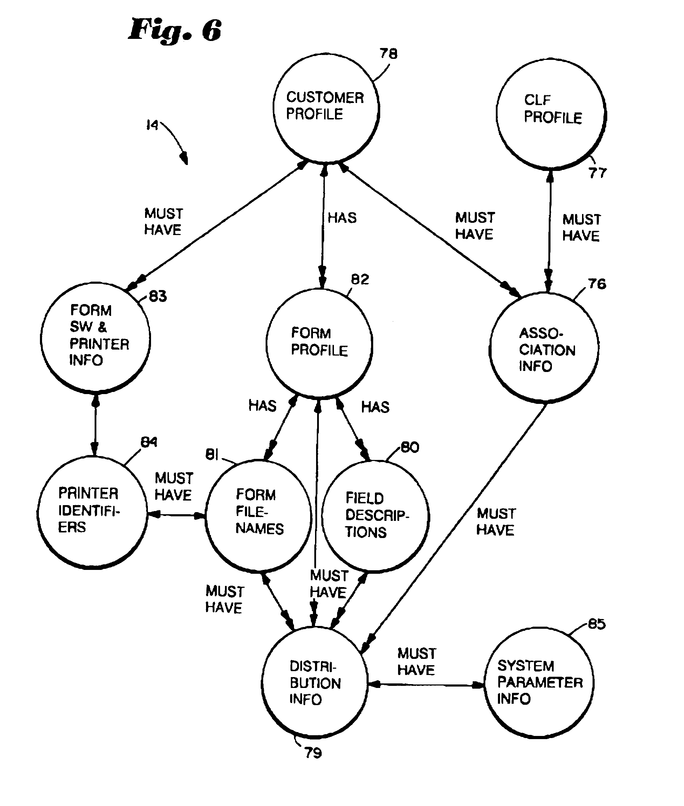

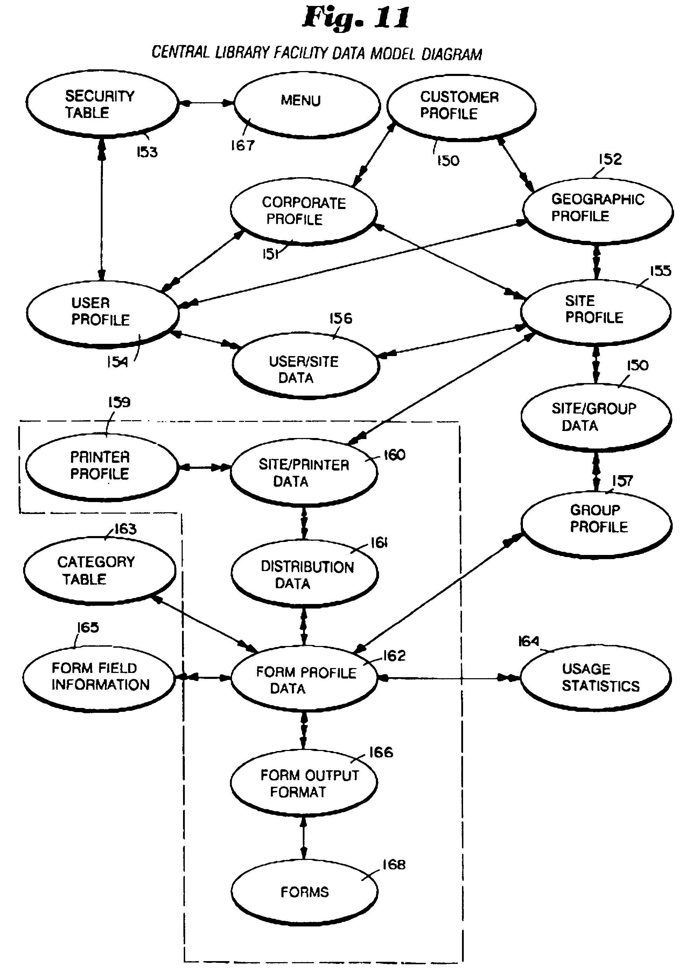

The data model diagram for FAP 14 is provided in FIGURE 6. The same conventions are utilized here and as in the CLF data model diagram of FIGURE 11. The connections in FIGURE 6 refer to the relationship between the two entities; i.e. two entities connected by an arrow with one arrow head at one end and a double arrow head at the other end are said to have a "one-to-many" relationship. In a relational database construct, this means that for each parent record in the first entity there may/shall exist many child records in the second entity. A glossary of the individual tables of the FAP 14 illustrated in FIGURE 6 is as follows:

| FORMS AUTOMATION PLATFORM TABLES | | |
|---|---|---|
| DATA ENTITY NAME | ALIAS | Ref. # |
| ASSOCIATION INFO | CUSTOMER/CLF ASSOCIATION TABLE | 76 |
| CLF PROFILE | CLF MASTER TABLE | 77 |
| CUSTOMER PROFILE | CUSTOMER MASTER TABLE | 78 |
| DISTRIBUTION INFO | FORM DISTRIBUTION TABLE | 79 |
| FIELD DESCRIPTIONS | FORM FIELD DEFINITION TABLE | 80 |
| FORM FILENAMES | FORM DISTRIBUTION FILENAMES TABLE | 81 |
| FORM PROFILES | FORM MASTER TABLE | 82 |
| FORM SW & PRINTER INFO | FORMS SW/PRINTERS TABLE | 83 |
| PRINTER IDENTIFIERS | FORM FILE PRINTER TYPES TABLE | 84 |
| SYSTEM PARAMETER INFO | FAP SYSTEM PARAMETER TABLE | 85 |

Each file typically has a number of elements, either of the number or character type, having predefined lengths. A listing of the elements, type (characters or numerical), field length, and description of the elements, for each of the tables 76-85 of FIGURE 6 is as follows:

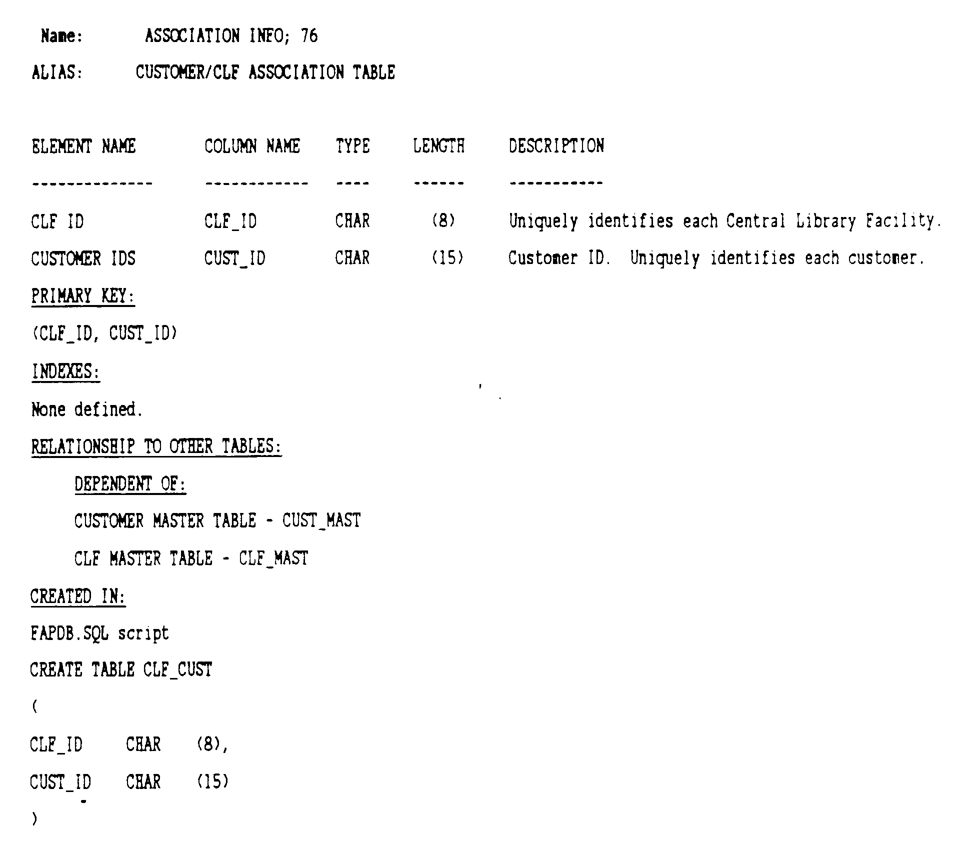

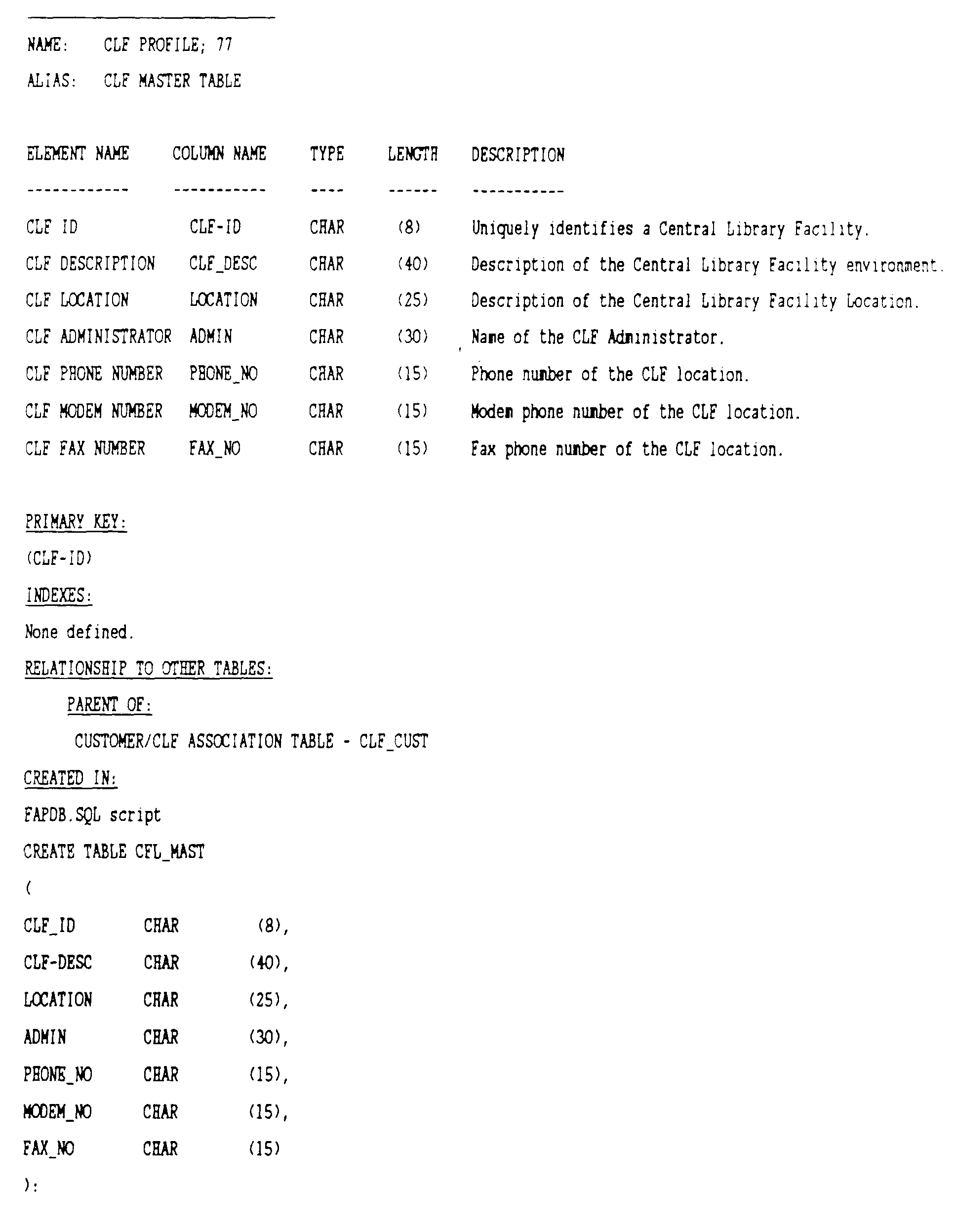

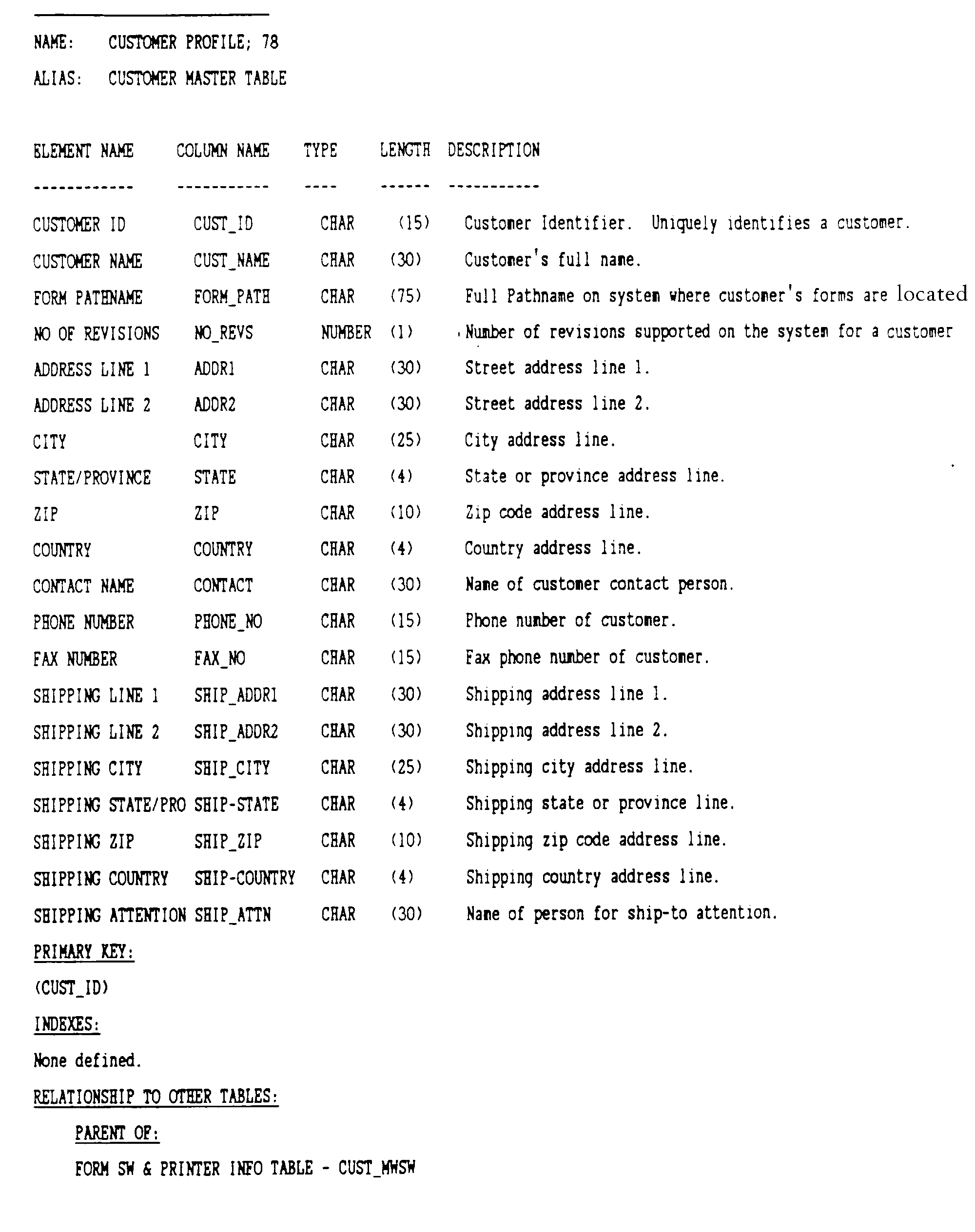

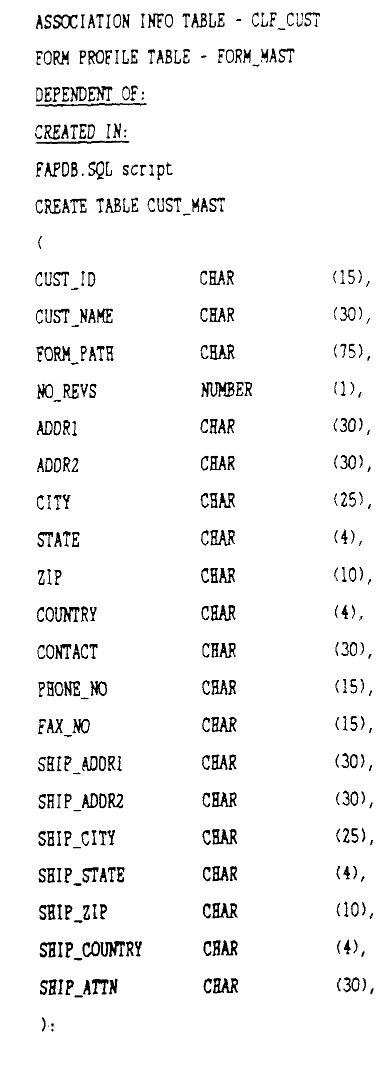

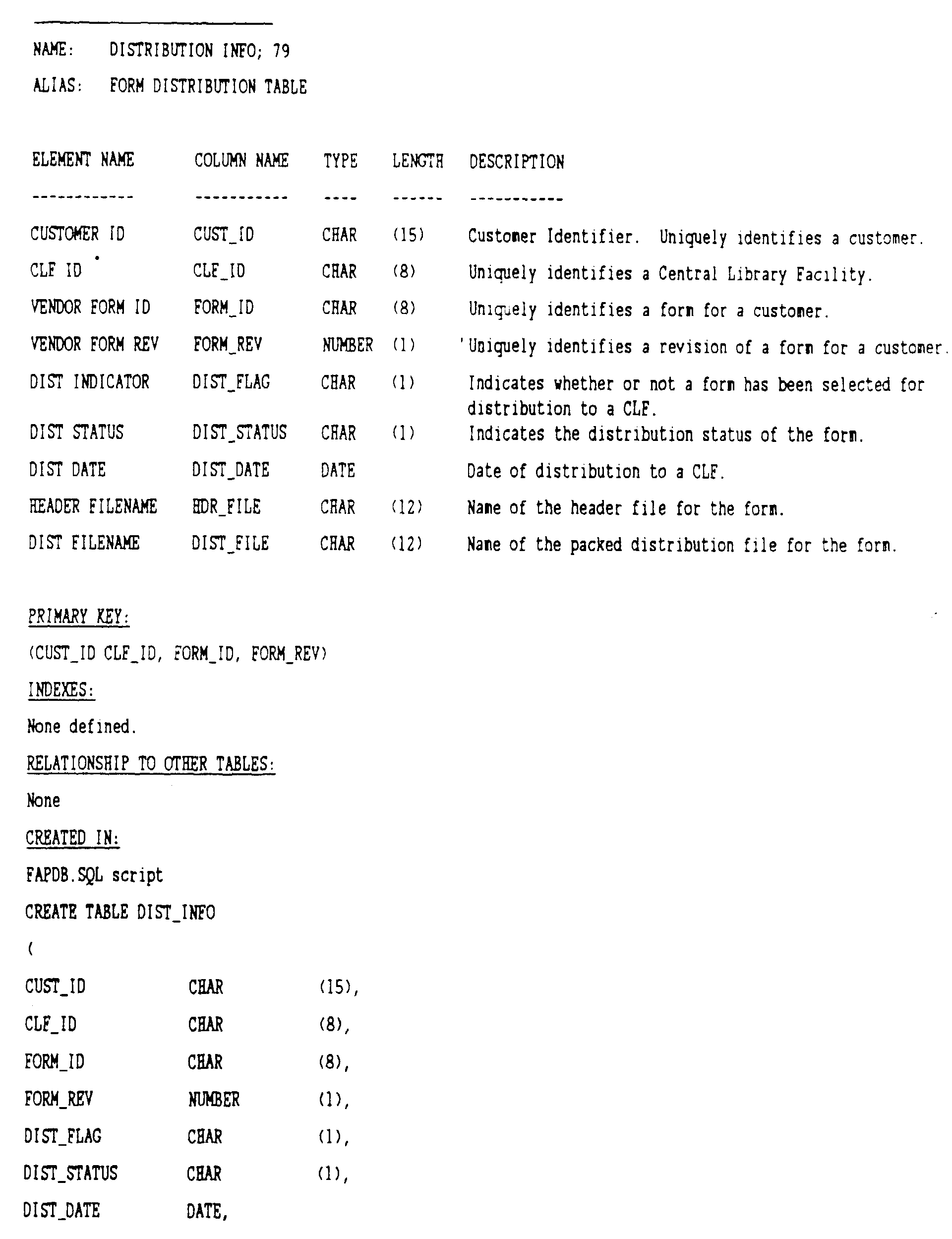

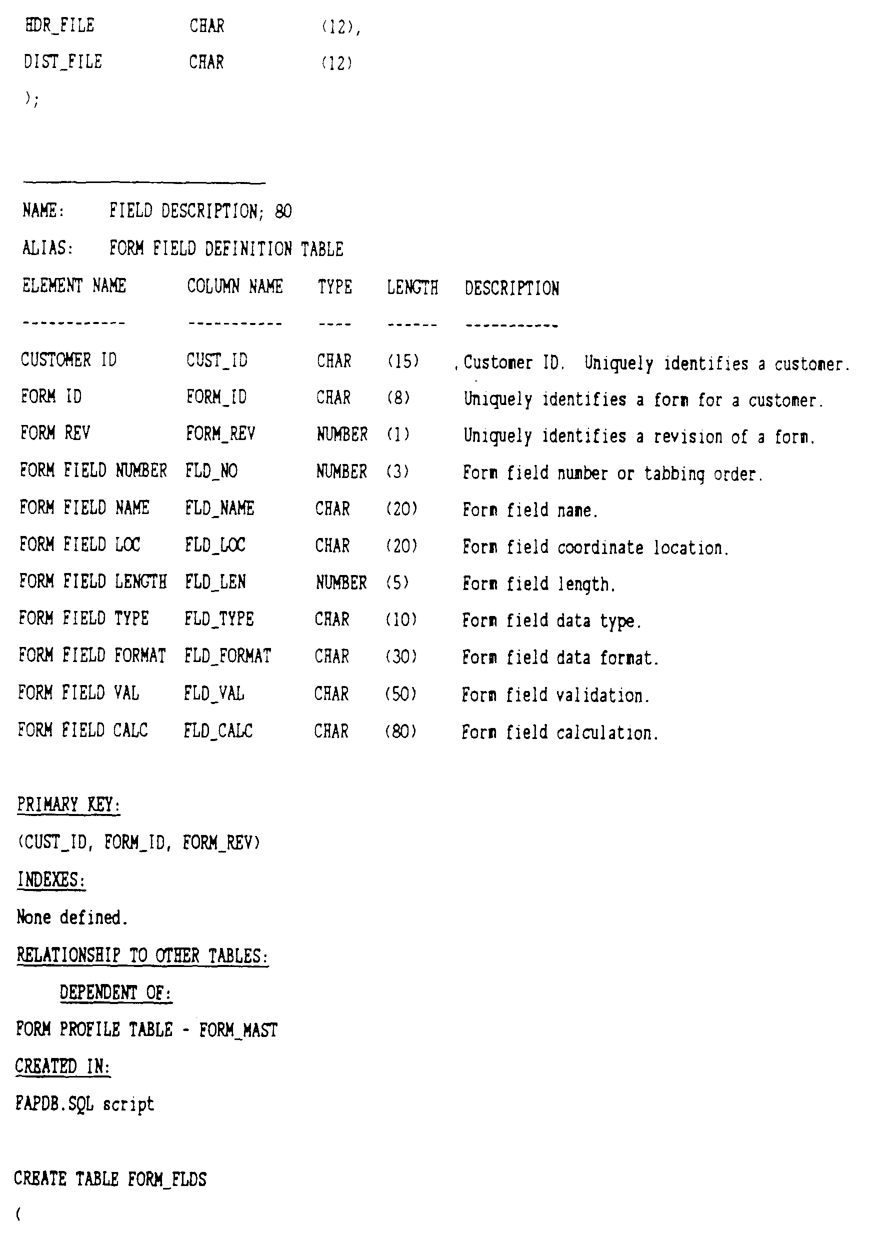

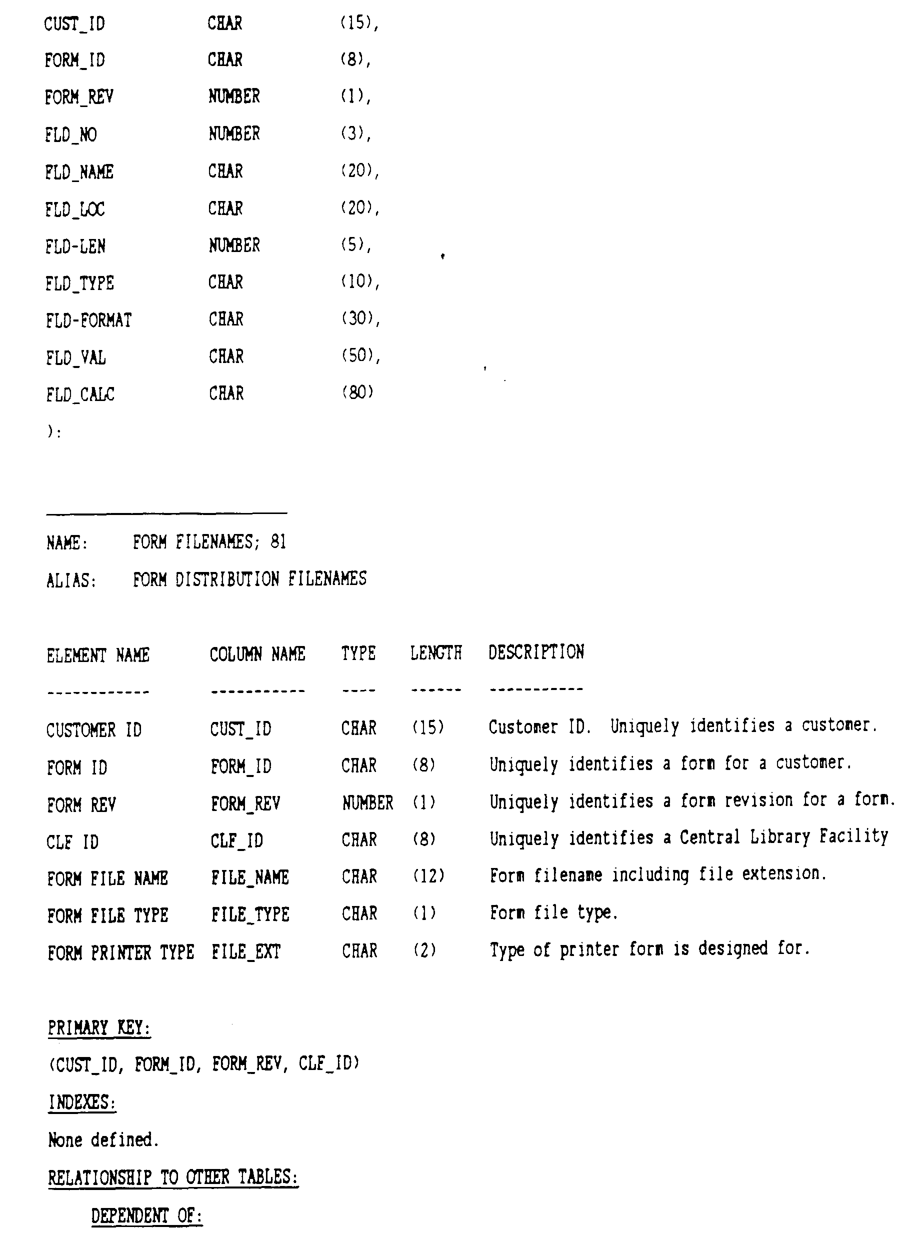

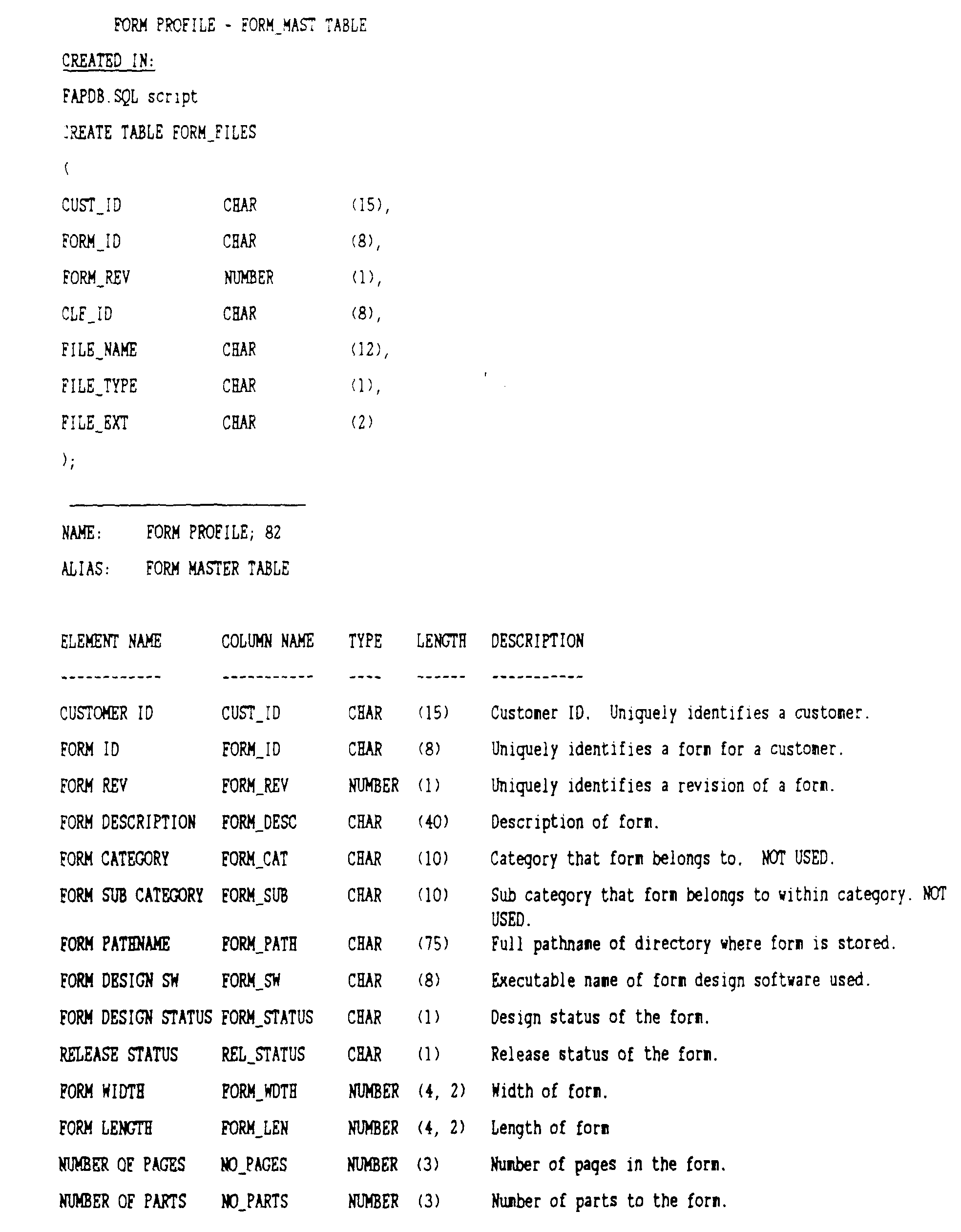

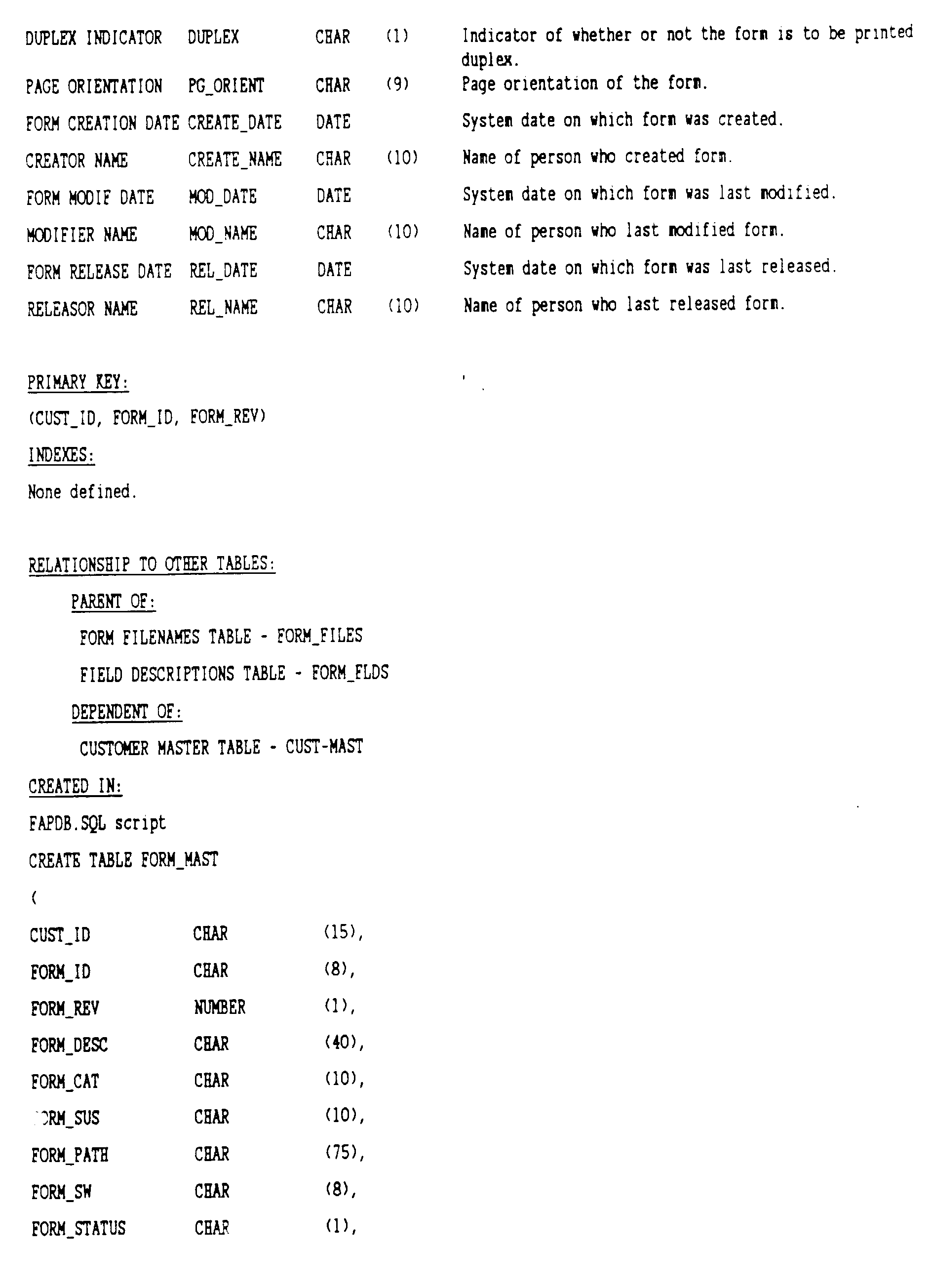

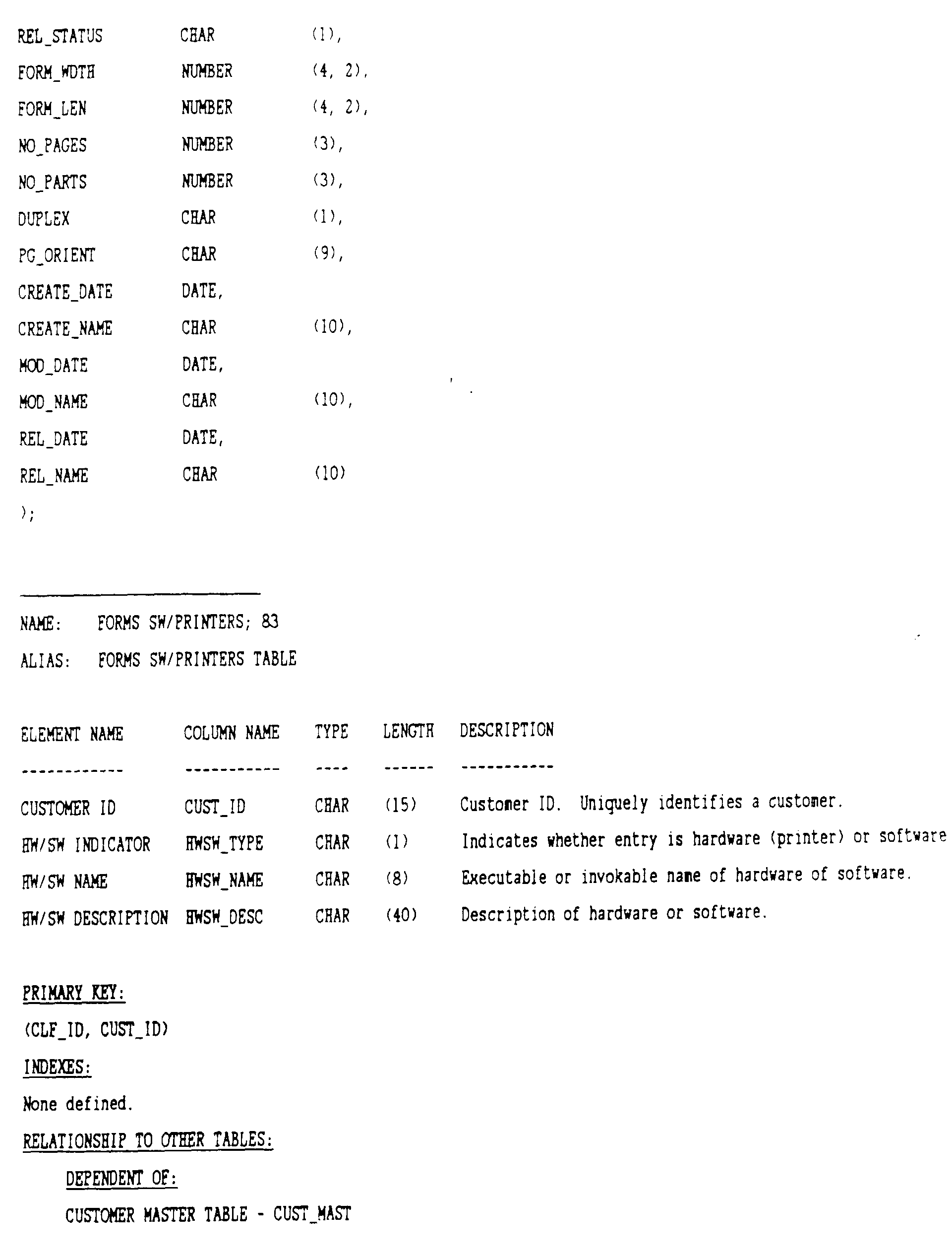

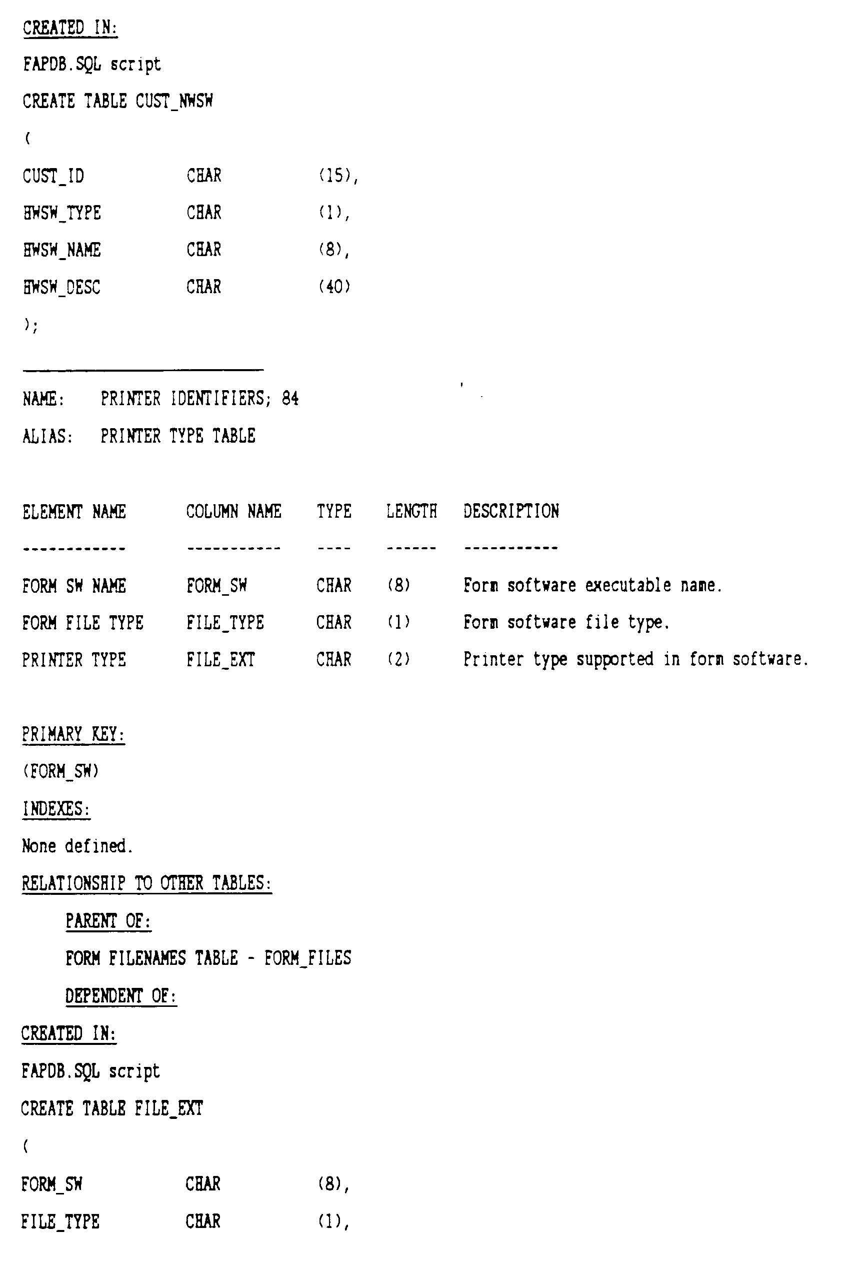

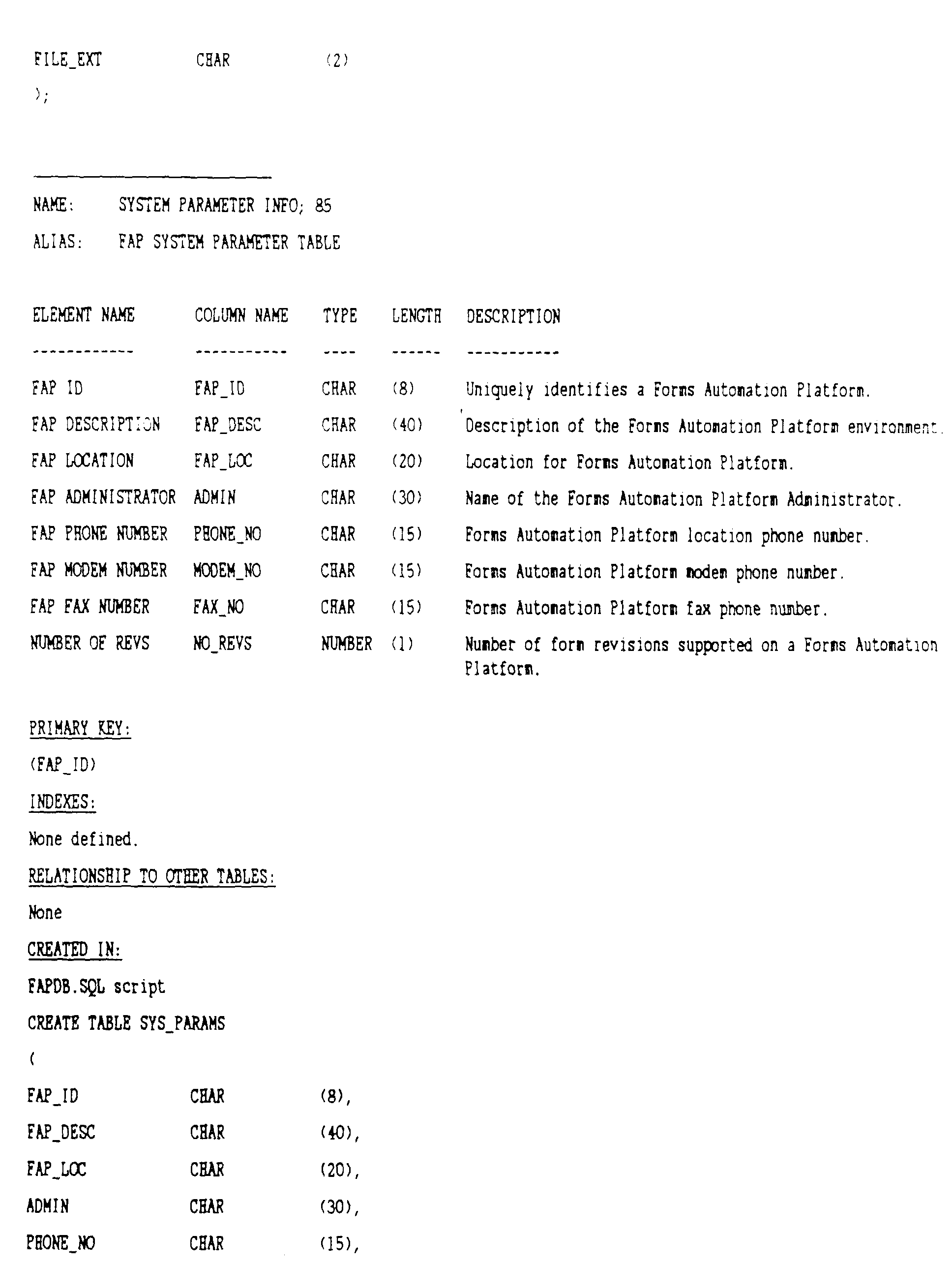

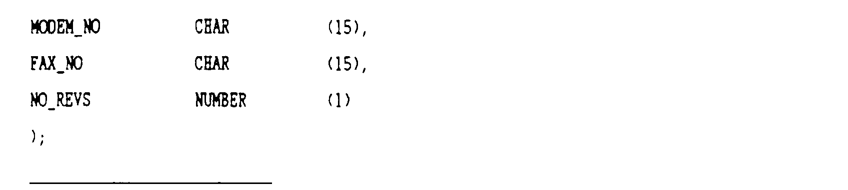

FIGURE 7 is a data flow diagram for the FAP 14. Utility, report generation, archiving, form maintenance, profile maintenance, and CLF 12 updating functions are provided, as illustrated in FIGURE 7. The interrelationships between the various components as shown in FIGURE 7 are more fully indicated by FIGURES 8a-8e.

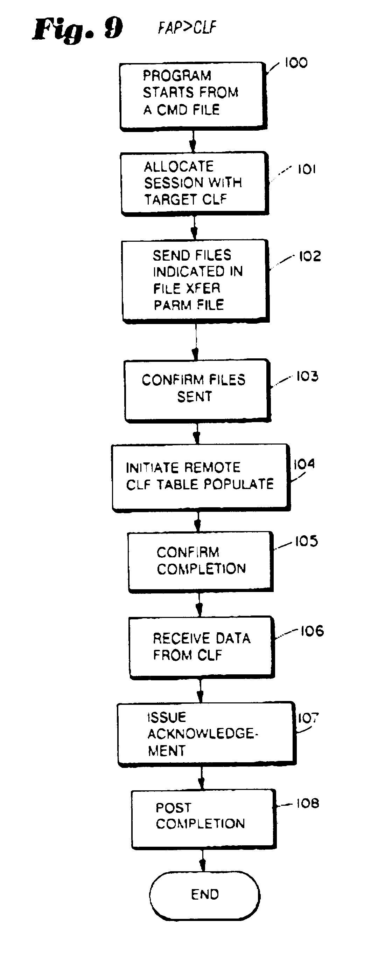

FIGURE 9 provides a flow chart indicating the general steps executed by FAP 14 for accessing the CLF 12 from the FAP to transfer form information. The program is initiated from a command file, as indicated at 100. A session with a target CLF 12 is allocated. This step is indicated since typically a vendor's FAP 14 can be associated with more than one CLF 12, for example a centralized location for the FAP 14 may serve a number of CLFs 12, one associated with each different customer (each customer having a plurality of geographically remote user stations). At 102, the files indicated for transfer are transferred from the FAP 14 to the targeted CLF 12, and confirmation is provided at 13. Then the remote CLF table population function is initiated at 104, and when that function is completed it is confirmed at 105. Data may then be sent to and from the CLF 12 from and to the FAP 14 at 106, for example data useful for determining the status of the forms. An acknowledgement is issued at 107, and any post completion processing done at 108 before the processing ends.

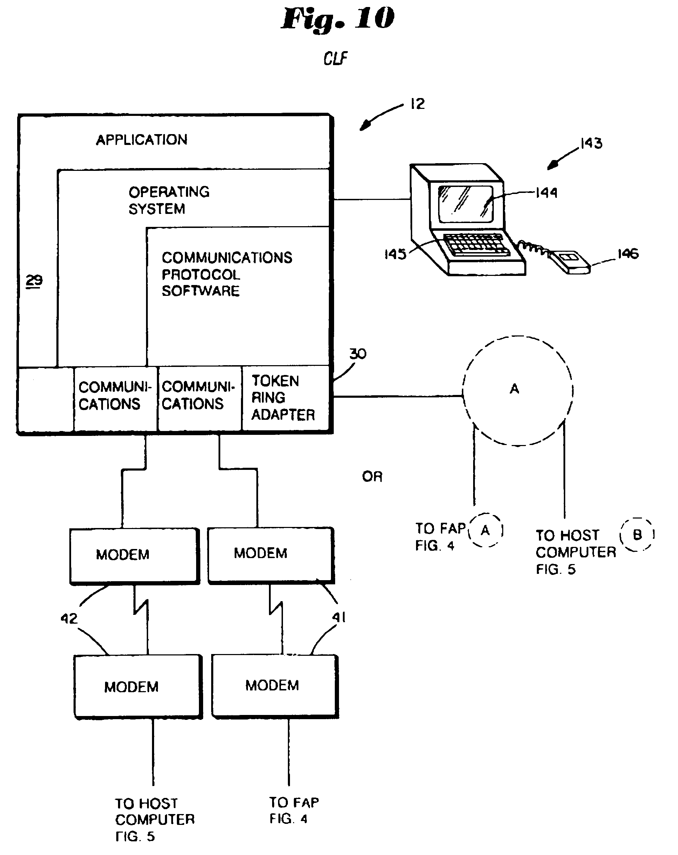

As illustrated in FIGURE 10, the CLF 12 preferably communicates via modems 41 with the FAP 14, or token ring if located in the same facility, and via modems 42 with the host computer 34. In order to provide human interface, a terminal 143 having a video display 144 and a keyboard 145 and/or mouse 146, is provided associated with the CLF 12. Other technologies could also be utilized, such as optical disks, and the like, to store the forms on either magnetic or optical media.

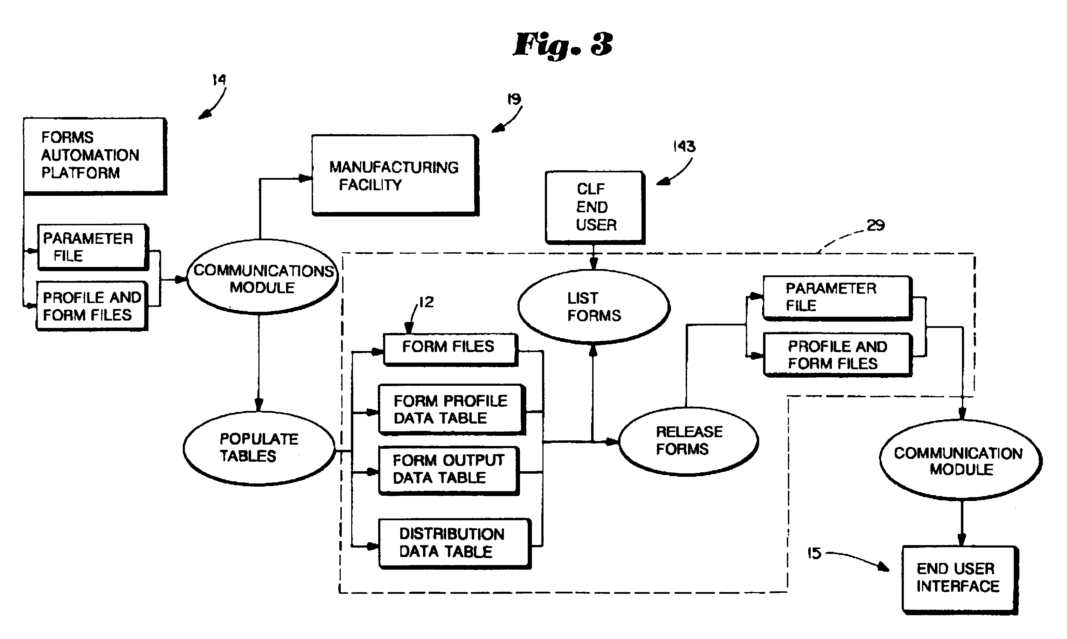

As illustrated schematically in FIGURE 3, major functions of the CLF 12 are forms management and distribution. The application software 29 creates, maintains, up-dates and ensures the integrity of the database 29 provided by CLF 12. The CLF 12 also processes end user requests inputted by device 143 (e.g. via the various electronic communications facilities already discussed), and distributes electronic forms to all of the user locations 15. Inherent in the CLF 12 is restricted user access based on security levels, the production of desired reports to support the customer's requirements, sorting of the contents of the library based upon user specified parameters, and up-dated processing. At the CLF a search will be conducted of the electronic forms database 29 on a predetermined basis, to determine all forms scheduled for release on a specified date. The forms will then be distributed based upon the end user profiles which have been designated. The CLF 12 is a logical entity, and its processes may be distributed over one or more processors, either directly on the customer's main frame 34, or at the vendor's facility, utilizing a file server, or the like.

User interface software executed by CLF 12 is menu driven in the preferred embodiment. The major menu items provided to the user of the CLF 12 main menu screen utilizing terminal 143 are forms, profile management, distribution management, release function, queries and report, and utilities. A typical main menu screen is as follows:

### CENTRAL LIBRARY FACILITY MAIN MENU

Enter the Capital Letter of the Item Below and Press Enter-> --
Forms management
Profile management
Distribution management
Release function
Queries and reports
Utilities
F3=EXIT

The first item of selection is "Forms management". The Forms management menu typically appears as follows:

### CENTRAL LIBRARY FACILITY FORMS MANAGEMENT MENU

Enter the Capital Letter of the Item Below and Press Enter-> --
List/delete/update forms
Field information list
Output format list
Print form
F2=REFRESH F3=EXIT

The first selectable item from the Forms management menu is the forms list. A forms list screen, showing descriptions and other information of a few exemplary forms might appear as follows:

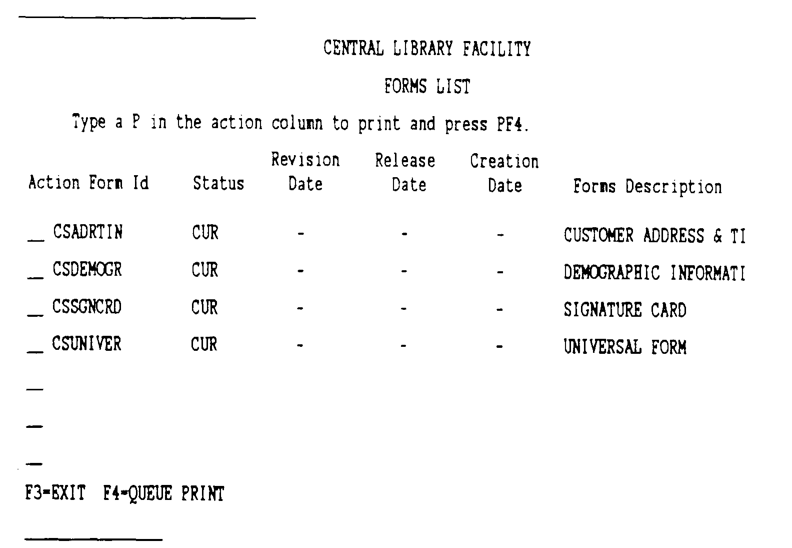

The last of the selectable items in the Forms management menu is the forms print selection, the screen for which might appear as follows:

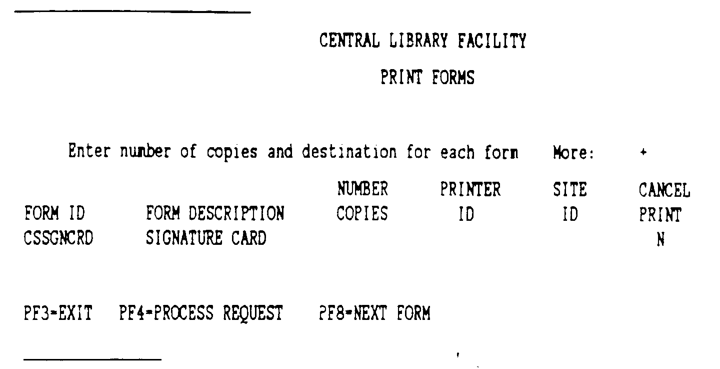

By filling information into the prompt sections of this screen, an operator of CLF terminal 43 can schedule printing of a desired number of copies of specific forms to a desired printer at a desired use location.

The second menu item in the main menu is the profile management option. The typical profile management menu screen appears as follows:

### CENTRAL LIBRARY FACILITY PROFILE MANAGEMENT MENU

Enter the Capital Letter of the Item Below and Press Enter->
User profile
Category profile
Site profile
corporate proFile
Geographic profile
cusTomer profile
grOup profile
Printer profile
F2=REFRESH F3=EXIT

The first selectable item of the profile management menu is the user profile, a screen of which appears as follows:

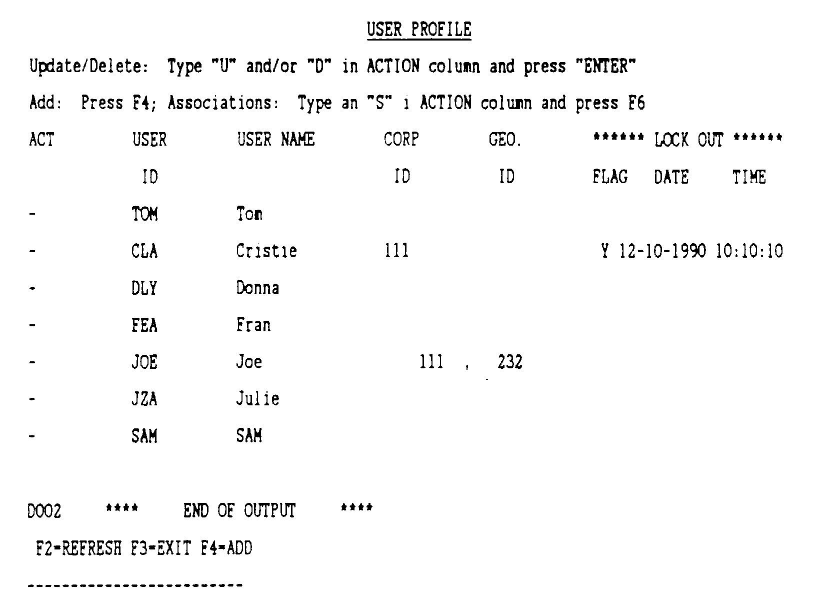

If F4 is actuated from the above screen, then the following screen appears:

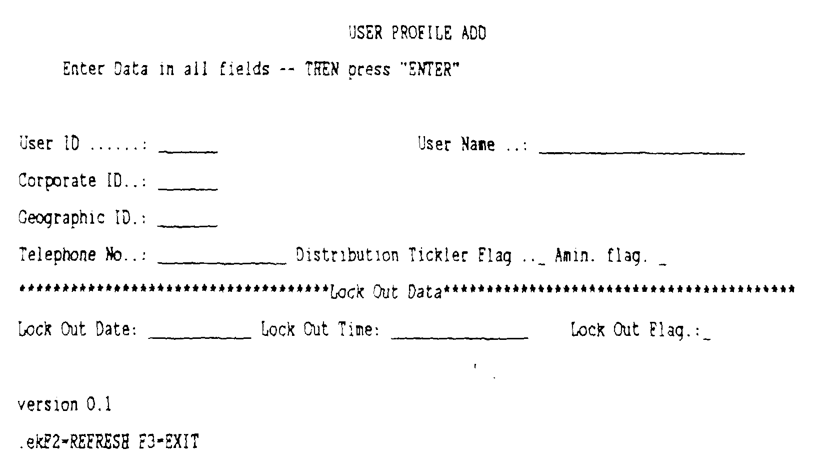

The third selectable item from the profile management menu is the site profile. The site profile screen appears as follows:

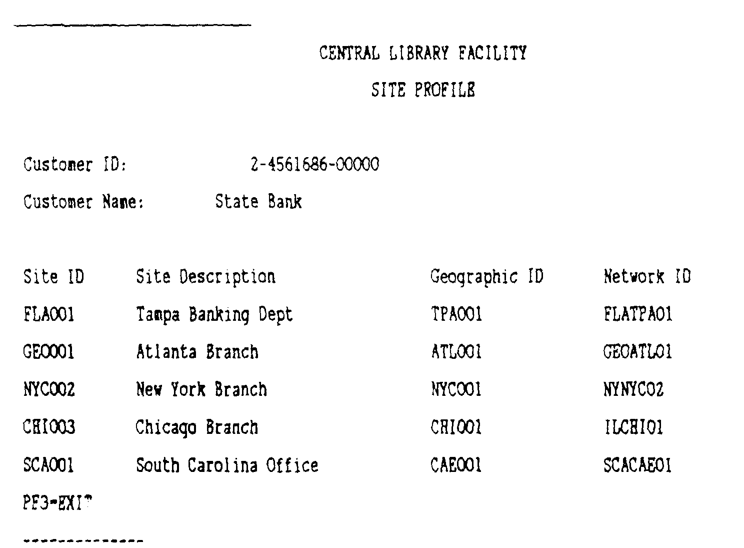

The sixth menu item on the profile management menu screen is the customer profile. When that menu item is selected, the customer profile screen typically appears as follows:

| CENTRAL LIBRARY FACILITY CUSTOMER PROFILE | |
|---|---|
| Customer ID: | 2-4561686-00000 |
| Customer Name: | State Bank |
| Address: | The American Road |
| | Atlanta |
| | GA 30123 USA |
| Contact Name: | Don Jones |
| Phone Number: | 800-321-1234 |
| | |
| PF3=EXIT | |

The Group profile of groups list item provides the following exemplary screen:

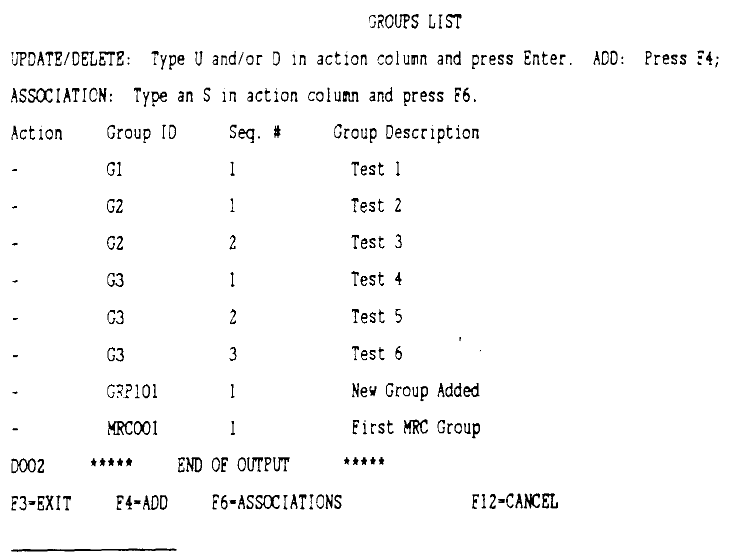

If F4 is actuated from the above screen, then the following exemplary screen appears.

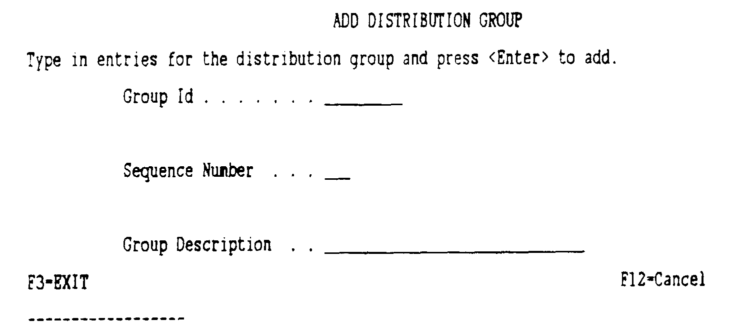

If F6 is actuated from the Groups list screen, then the following appears:

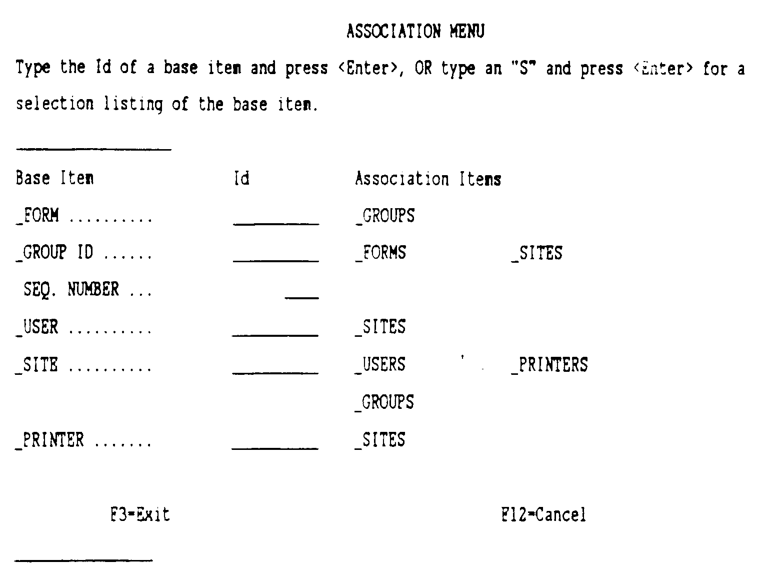

Upon insertion of a particular group ID from the groups list screen (e.g. "G1"), the following exemplary screen appears:

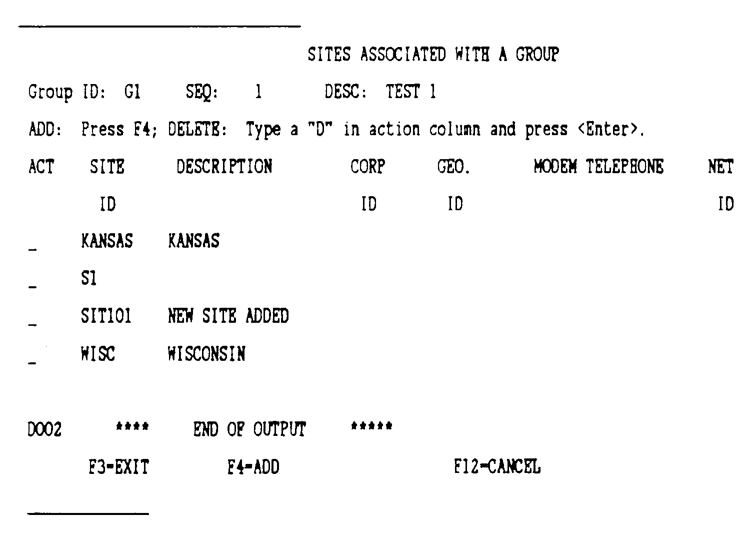

If F4 is actuated from the above screen, then the following exemplary screen appears, to support data entry to get sites associated with a group:

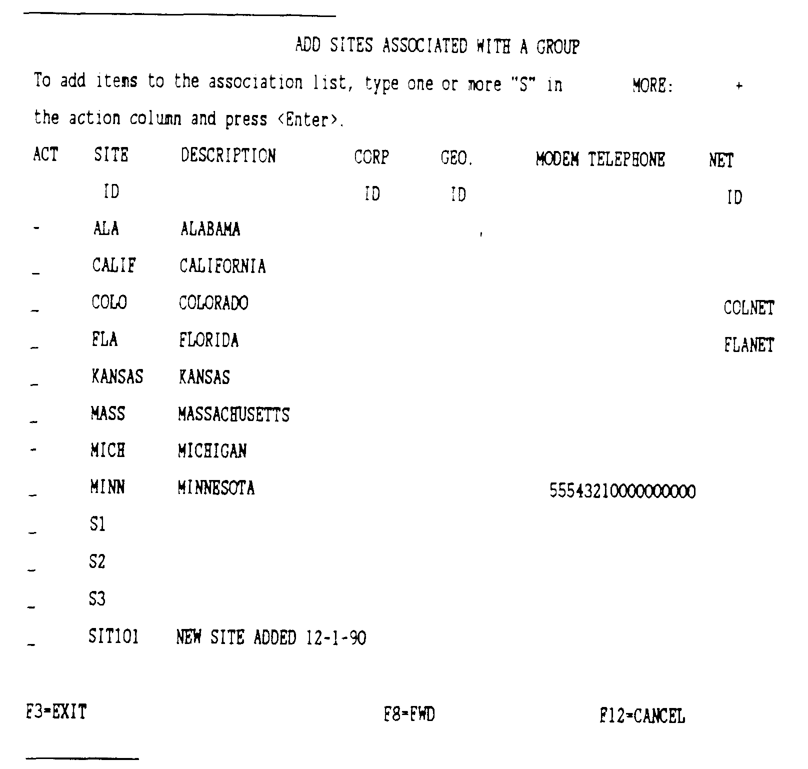

The last selectable item on the profile management menu is the printer profile option. When the printer profile option is selected, the screen that typically appears is as follows:

| CENTRAL LIBRARY FACILITY PRINTER PROFILE | | |
|---|---|---|
| Customer ID: | 2-4561686-00000 | |
| Customer Name: | State Bank | |
| Printer ID | Printer Type | Printer Manufacturer Name |
| 01 | PS | Adobe PostScript |
| 02 | HP | Hewlett Packard LaserJet |
| 03 | AF | IBM 3800 Printers |
| 04 | AF | IBM 4019 Printer |
| 05 | MF | XEROX 9700 Printer |
| | | |
| PF3=EXIT | | |

The third selectable item on the main menu is the distribution management function. If that function is selected, the screen that typically appears is as follows:

### CENTRAL LIBRARY FACILITY DISTRIBUTION MENU

Enter the Capital Letter of the Item Below and Press Enter-> _
New form distribution cycle
Add form distribution
Delete form distribution
FS=REFRESH F3=EXIT

The fourth selectable item on the main menu is the release function. If that function is selected, the screen that typically would appear is as follows:

### CENTRAL LIBRARY FACILITY RELEASE FORMS MENU

Enter the Capital Letter of the Item Below and Press Enter -> _
Release forms to site
Automatic release
release From remote site
F2=REFRESH F3=EXIT

The first selectable item on the release forms menu is to release the form to desired sites. If that item is selected, the typical screen that would appear is as follows:

### CENTRAL LIBRARY FACILITY RELEASE TO SITES

Do you wish to release New/revised forms (N) or All forms (A)?

Enter Selection here (N, A) > _

Also select one of the choices below:
_Release All Forms to All Sites
_Release All Forms for Specific Site(s)
_Release Specific Forms(s) to All Sites
_Release Specific Form(s) to Specific Sites
F2=Refresh F3=Exit

The above provides a description for the major screens that appear in the implementation of the CLF 12 functions, although other screens are provided too, for example customer specific screens depending upon what queries and reports are desired, and conventional utilities functions.

FIGURE 11 is a data model diagram for the CLF 12. The individual components illustrated in FIGURE 11 are individual files which have particular elements or records therein in predefined fields and with predefined addresses. The bare essentials of the system are contained within the dotted lines, but the other files are also important for ultimate maximum utilization. The connections in FIGURE 11 refer to the relationship between the two entities; i.e. two entities connected by an arrow with one arrow head at one end and a double arrow head at the other end are said to have a "one-to-many" relationship. In a relational database construct, this means that for each parent record in the first entity there may/shall exist many child records in the second entity. In the preferred embodiment, the various files have the following major elements:

The customer profile file 150 contains all relevant information about the customer. The configuration of that file is as follow:

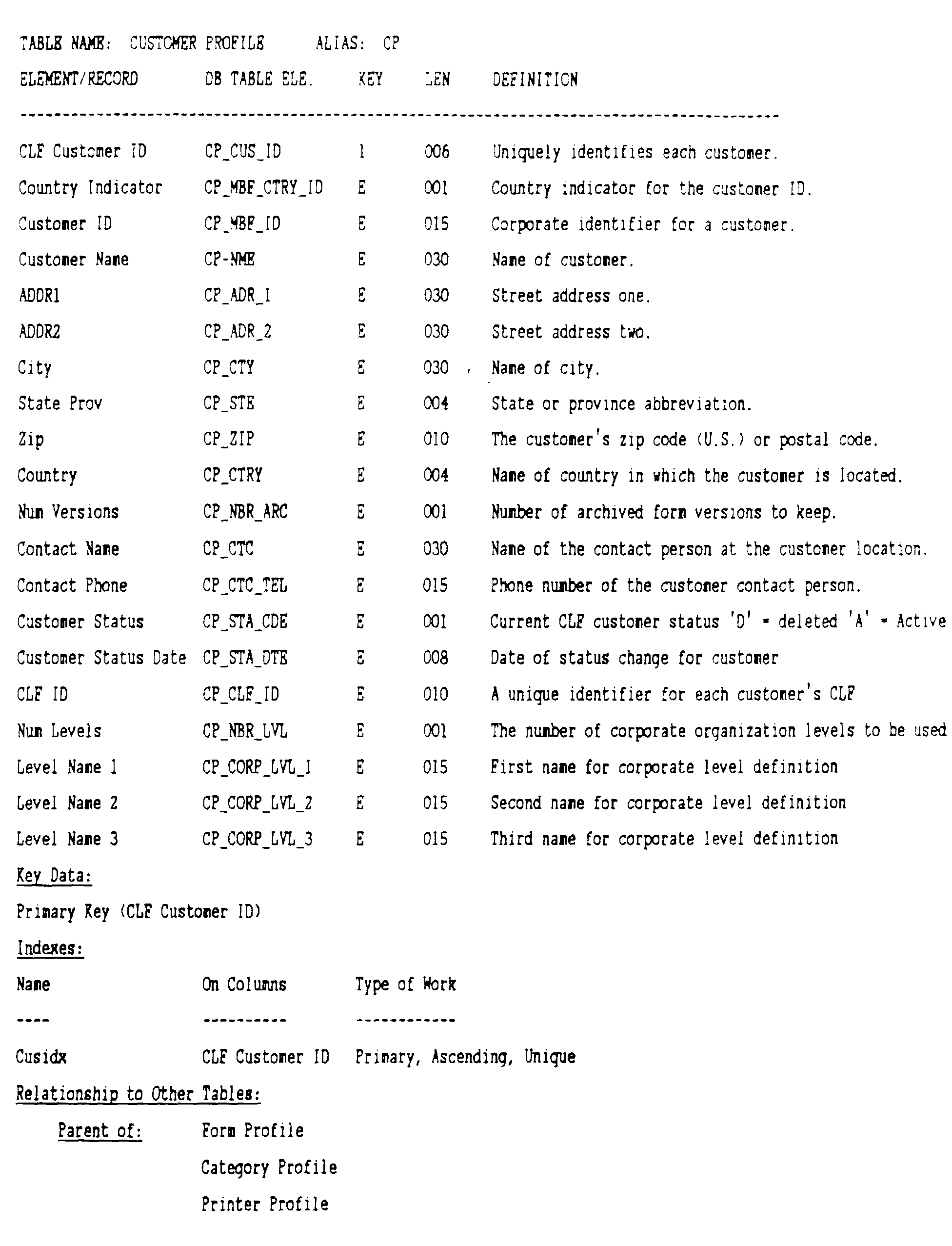

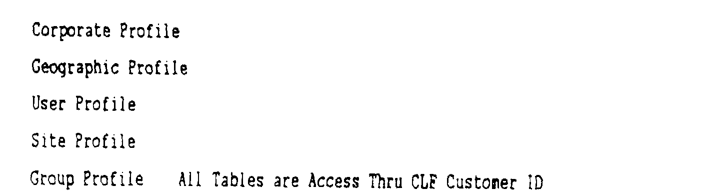

As many corporate level definitions may be provided as is necessary in order to meet the customer's needs.

The corporate profile provides a file 151 for the customer to charge back the forms to various entities within the organization. This file typically has the same number of levels as the number of levels for the corporate level definition in the customer profile file 150. An exemplary corporate profile file 151 is as follows:

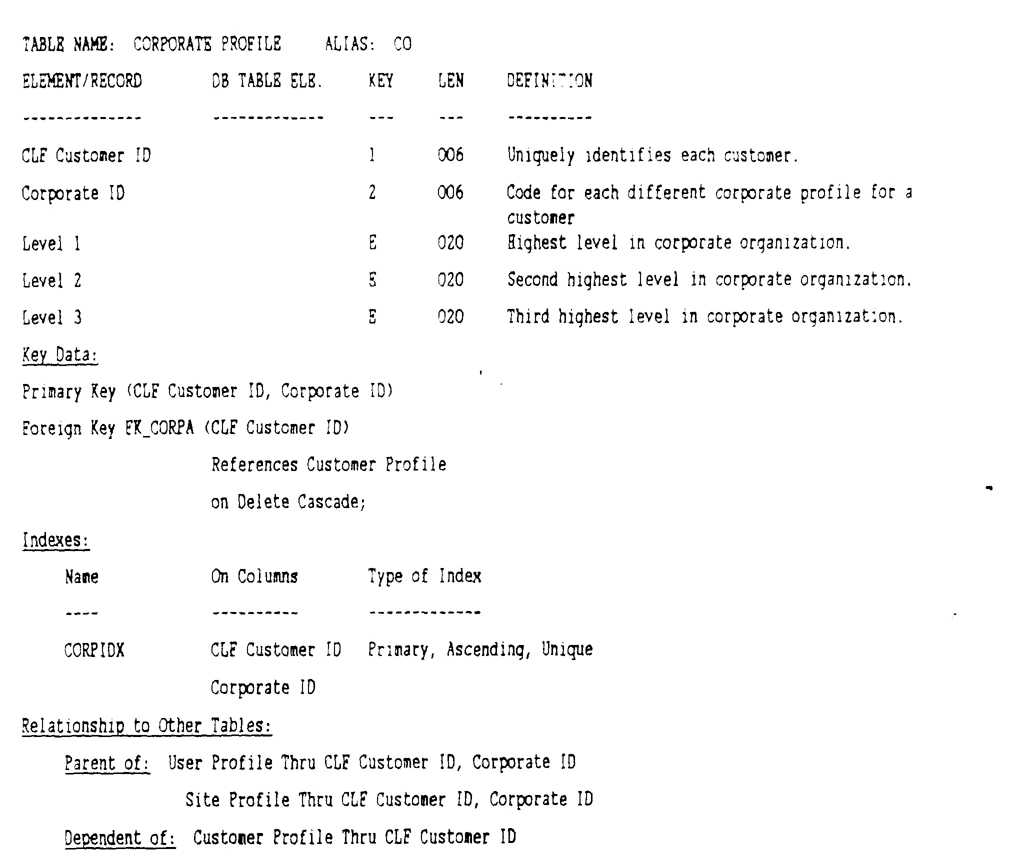

The geographic profile file 152 has data for the various geographically remote user locations, such as branches, offices, etc. A typical geographical profile file 152 is configured as follows:

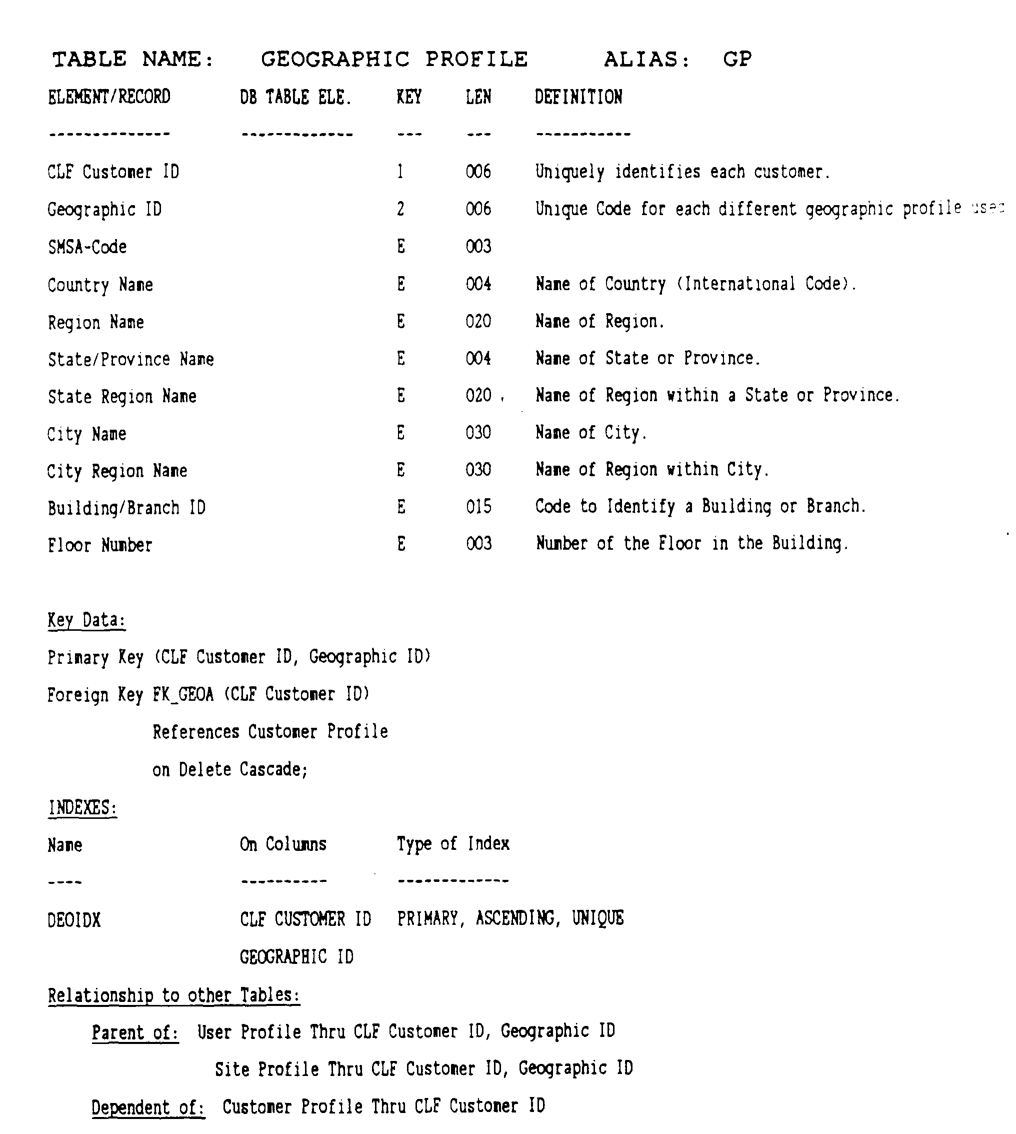

The security table 153 limits access to the various files in the data model of FIGURE 11 to ensure that only people with the appropriate responsibility can command the system to perform important functions. The typical configuration of the security table 153 is as follows:

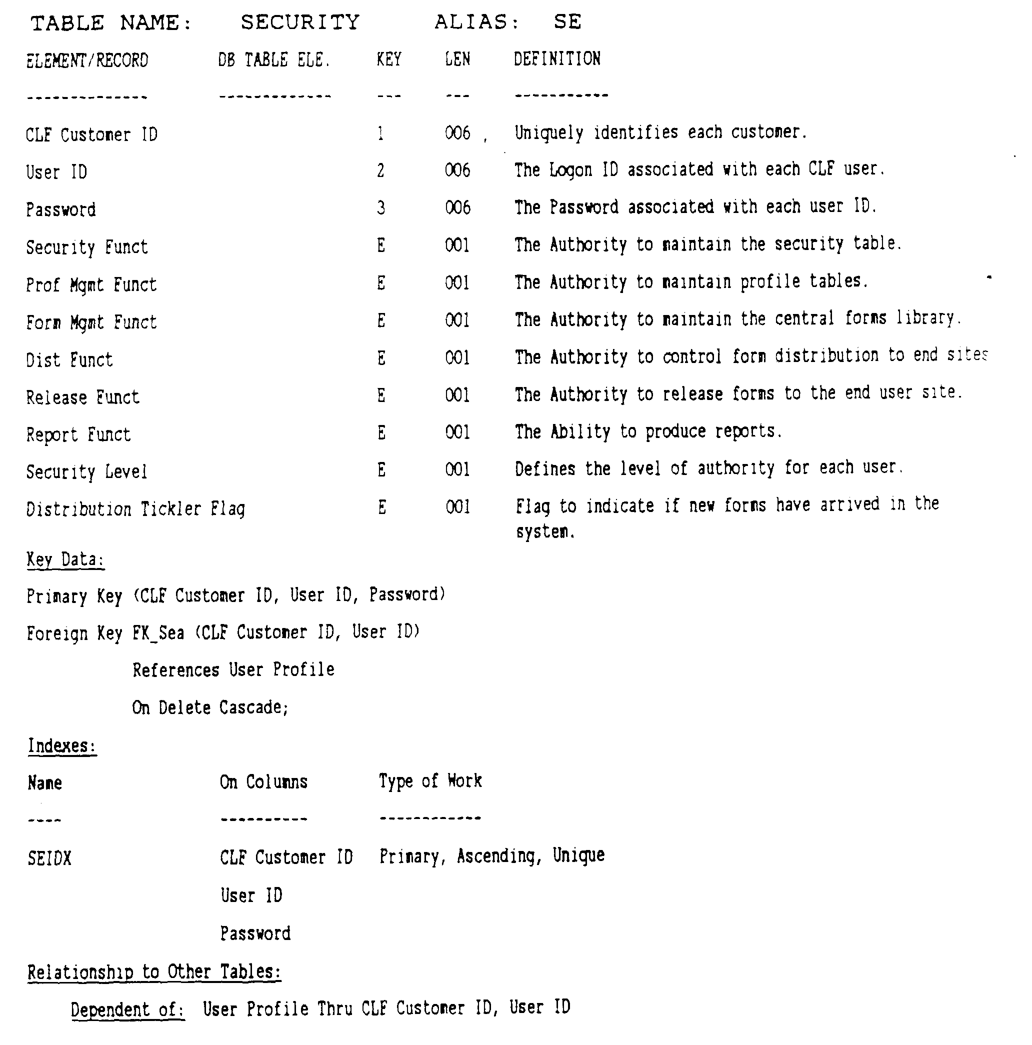

The user profile file 154 describes the end user, and it is interrelated with the security table 153. A typical configuration of the user profile file 154 is as follows:

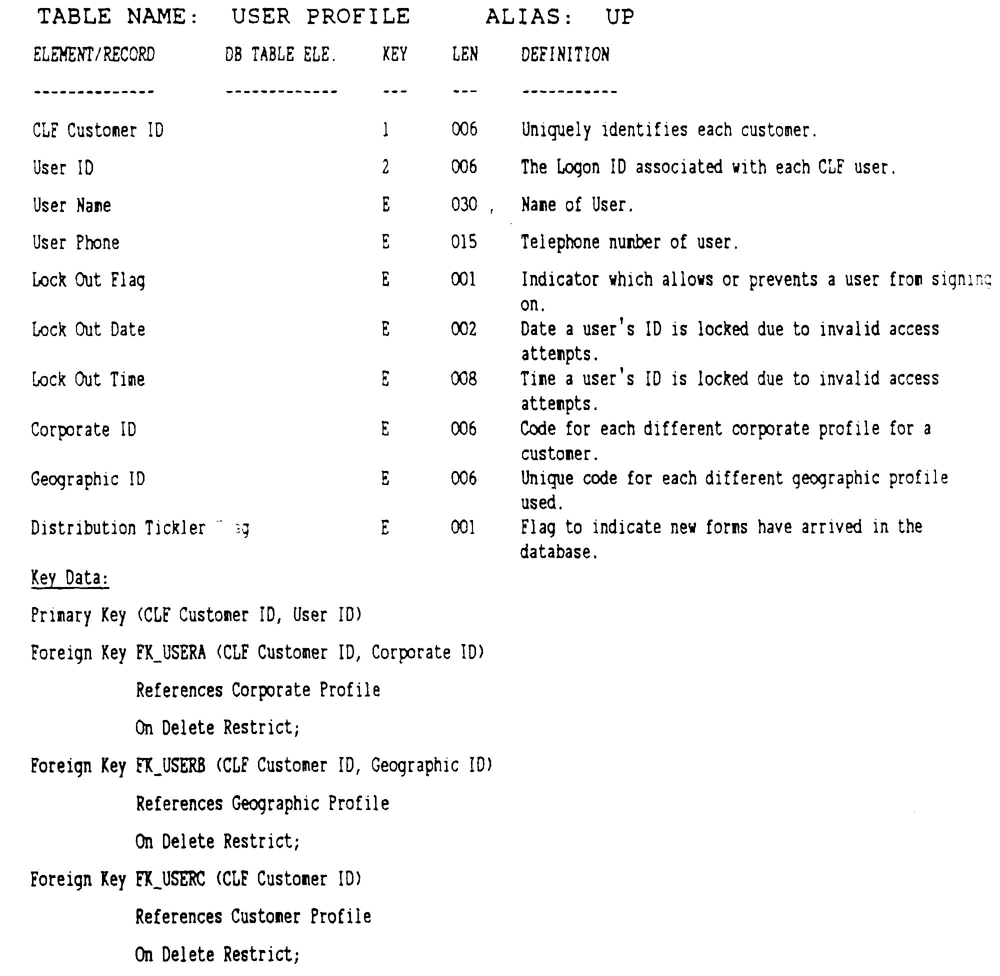

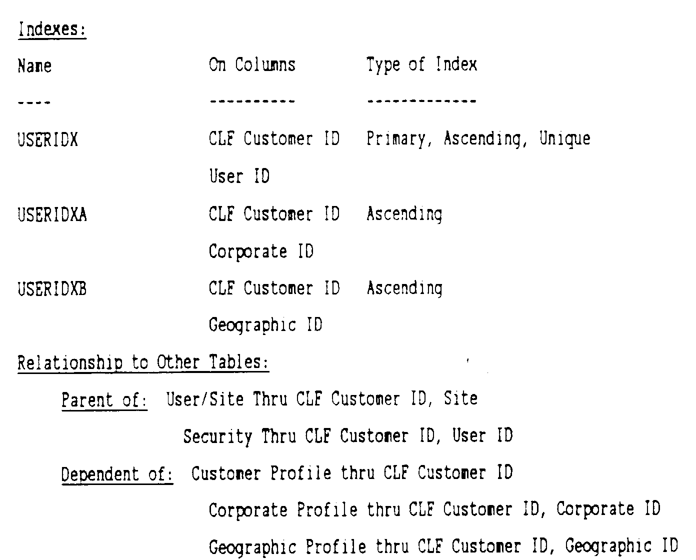

The site profile 155 is interrelated with the geographic and corporate profiles. A file in the site profile 155 is provided for each user location. Typically hardware, such as a printer 16 and/or a PC (e.g. 94, at 15), is provided at the geographically remote user locations which correspond to the files in the site profile 155. A typical configuration of the site profile file 155 is as follows:

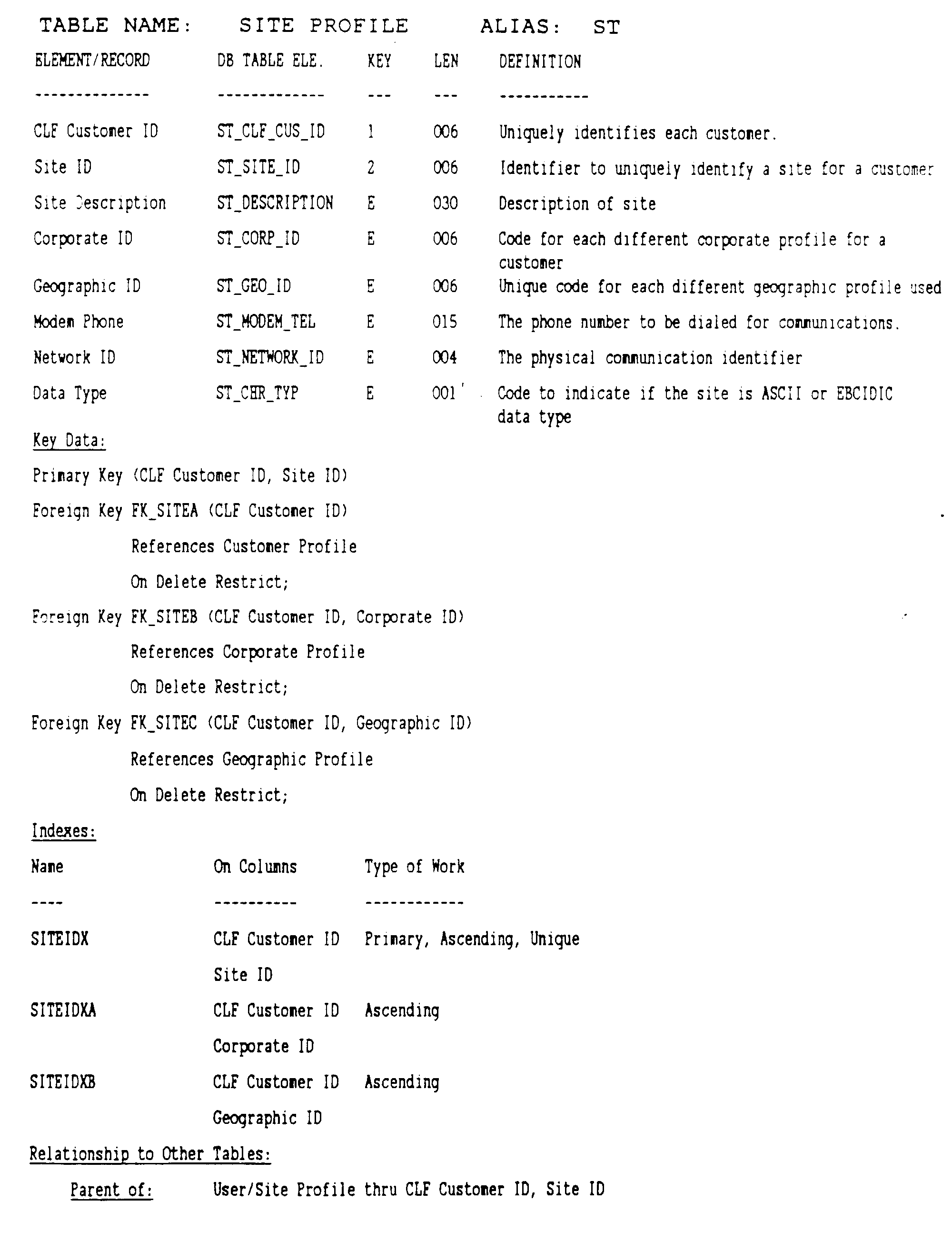

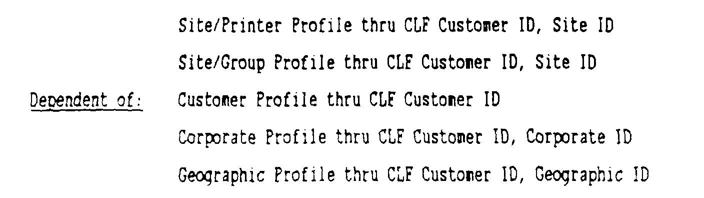

Interrelated with the user profile 154 and the site profile 155 is the user/site data file 156. This relates a user to a site; a user can only access forms and perform functions as they relate to their accelerated site. A typical configuration of element 156 is as follows:

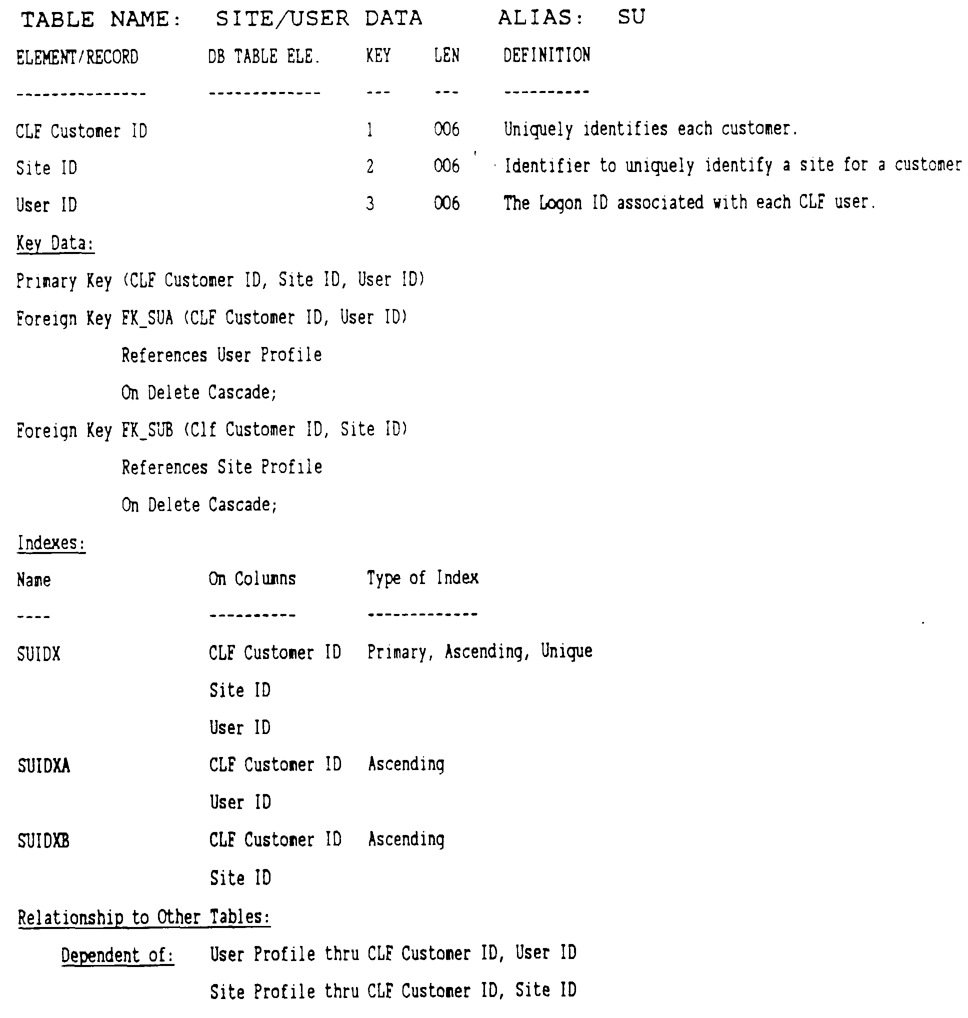

The group profile file 157 relates to groups of forms. A group is a particular combination of electronic forms, i.e. a segmentation scheme for the forms, grouped for the purpose of distribution to sites or different organizations. A typical configuration of the group profile file 157 is as follows:

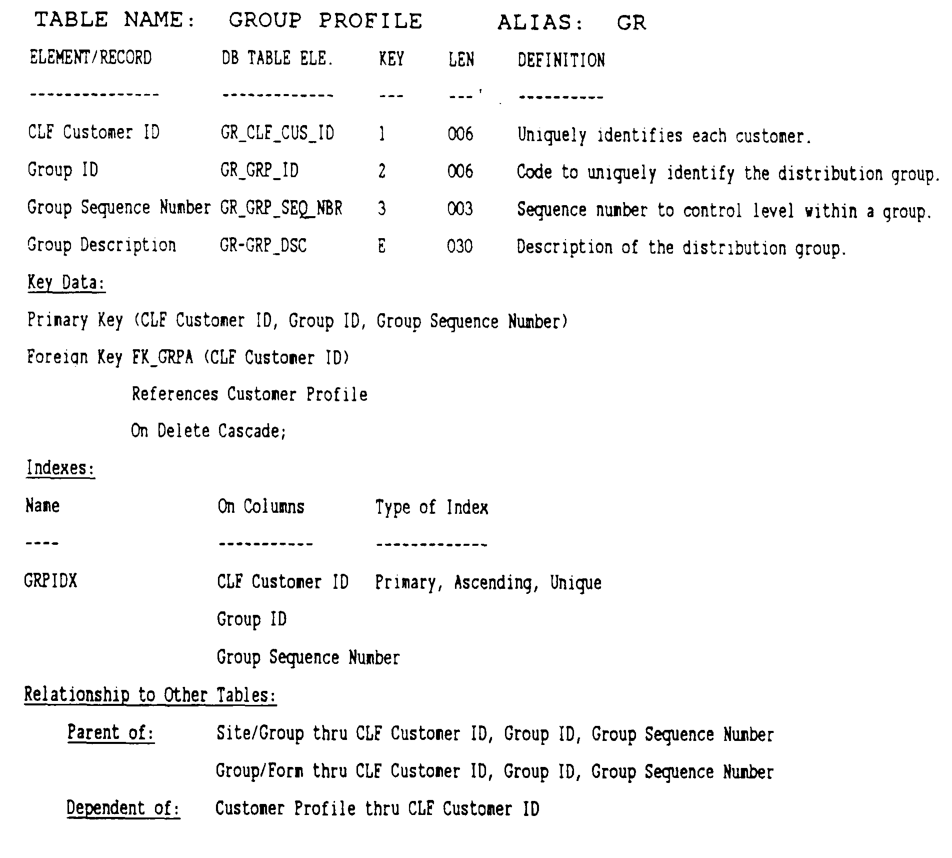

Interfacing between the site profile 155 and the group profile 157 is the site/group data file 158. This assigns a group to a site -- i.e. specific groups of forms are distributed to the sites they are associated with. A typical configuration of the file 158 is as follows:

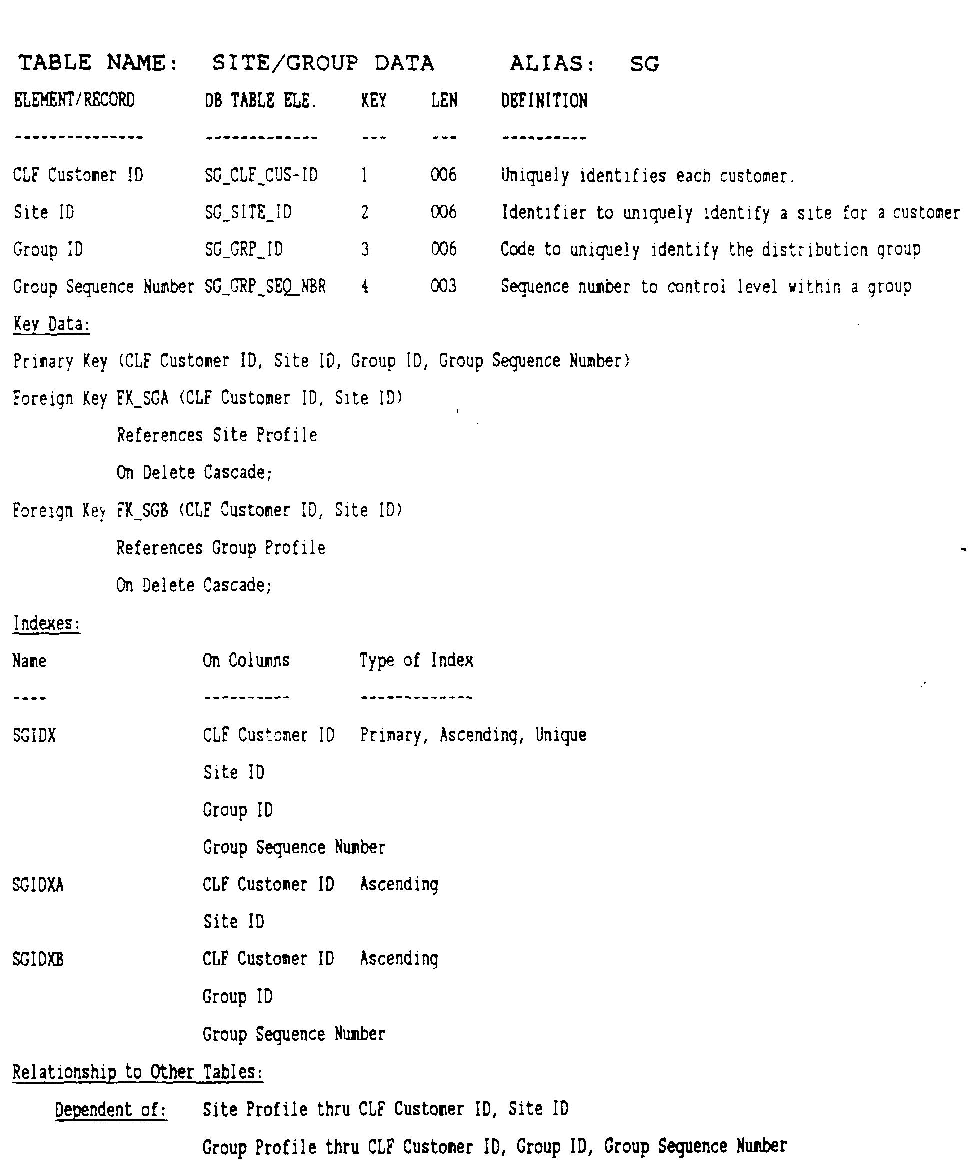

The printer profile file 159 has information regarding the model and manufacture of each of the printers that will be controlled by the computers of the system 10. The typical configuration of the printer profile file 159 is as follows:

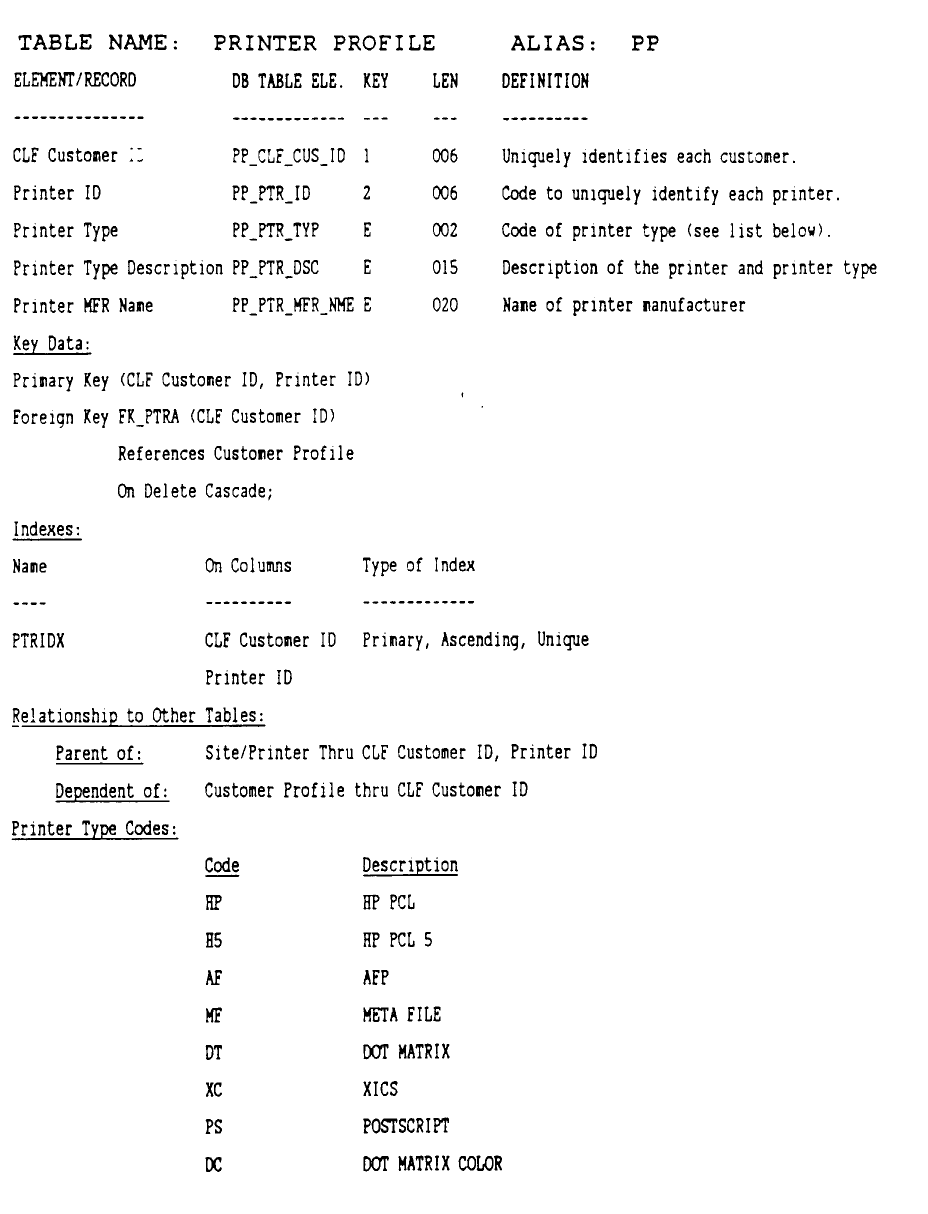

Interrelated with the site profile file 155 and the printer profile file 159 is the site/printer data file 160. Some forms will be printed at the user sites, while other forms will be printed by the vendor. The site/printer data file 160 is utilized only for those forms which will be printed by the user at the user's locations, which printers (e.g. 16) may have different printer formats. A typical configuration of the site/printer data file 160 is as follows:

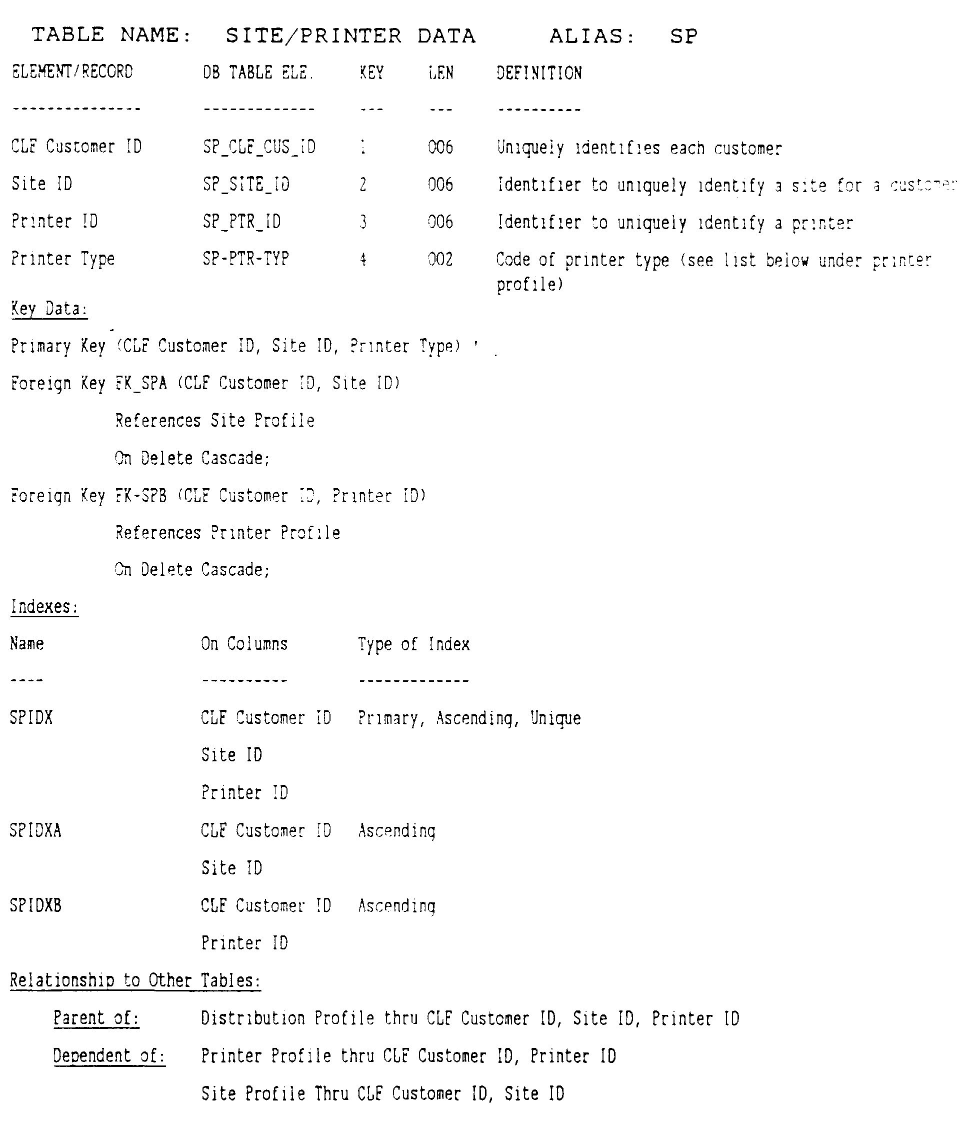

The distribution data file 161 is interrelated to the site/printer data file 160 and the form profile data file 162. The typical configuration of the distribution data file 161 is as follows:

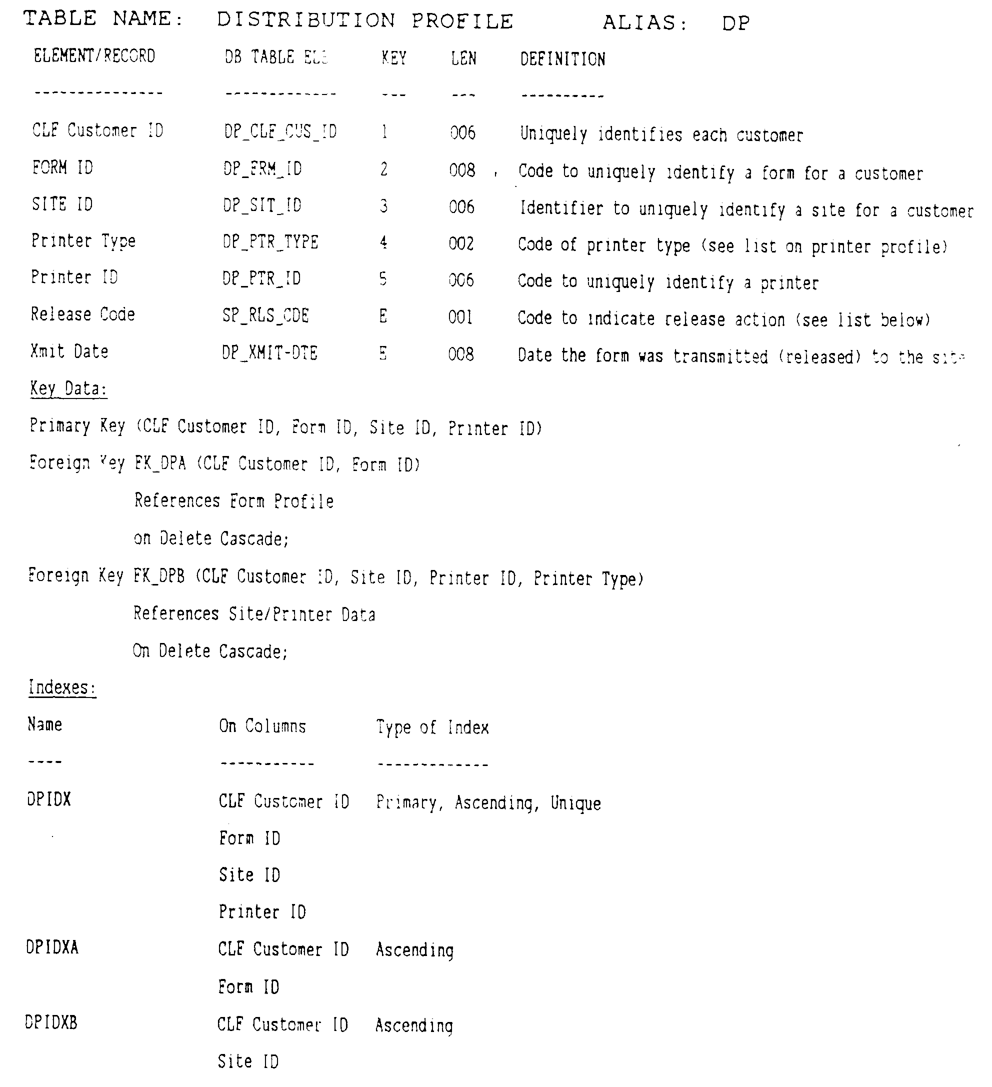

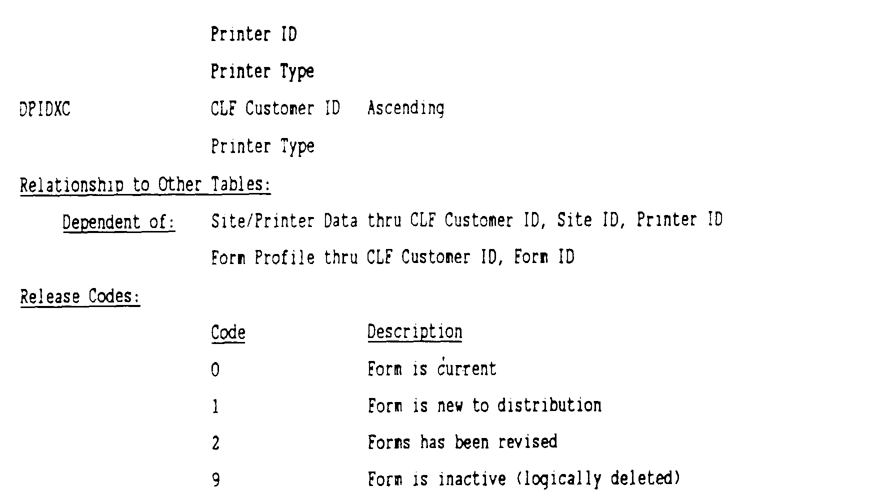

The form profile data file 162 has stored therein the elements of each form and characteristics of the form, e.g. descriptive information. Typically, a number of electronic forms will be stored therein that are identical except for printer formatting since it is necessary to be able to print the same form on a number of different types of printers. The necessary elements for recordation of each form include a unique identifier, a description of the form, the name of the software package (e.g. DOCS) used to design the form, a code to indicate whether the form is new or revised, when the form was created and/or last revised, when the form is to be released and/or the previous release dates, the number of parts to the form, the code to identify whether it has a landscape or portrait orientation, the length of the form, and the width of the form. A typical configuration of the form profile data file 162 is as follows:

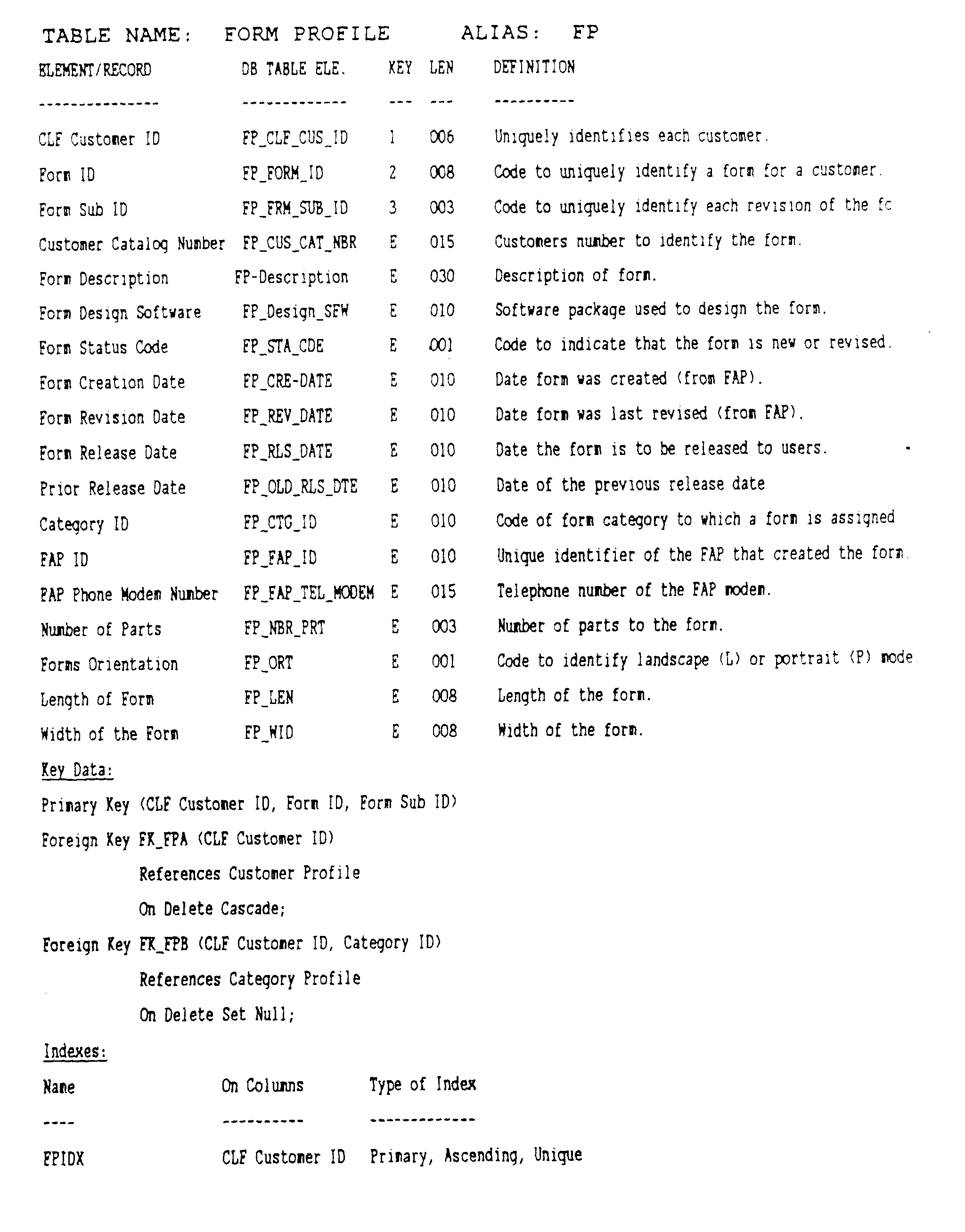

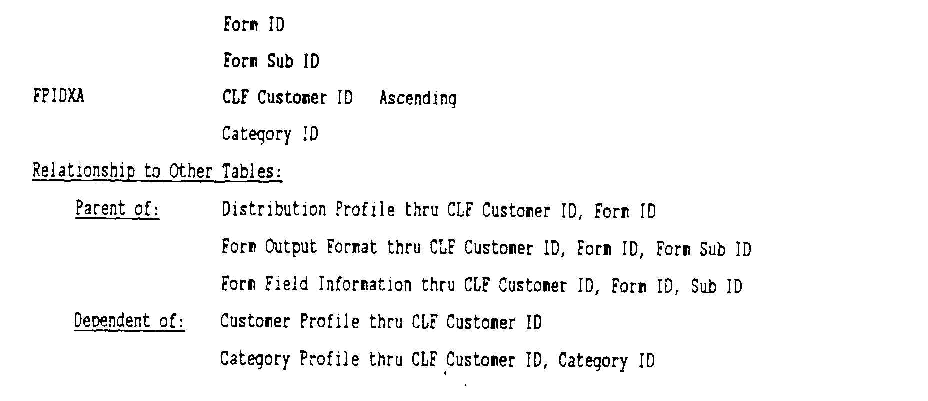

The category table file 163 is utilized to indicate the form category to which a particular form has been assigned. A typical configuration of the category table 163 is as follows:

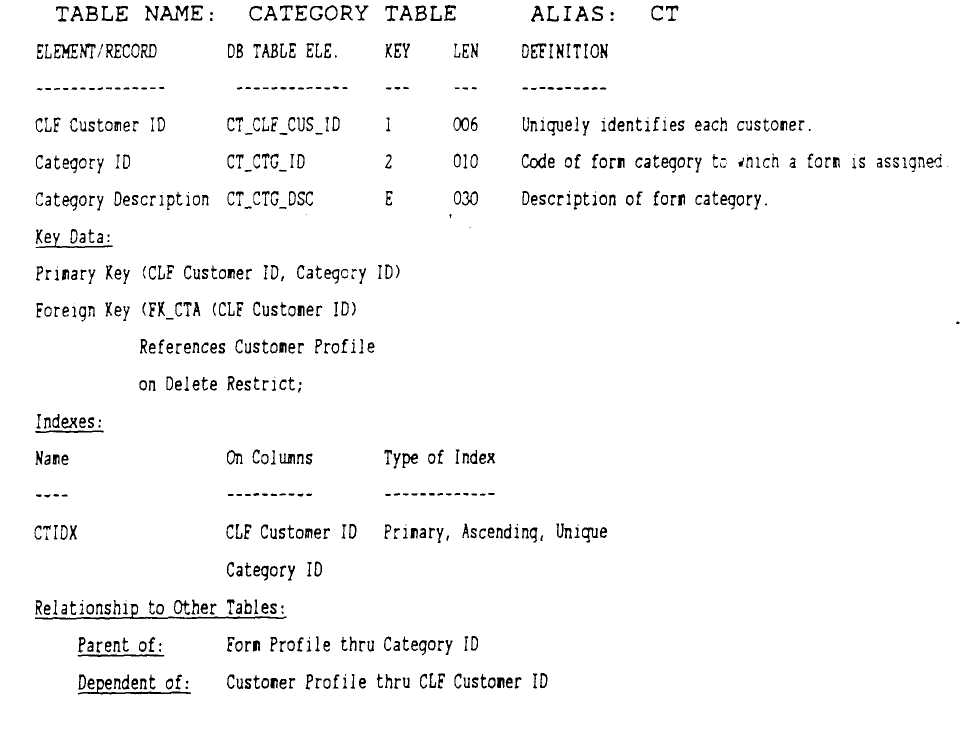

Also interrelated with the form profile data file 162 are the usage statistics file 164, the form field information file 165, and the form output format file 166. A typical configuration of the usage statistics file 164 is as follows:

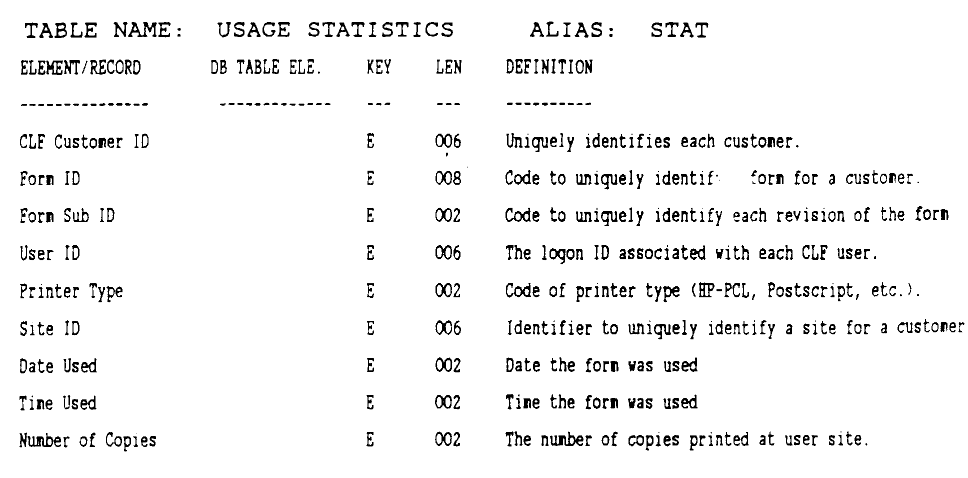

A typical configuration of the form field information file 165 used for form fill capabilities is as follows:

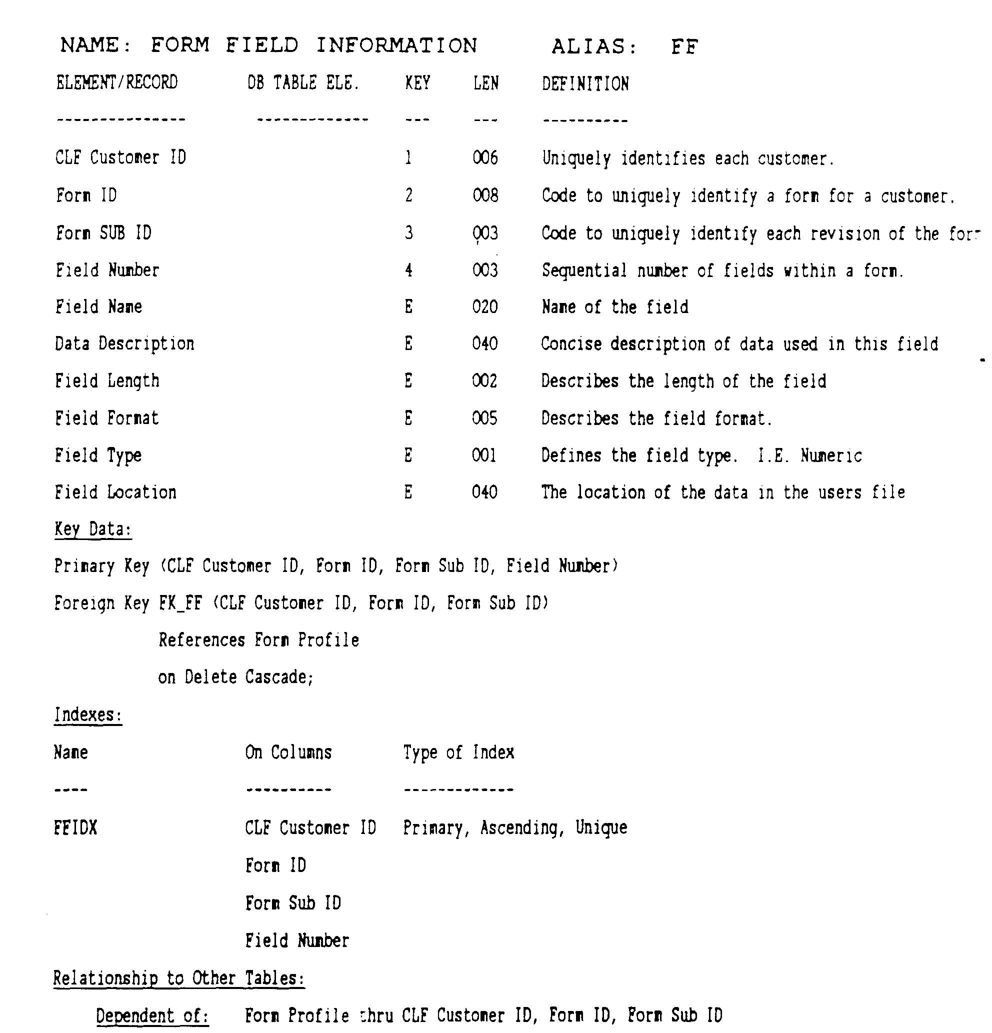

A typical configuration of the form output format file 166 provides how the form is to be printed -- the various print formats available. It is as follows (note that the output format of each form may be "source", "print ready" (and various versions), or "compiled"):

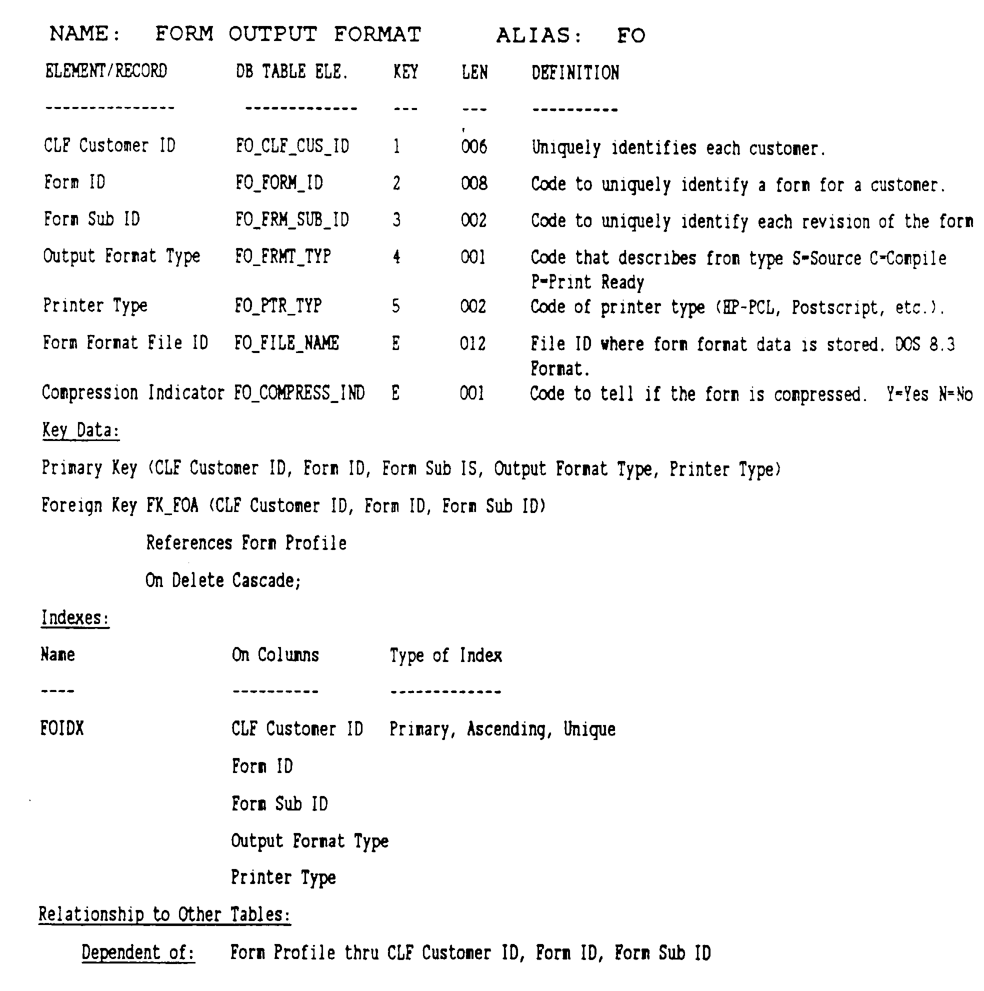

The security interface for all of the files is provided through menu file 167. A typical configuration of the file 167 is as follows:

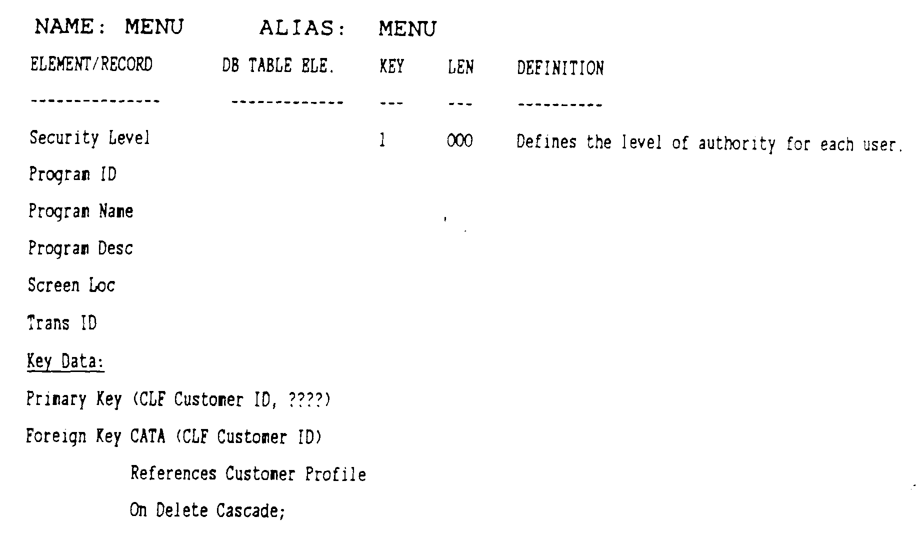

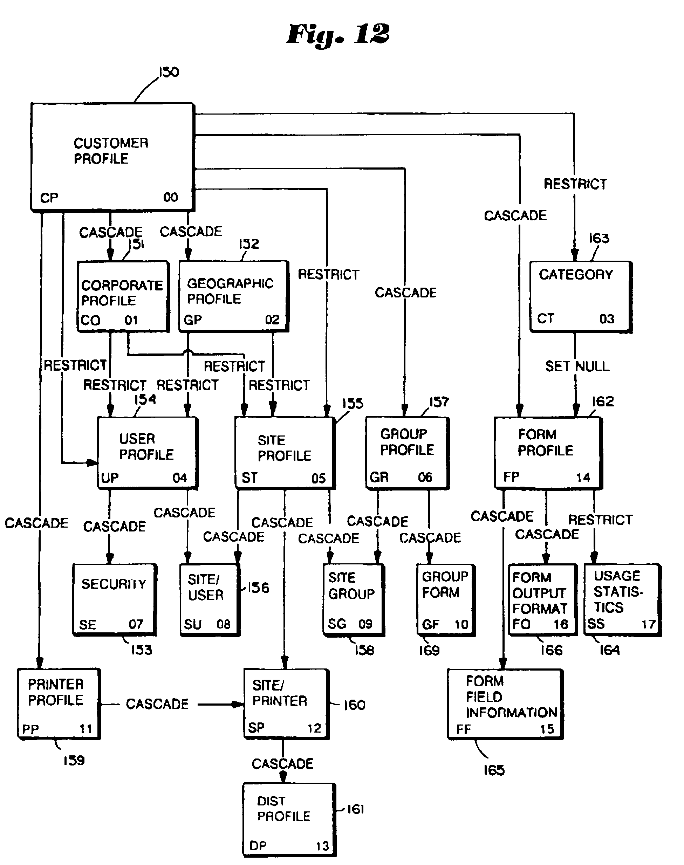

Where desired, as a dependent of the group profile file 157, a group/form file may be provided associates forms to a group. The group/form file is illustrated at 169 in FIGURE 12. A typical configuration of the group/form file, if utilized, is as follows:

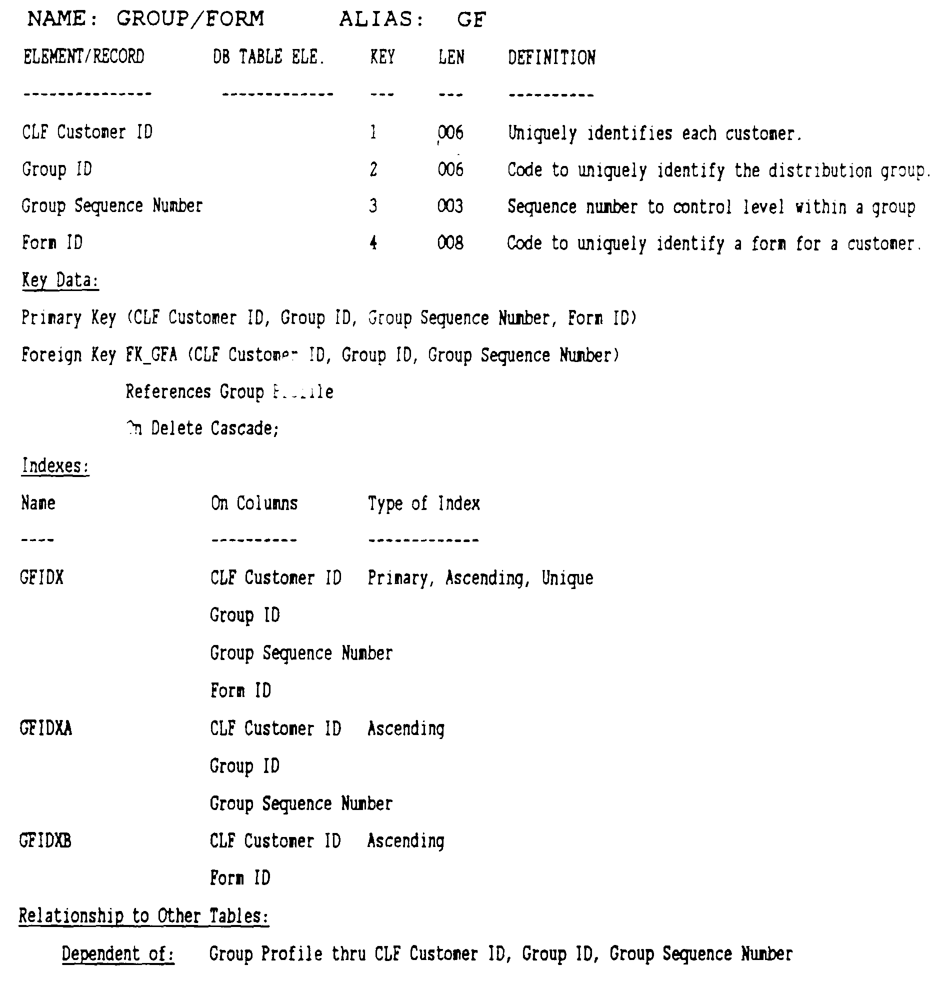

After selection of the appropriate form and other information, the form is printed and/or displayed, as indicated schematically at 168 in FIGURE 11.

FIGURE 12 contains the same basic information as FIGURE 11, but shows the data base relationships for referential integrity purposes, and is self-explanatory.

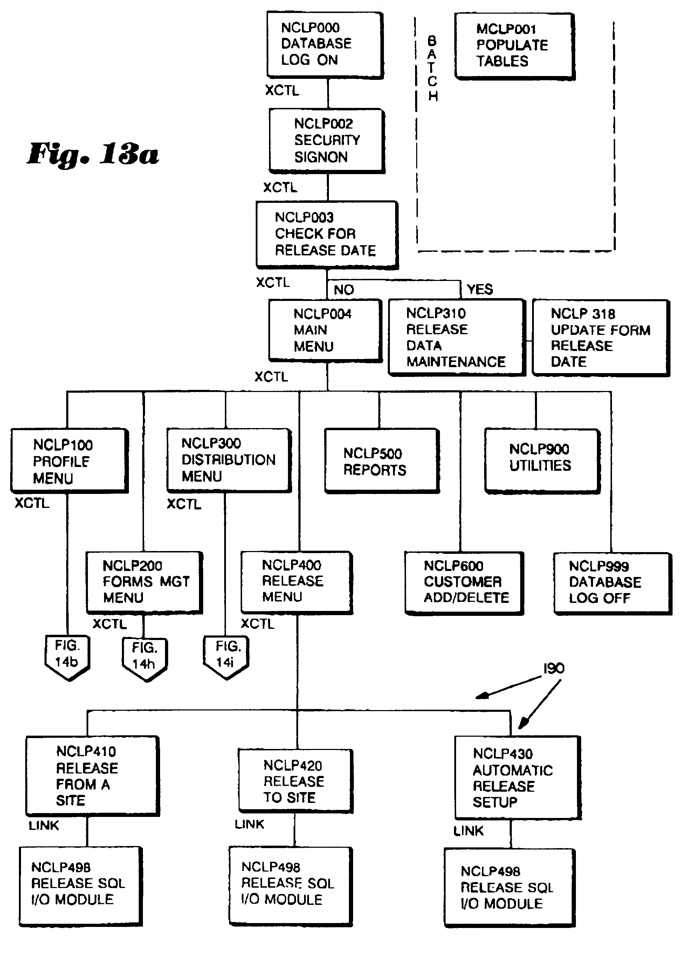

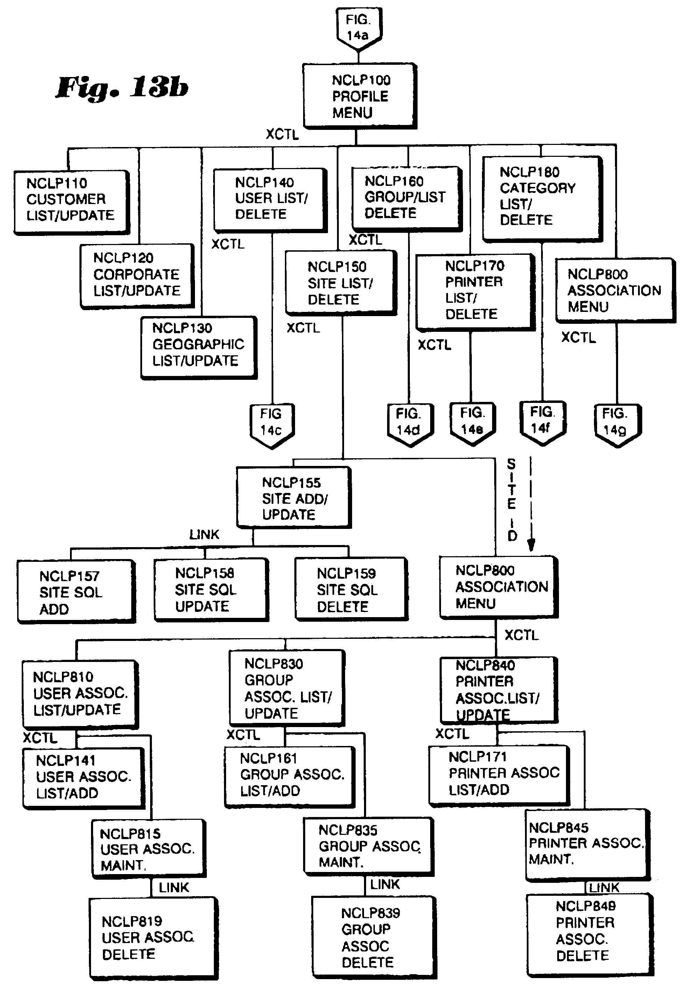

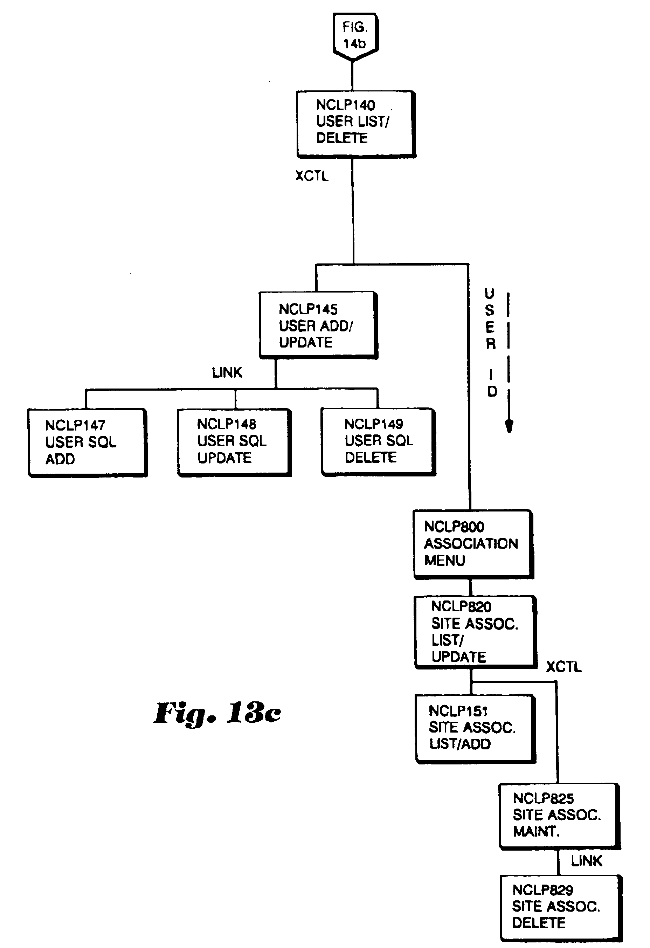

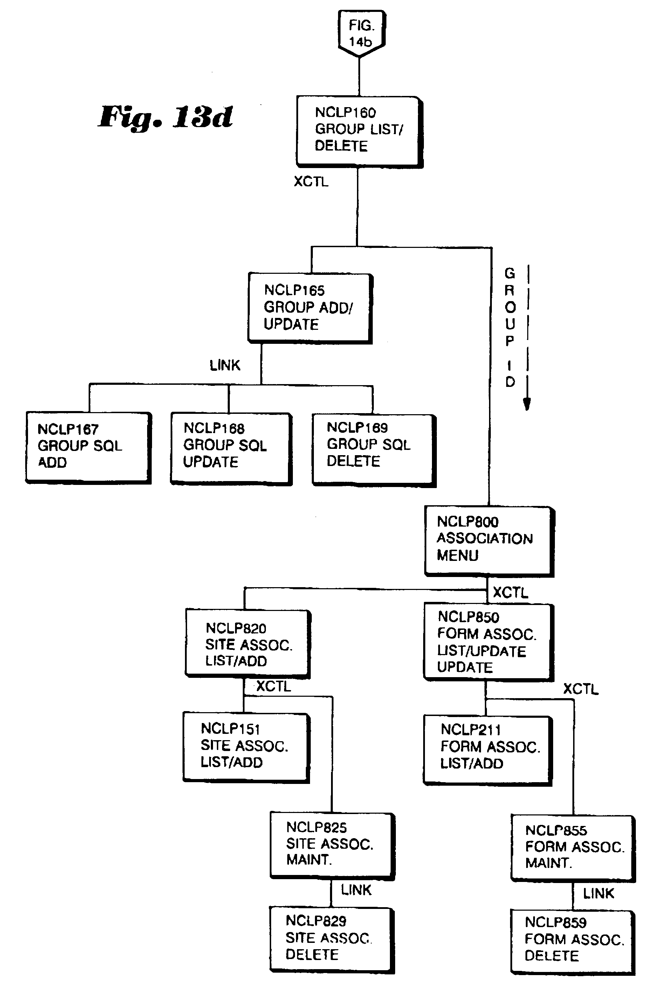

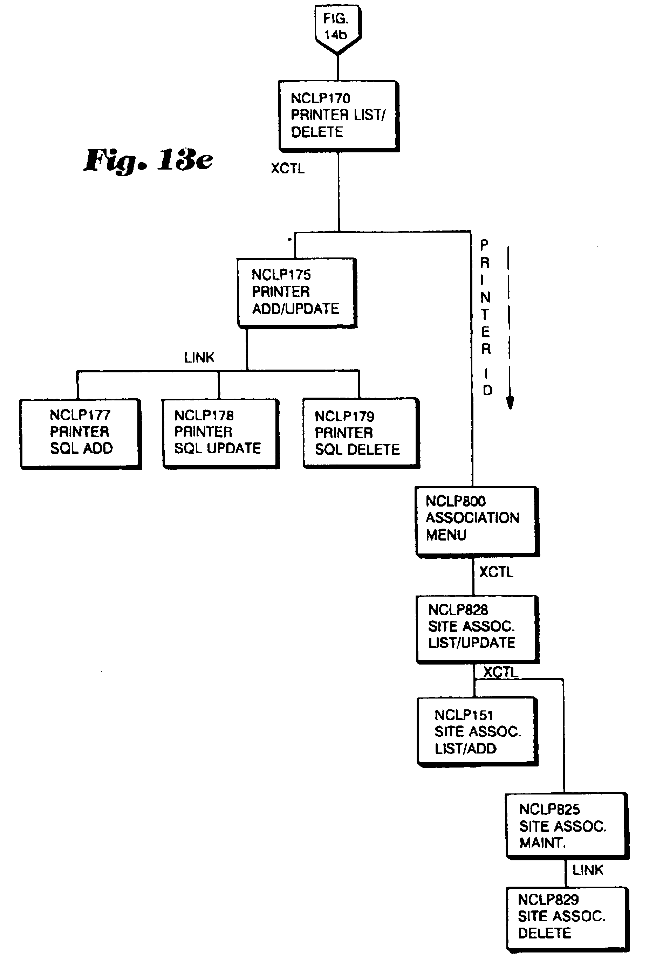

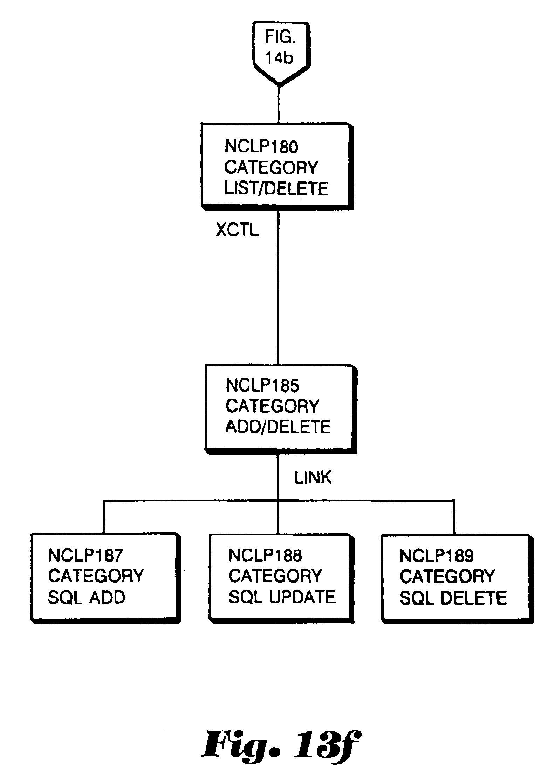

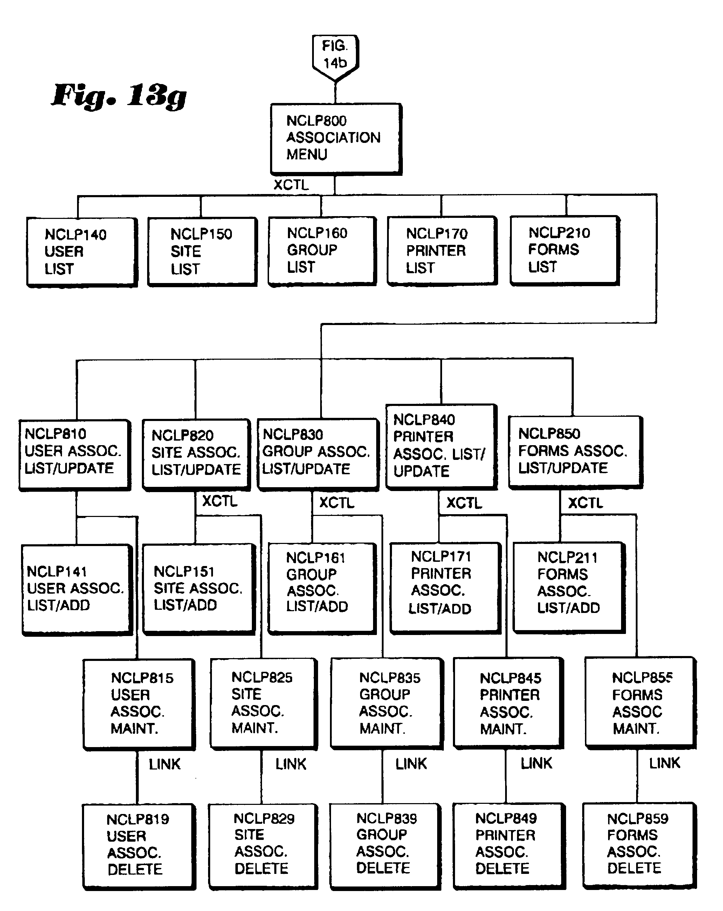

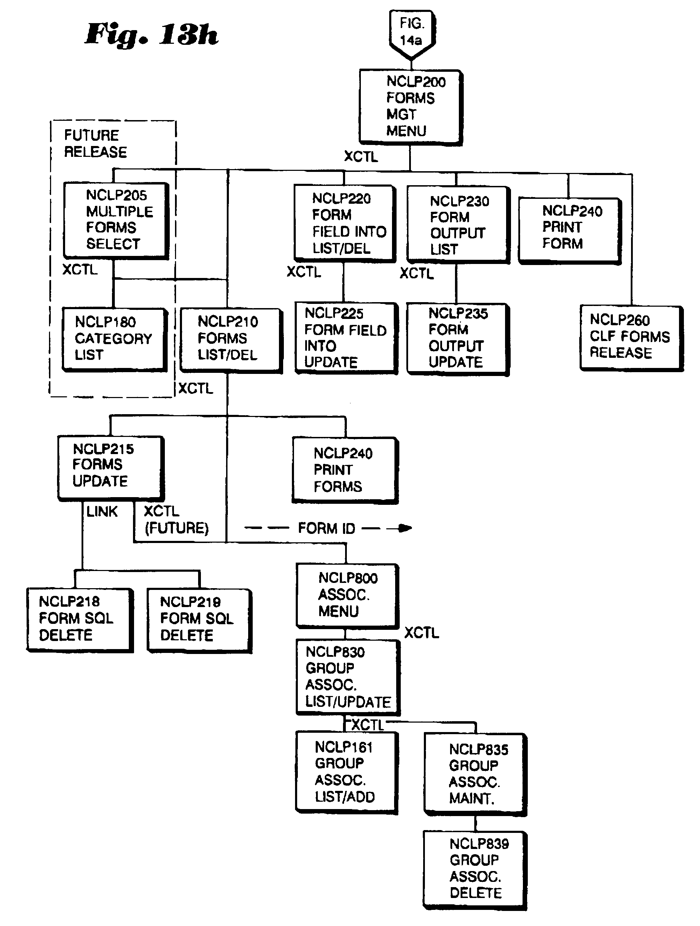

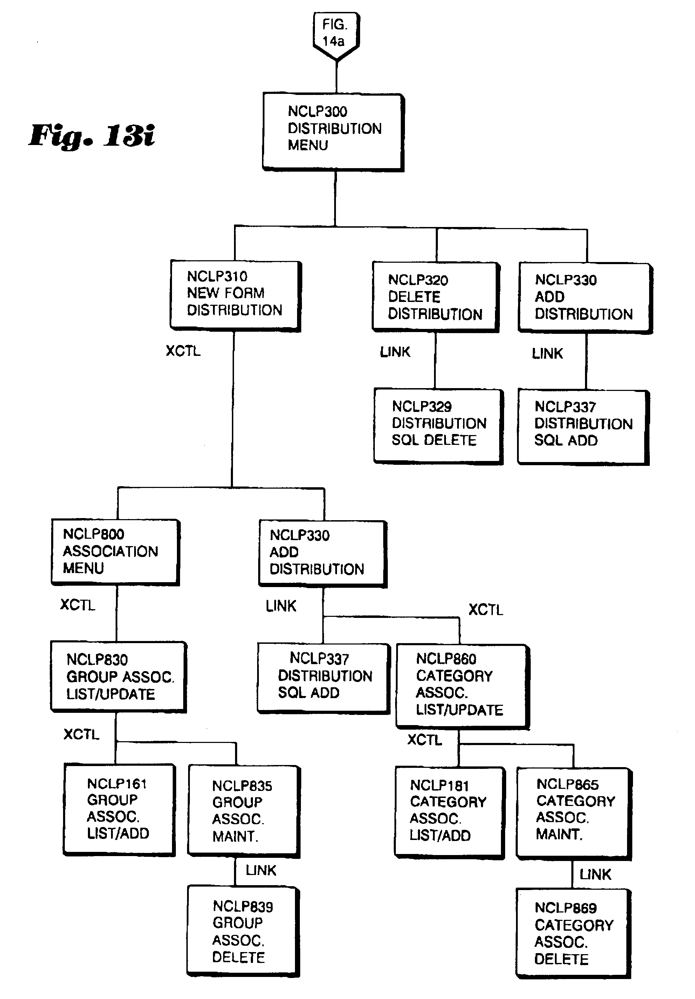

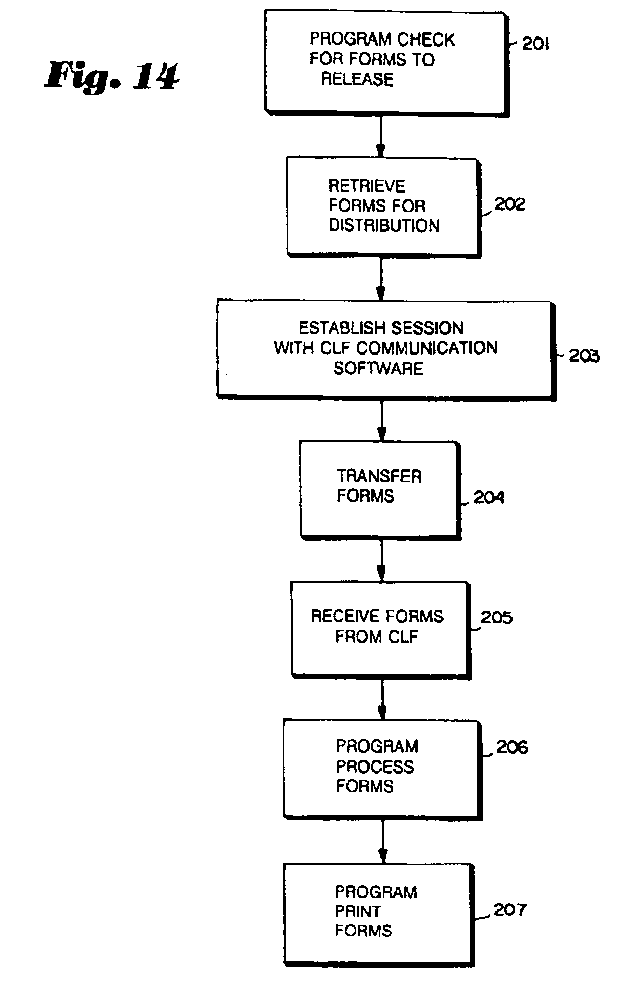

FIGURES 13a through 13i provide a detailed structure chart which shows the program-defined menu structure for the CLF 12. The interrelationship between the individual figures are specifically illustrated thereon, and the relationships between the various elements are self-explanatory from FIGURES 13a through 13i. Elements 190 are elaborated upon in FIGURE 14.

FIGURE 14 illustrates the general flow for the release of forms from the CLF 12 to the end user sites 15 (190 in FIGURE 13a). At 201, the CLF software periodically (e.g every weekday) polls the distribution profile for forms in the computer hosting the CLF to release electronic forms based upon release date (that is, if the release date has now been reached). At 202, the forms available for release are gathered. At 203, the communications software is alerted, and the forms are passed in as an input. At 204, the forms are transferred using the telecommunications infrastructure in place to the sites 15 (e.g. the PCs 154 thereat), as defined by the distribution profile. At 205, the receiving site communication software (e.g. OS/2, version 1.2) receives the forms. At 206, upon receipt of the forms, the applications software is alerted for processing of the transmission. The forms are preferably initially stored on disk. Ultimately, at 207, the applications software may direct the electronic forms to be printed at a printer (e.g. 16), to produce a paper form.

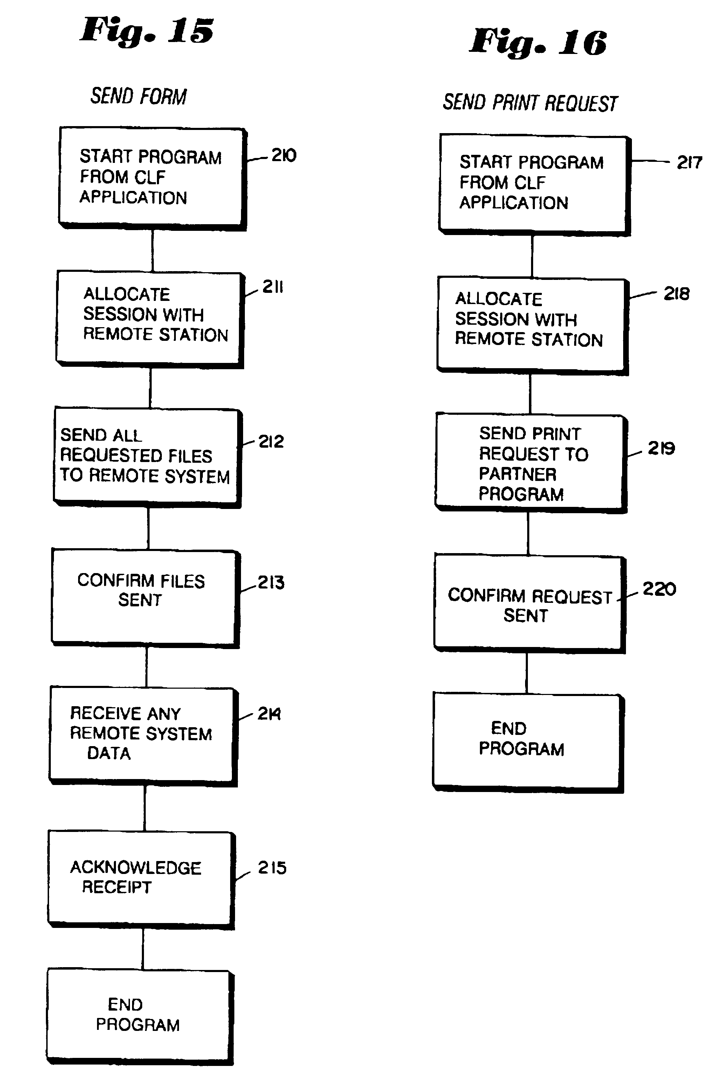

FIGURE 15 indicates the general flow for sending a form to one of the geographically remote user locations from the CLF 12. At 210 the program is initiated from the CLF 12 applications file 29. A session with the desired remote station or stations (locations) is allocated at 211, and all requested files are sent at 212. Confirmation that the files have been sent is provided at 213. Any data to be received from the remote location is received at 214, and receipt acknowledged at 215, before the program ends.

FIGURE 16 illustrates the general flow chart for sending a print request from CLF 12 to a remote user location having a printer, e.g. 16, for actually printing the form that was sent according to 210-213. The program is started from the CLF 12 applications software 29 at 217, a session is allocated with the remote location at 218, the print request is sent at 219 to the corresponding software at the remote location, and is confirmed at 220 before the program ends.

It will thus be seen that according to the present invention a system and method have been provided for eliminating or minimizing warehousing, inventory, and obsolescence costs that a customer typically incurs in association with preprinted paper forms. Forms distribution costs are minimized, and the number of preprinted forms can be greatly minimized (for example the number of forms can be dropped from 20,000 to 5,000 in conventional operations). Centralized control is provided for electronic forms design, and the co-existence of a form in electronic and paper media is provided. Labor savings are achieved by eliminating redundant entry and processing of information by providing a centralized system, and where a customer desires, off load processing may be provided from the customer's main frame computer 34 to the vendor's computer (e.g. location of the FAP 14). Based upon geographic location, volume requirements, form construction (e.g. number of parts, MCP, etc.), and equipment profiles, exactly how paper forms will be constructed and delivered to end user sites 15 will be determined.

The system as described above has numerous special applications, and it is impossible within the scope of a patent application to designate all possible uses of the system for particular functions and businesses. However a rough and general description of one particular implementation may serve to illustrate the versatility and functionality of the invention.

A FAP 14 is provided at the vendor's facility, and is used to design electronic and preprinted forms, to control variable data fields for the electronic forms, and to control and directly communicate with the CLF 12 located on the customer's premises. Upon release of new forms or update of existing forms, the CLF populates the forms library containing appropriate form images and updates the appropriate tables with and control information. This file is sent to a software distribution resource in a main frame computer at a centralized location, which is central to a number of geographically remote user locations which it will service. Preferably, a main frame computer utilizes the customer environment; although the forms could be stored in the customer's main frame, if desired. At the scheduled release dates, either automatically, or by operator control or verification at the centralized location, the CLF will effect distribution of the electronic forms to a file server residing in each of the geographically remote user locations.

The forms automation system 10 in this particular example is used to automate the ultimate customer interview process that occurs when new accounts are established at a banking institution, or changes are made to existing accounts. The exact detail of the processing performed during the customer (bank's) interview will determine the forms which are to be printed. For example opening of checking accounts, time deposit accounts, and savings accounts will generate different forms that are ultimately printed. In addition to printing the electronic forms, the forms automation system 10 according to the invention will produce a check list of all forms printed as a result of specific activity on an account, and all forms required to document an interview will be printed immediately at the completion of the interview process so that the bank's customer will have -- before he or she leaves the bank -- a paper form. Three to five bank customer interviews can take place concurrently and the common data for each will automatically be transferred from one electronic form to the other.

ARGO Bankpro software is downstream of the CLF 12, as an end user interface. The customer data is transferred to the main frame through platform automation support software (PASS), a commercially available system, and at the main frame the data is stored in a CIS software package, provided by Hogan.

The file server in each bank remote user site is networked to other devices in that location, for example by an IBM Lan 1.2. A laser printer will be located in each remote site, such as an HP LASERJET, to provide actual printing at the user location. Different printers can be provided at different locations since the forms creation software at the FAP 14 will format each individual electronic form in whatever formats are necessary to properly print with the various printers at the user locations at which the printers are located. JF MERGE software, from the same manufacturer as the JETFORM forms design package, will reside on the file server, and will be provided to produce the forms, which will be printed as soon as the transaction is completed.

During processing, the customer will store the variable data to be added to the form at a generic data base. At the completion of the transaction/end bank customer interview, the forms automation software will be invoked. Variable data will be extracted from the generic data base and an Ascii file created, which will be used to input to the form merge software (e.g. JF MERGE). The forms required to verify the transaction will be printed, and a check list form to make sure that all necessary steps have been completed will also be printed.

While the implementation described above is practiced with only a few (e.g. five) different forms, it may be expanded to encompass literally thousands of different forms.

It will be appreciated that the above-described embodiment has been set forth by way of example only, and that many variations can be made thereto without departing from the scope of the present invention.

## Claims

1. A method of handling business forms, comprising the steps of:
(a) creating a plurality of business forms in electronic format;
(b) maintaining the business forms created in step (a) in a display image format to which variables may be added for variable image data;
(c) electronically transmitting the display image formats to a remote site;
(d) merging the display image format with the variable image data and converting the display image formats to desired printer formats;
(e) simultaneously transmitting the printer formats to each of a plurality of compatible printers; and
(f) printing out forms on the compatible printers.

2. A method according to claim 1 of managing and distributing a plurality of different business forms for an entity having a plurality of geographically remote use locations with non-identical needs for different business forms, comprising carrying out steps (a) and (b) at a centralized location;
based on geographic location, volume requirements, form construction, and equipment profile, determining which of the geographically remote use location will be provided with business forms, and storing that additional information at the centralized location; through electronic scheduling or in response to commands input at the centralized location, automatically carrying out step (c) according to the determinations previously carried out.

3. A method according to claim 1 or claim 2 wherein the display image formats are stored on a computer geographically displaced from the remote site, which computer is periodically polled by a further computer at the remote site to locate data commands stored on the first said computer; and
in response to said data commands located, automatically distributing the business forms to the remote site.

4. A method according to claim 3 comprising, immediately after the polling step, manually verifying the distribution of the electronic business forms to those of the remote sites specified by the distribution demands and after manual verification, proceeding to automatically distribute the electronic business forms, the step of manual verification taking place at the remote site.

5. A method according to any preceding claim wherein at the centralised location is stored in association with the plurality of business forms in electronic format, data relating to identification code for the form, verbal description of the form, verbal description of the form, identification of the software package used on the form, data form creation and/or last revision, number of parts to the form, whether the form has landscape or portrait mode, length of the form and width of the form.

6. Apparatus for the production of business forms, comprising:
first computer means comprising a forms automation platform means, for establishing each of a plurality of business forms in electronic format, for determining print format information for said forms, and for converting said electronic format to appropriate print formats;
second computer means at each of a plurality of end user sites, including means for inputting variable information to be contained in the business forms to be produced;
third computer means comprising a central library means for processing requests for distribution to effect electronic distribution of forms and for providing information about print formats and distribution profiles to said second computer means which includes a display and an inputting means for inputting commands regarding the specific business form or forms requested, and communication means for providing communication between certain forms automation platform means and central library means, and between said central library means and said end user sites.

7. A system according to claim 6 comprising printing means controlled by one or more of said computer means for printing out paper business forms.

8. Apparatus according to claim 6 or 7 wherein the central library means includes a file comprising customer profile information including a customer identifying code and address information for the customer, a geographic profile including the customer identification and geographic location code, a printer profile file including customer identification and identification of types of printer associated with that customer for each geographic location of the customer, a distribution data file including the customer identification and codes to identify forms required by that customer and a form output file including customer identification and code to identify the format of each form for that customer.

9. Apparatus according to any one of claims 6 to 8 wherein the forms automation platform means includes a customer profile file identifying a customer and the location thereof, a form profile file including customer identifiers, form identifiers for that customer, and physical information regarding the form, a form file name file including the customer identifier, form identifier, and type of printer for which the form has been designed, a distribution information file including customer identifier, and an indicator of whether or not a form has been selected for distribution to the central library means for onward transmission to that customer together with (if appropriate) an identifier of the form selected and the date of distribution thereof.

## Patentansprüche

1. Verfahren zum Bearbeiten von Geschäftsformularen, mit folgenden Schritten:
(a) Erzeugen mehrerer Geschäftsformulare in elektronischer Form;
(b) Aufbewahren der in Schritt (a) erzeugten Geschäftsformulare in einem Schirmbildformat, dem für variable Bilddaten Variablen hinzugefügt werden können;
(c) elektronisches Übertragen der Schirmbildformate zu einer abgesetzten Stelle;
(d) Mischen des Schirmbildformats mit den variablen Bilddaten und Umwandeln der Schirmbildformate in gewünschte Druckerformate;
(e) gleichzeitiges Übertragen der Druckerformate zu jedem von mehreren kompatiblen Druckern; und
(f) Ausdrucken von Formularen auf den kompatiblen Druckern.

2. Verfahren nach Anspruch 1 zum Verwalten und Verteilen mehrerer unterschiedlicher Geschäftsformulare für eine Einheit mit mehreren geographisch abgesetzten Verwendungsorten mit nicht übereinstimmenden Erfordernissen für unterschiedliche Geschäftsformulare, mit Ausführen der Schritte (a) und (b) an einem zentralen Ort;
Bestimmen, auf der Grundlage des geographischen Ortes, der Auflagenerfordernisse, des Formularaufbaus und des Ausrüstungsprofils, welche der geographisch abgesetzten Verwendungsorte mit Geschäftsformularen beliefert werden, und Speichern dieser zusätzlichen Informationen an dem zentralen Ort;
automatischer Ausführung von Schritt (c) gemäß den zuvor ausgeführten Bestimmungen durch elektronisches Einplanen oder als Reaktion auf an dem zentralen Ort eingegebene Befehle.

3. Verfahren nach Anspruch 1 oder Anspruch 2, bei dem die Schirmbildformate auf einem geographisch von der abgesetzten Stelle entfernten Rechner gespeichert werden, wobei dieser Rechner periodisch von einem weiteren Rechner an der abgesetzten Stelle abgefragt wird, um auf dem ersten Rechner gespeicherte Datenbefehle zu lokalisieren; und
automatisches Verteilen der Geschäftsformulare an die abgesetzte Stelle als Reaktion auf die lokalisierten Datenbefehle.

4. Verfahren nach Anspruch 3, mit: unmittelbar nach dem Abfrageschritt, manuellen Überprüfen der Verteilung der elektronischen Geschäftsformulare an die durch die Verteilungsanforderungen spezifizierten abgesetzten Stellen und nach der manuellem Überprüfung Weitergehen zum automatischen Verteilen der elektronischen Geschäftsformulare, wobei der Schritt des manuellen Überprüfens an der abgesetzten Stelle stattfindet.

5. Verfahren nach einem der vorhergehenden Ansprüche, bei dem an dem zentralen Ort den mehreren Geschäftsformularen in elektronischer Form zugeordnet Daten über den Identifikationscode für das Formular, eine verbale Beschreibung des Formulars, eine Identifizierung des Softwarepakets, mit dem das Formular erstellt wurde, die Datenformerzeugung und/oder die letzte Revision, die Anzahl der Teile des Formulars, darüber, ob das Formular im Quer- oder Hochformat vorliegt, und über die Länge des Formulars und die Breite des Formulars gespeichert sind.

6. Vorrichtung für die Herstellung von Geschäftsformularen, mit:
einem ersten Rechnermittel mit einem Formularautomatisierungsplattformmittel, zum Einrichten jedes von mehreren Geschäftsformularen in elektronischer Form, zum Festlegen von Druckformatinformationen für die Formulare und zum Umwandeln der elektronischen Form in entsprechende Druckformate;
einem zweiten Rechnermittel an jeder von mehreren Endbenutzerstellen, mit einem Mittel zum Eingeben von variablen Informationen, die in den herzustellenden Geschäftsformularen enthalten sein sollen;
einem dritten Rechnermittel mit einem Zentralbibliotheksmittel zum Verarbeiten von Anforderungen zur Verteilung, um die elektronische Verteilung von Formularen zu bewirken und um Informationen über Druckformate und Verteilungsprofile zu dem zweiten Rechnermittel zu liefern, wobei das dritte Rechnermittel ein Anzeige- und ein Eingabemittel zum Eingeben von Befehlen hinsichtlich des angeforderten speziellen Geschäftsformulars beziehungsweise der angeforderten speziellen Geschäftsformulare und Kommunikationsmittel zum Bereitstellen von Kommunikation zwischen bestimmten Formularautomatisierungsplattformmitteln und dem Zentralbibliotheksmittel und zwischen dem Zentralbibliotheksmittel und den Endbenutzerstellen beinhaltet.

7. System nach Anspruch 6 mit einem von einem oder mehreren der Rechnermittel gesteuerten Druckmittel zum Ausdrucken von Geschäftsformularen auf Papier.

8. Vorrichtung nach Anspruch 6 oder 7, bei der das Zentralbibliotheksmittel eine Datei mit Kundenprofilinformationen mit einem Kundenidentifizierungscode und Adreßinformationen den Kunden, ein für geographischeem Profil mit der Kundenidentifikation und einem Code über den geographischen Ort, eine Druckerprofildatei mit Kundenidentifikation und Identifikation der diesem Kunden für jeden geographischen Ort des Kunden zugeordneten Druckerarten, eine Verteilungsdatendatei mit der Kundenidentifikation und Codes zur Identifizierung von von diesem Kunden benötigten Formularen und eine Formularausgabedatei mit der Kundenidentifikation und einem Code zur Identifizierung des Formats jedes Formulars für diesen Kunden enthält.

9. Vorrichtung nach einem der Ansprüche 6 bis 8, wobei das Formularautomatisierungsplattformmittel eine Kundenprofildatei, die einen Kunden und seinen Ort identifiziert, eine Formularprofildatei mit Kundenbezeichnern, Formularbezeichnern für diesen Kunden und physischen Informationen hinsichtlich des Formulars, eine Formulardateinamensdatei mit dem Kundenbezeichner, dem Formularbezeichner und der Druckerart, für die das Formular entworfen worden ist, eine Verteilungsinformationsdatei mit dem Kundenbezeichner und einen Indikator, ob ein Formular zur Verteilung zu dem Zentralbibliotheksmittel zur weiteren Übertragung zu diesem Kunden, gegebenenfalls mit einem Bezeichner des ausgewählten Formulars und des Datums seiner Verteilung, ausgewählt wurde oder nicht, enthält.

## Revendications

1. Méthode de manipulation de formulaires commerciaux, comprenant les étapes consistant a:
(a) créer une pluralité de formulaires commerciaux dans un format électronique;
(b) maintenir les formulaires commerciaux créés dans l'étape (a) dans un format graphique d'image auquel des variables peuvent être ajoutées pour des données d'image variables;
(c) transmettre électroniquement les formats graphiques d'image vers un site éloigné;
(d) fusionner le format graphique d'image avec les données d'image variables et convertir les formats graphiques d'image en formats d'imprimante souhaités;
(e) transmettre simultanément les formats d'imprimante à chacune d'une pluralité d'imprimantes compatibles; et
(f) imprimer des formulaires sur les imprimantes compatibles.

2. Méthode selon la revendication 1 de gestion et de distribution d'une pluralité de formulaires commerciaux différents pour une entité ayant une pluralité d'implantations opérationnelles éloignées géographiquement, avec des besoins non identiques en formulaires commerciaux différents, comprenant l'exécution des étapes (a) et (b) à une implantation centralisée;
sur la base de l'implantation géographique, des volumes nécessaires, de la construction des formulaires et du profil d'équipement, déterminer à laquelle des implantations opérationnelles éloignées géographiquement on fournira des formulaires commerciaux, et stocker cette information supplémentaire à l'implantation centralisée; par l'intermédiaire d'une planification électronique ou en réponse à une entrée de commandes à l'implantation centralisée, exécuter automatiquement l'étape (c) selon les déterminations exécutées précédemment.

3. Méthode selon la revendication 1 ou la revendication 2, dans laquelle les formats graphiques d'image sont stockés sur un ordinateur déplacé géographiquement du site éloigné, lequel ordinateur est périodiquement interrogé par un ordinateur supplémentaire sur le site éloigné pour localiser les commandes de données stockées sur le premier dit oridinateur; et en réponse auxdites commandes de données localisées, distribuer automatiquement les formulaires commerciaux au site éloigné.

4. Méthode selon la revendication 3, comprenant, immédiatement après l'étape d'interrogation, la vérification manuelle de la distribution des formulaires commerciaux électroniques à ceux des sites éloignés spécifiés par les demandes de distribution et, après la vérification manuelle, la mise en oeuvre de la distribution automatique des formulaires commerciaux électroniques, l'étape de vérification manuelle ayant lieu sur le site éloigné.

5. Méthode selon l'une quelconque des revendications précédentes, dans laquelle, à l'implantation centralisée, en association avec la pluralité de formulaires commerciaux à format électronique, sont stockées des données relatives à un code d'identification pour le formulaire, à la description verbale du formulaire, à l'identification du progiciel utilisé sur le formulaire, à la création et/ou à la dernière révision des formulaires de données, au nombre de parties du formulaire, au fait que le formulaire est en mode paysage ou portrait, à la longueur du formulaire et à la largeur du formulaire.

6. Appareil pour la production de formulaires commerciaux, comprenant:
un premier moyen informatique comprenant un moyen de plate-forme d'automatisation de formulaires, pour établir chacun d'une pluralité de formulaires commerciaux dans un format électronique, pour déterminer les informations de format d'impression pour lesdits formulaires, et pour convertir ledit format électronique en formats d'impression appropriés;
un deuxième moyen informatique sur chacun d'une pluralité de sites d'utilisateurs finaux, comportant un moyen pour entrer des informations variables devant être contenues dans les formulaires commerciaux à produire;
un troisième moyen informatique comprenant un moyen de bibliothèque centrale pour traiter les requêtes de distribution pour effectuer la distribution électronique de formulaires et pour fournir des informations sur les formats d'impression et les profils de distribution audit deuxième moyen informatique, qui comporte un moyen d'affichage et d'entrée pour entrer des commandes concernant le ou les formulaire(s) commercial (commerciaux) spécifique(s) requis, et un moyen de communication pour fournir une communication entre un certain moyen de plate-forme d'automatisation et un certain moyen de bibliothèque centrale, et entre ledit moyen de bibliothèque centrale et lesdits sites d'utilisateurs finaux.

7. Système selon la revendication 6, comprenant des moyens d'impression commandés par un ou plusieurs desdits moyens informatiques pour imprimer des formulaires commerciaux en papier.

8. Appareil selon la revendication 6 ou 7, dans lequel le moyen de bibliothèque centrale comporte un fichier comprenant les informations de profil du client comportant un code d'identification du client et des informations d'adresse pour le client, un profil géographique comportant l'identification du client et le code d'implantation géographique, un fichier de profil d'imprimante comportant l'identification du client et l'identification de types d'imprimante associés à ce client pour chaque implantation géographique du client, un fichier de données de distribution comportant l'indentification du client et des codes pour identifier les formulaires requis par ce client et un fichier de sortie de formulaire comportant l'identification du client et un code pour identifier le format de chaque formulaire pour ce client.

9. Appareil selon l'une quelconque des revendications 6 à 8, dans lequel le moyen de plate-forme d'automatisation de formulaires comporte un fichier de profil du client identifiant un client et son implantation, un fichier de profil de formulaire comportant des identificateurs du client, des identificateurs du formulaire pour ce client, et des informations physiques concernant le formulaire, un fichier de nom du fichier du formulaire comportant l'identificateur du client, l'identificateur du formulaire, et le type d'imprimante pour lequel le formulaire a été conçu, un fichier d'information de distribution comportant l'identificateur du client, et un indicateur du fait qu'un formulaire a été ou non sélectionné pour une distribution au moyen de bibliothèque centrale en vue d'une transmission ultérieure à ce client, ainsi que (le cas échéant) un identificateur du formulaire sélectionné et de sa date de distribution.
